# EUROPEAN PATENT SPECIFICATION

(11) **EP 3 701 807 B1**
(45) Date of publication and mention of the grant of the patent: **16.04.2025**
(21) Application number: 18869834.4
(22) Date of filing: 26.10.2018
(51) Int. Cl.: A23L 27/50, A23L 27/00

(54) **LIQUID AND METHOD FOR MANUFACTURING SEASONING, AND SEASONING**
FLÜSSIGES MITTEL UND VERFAHREN ZUR HERSTELLUNG VON WÜRZMITTELN, UND WÜRZMITTEL
LIQUIDE ET PROCÉDÉ POUR LA FABRICATION D'ASSAISONNEMENT, ET ASSAISONNEMENT

(30) Priority: 27.10.2017 JP 2017208410; 27.10.2017 JP 2017208411; 27.10.2017 JP 2017208412; 27.10.2017 JP 2017208413; 12.06.2018 JP 2018112279
(43) Date of publication of application: 02.09.2020
(73) Proprietor: Kikkoman Corporation, Noda-shi, Chiba 278-8601 (JP)
(72) Inventor: KATAYAMA, Hiroshi, Noda-shi Chiba 278-8601 (JP); KUNITAKE, Yuri, Noda-shi Chiba 278-8601 (JP); HANADA, Yoichi, Noda-shi Chiba 278-8601 (JP); FUJIMORI, Ryo, Noda-shi Chiba 278-8601 (JP); OOKUBO, Kazuma, Noda-shi Chiba 278-8601 (JP); MOTOJIMA, Yoshihiro, Noda-shi Chiba 278-8601 (JP)
(74) Representative: Schulz Junghans Patentanwälte PartGmbB
(86) International application number: PCT/JP2018/039991
(87) International publication number: WO 2019/083041

(56) References cited:
- JP-A- 2001 120 293
- JP-A- 2016 059 382
- JP-A- 2016 059 382
- JP-A- 2016 086 700
- JP-A- 2017 019 177
- JP-A- H03 292 872
- JP-A- S 642 550
- JP-B1- 6 343 710
- US-A- 5 888 561
- US-A1- 2014 004 225
- KOBAYASHI ET AL: "Flavor Components of Shoyu and Miso Japanese Fermented Soybean Seasonings", FLAVOR CHEMISTRY OF ETHNIC FOODS : [PROCEEDINGS OF A MEETING HELD DURING THE FIFTH CHEMICAL CONGRESS OF NORTH AMERICA, HELD NOVEMBER 11 - 15, 1997, IN CANCUN, MEXICO], KLUWER ACADEMIC/PLENUM PUBLISHERS, 30 November 1998 (1998-11-30), pages 5 - 14, XP009520385, ISBN: 978-0-306-46124-8, DOI: 10.1007/978-1-4615-4783-9_2
- SUN, S. Y. ET AL.: "Profile of Volatile Compounds in 12 Chinese Soy Sauces Produced by a High-Salt- Diluted State Fermentation", JOURNAL OF THE INSTITUTE OF BREWING, vol. 116, no. 3, 2010, pages 316 - 328, XP055339118, DOI: 10.1002/j.2050-0416.2010.tb00437.x
- NAGASE, ICHIRO: "A study on aromatic component of soy sauce", JOURNAL OF THE SOCIETY OF BREWING, JAPAN, vol. 73, no. 9, 1978, pages 697 - 700, XP055694578, ISSN: 0369-416X, DOI: 10.6013/jbrewsocjapan1915.73.697
- KOBAYASHI, A. ET AL.: "FLAVOR COMPONENTS OF SHOYUAND MISO JAPANESE FERMENTED SOYBEAN SEASONINGS", FLAVOR CHEMISTRY OF ETHNIC FOODS : [PROCEEDINGS OF A MEETING HELD DURING THE FIFTH CHEMICAL CONGRESS OF NORTH AMERICA, HELD NOVEMBER 11 - 15, 1997, IN CANCUN, MEXICO], 1999, pages 5 - 14, XP009520385, ISBN: 0-306-46124-2
- SUN, S. Y. ET AL.: "Profile of Volatile Compounds in 12 Chinese Soy Sauces Produced by a High-Salt- Diluted State Fermentation", JOURNAL OF THE INSTITUTE OF BREWING, vol. 116, no. 3, 2010, pages 316 - 328, XP055339118, DOI: 10.1002/j.2050-0416.2010.tb00437.x

## Description

### TECHNICAL FIELD

The present invention relates to a raw liquid for a seasoning useful as a raw liquid for a seasoning such as a soy sauce or a soy sauce-like seasoning. The present invention relates to a seasoning having an excellent aroma. The present invention relates to a rich seasoning having *umami* and an excellent aroma.

### BACKGROUND ART

A soy sauce is manufactured by obtaining a soy sauce *koji* by inoculating a seed *koji* starter including a *koji* mold into a mixture of a protein raw material such as soybeans denatured by heating and a starch raw material such as wheat pregelatinized by heating, followed by culturing to make a *koji,* and subsequently obtaining a soy sauce *moromi* by putting the obtained soy sauce *koji* into a saline solution, followed by lactic acid fermentation and aging, and subsequently obtaining an aged *moromi* by subjecting the obtained soy sauce *moromi* to yeast fermentation and aging, and subsequently obtaining an unheated soy sauce by subjecting the obtained aged *moromi* to a pressing treatment or a filtration treatment, and subsequently heating the obtained unheated soy sauce, etc. in the case of a brewing process.

In the above-mentioned conventional method for manufacturing a soy sauce, the process from obtaining a soy sauce *koji* to obtaining an aged *moromi* is performed continuously. That is, yeast fermentation or the like is performed by adding a yeast to a soy sauce *moromi* obtained by lactic acid fermentation or the like from a soy sauce *koji,* and so on.

When an unheated soy sauce is obtained from an aged *moromi,* it is general to simultaneously perform pressing and filtration using a press machine employing a filter cloth, or the like. For example, it is known that a seasoning liquid with an enhanced aroma obtained by treating an aged *moromi* soup (unheated soy sauce) obtained by filtering an aged *moromi* through a nylon filter cloth with an ultrafiltration membrane with a molecular weight cut-off of 100,000 or less, and adding a flavoring substance to the obtained permeated liquid has been known (see Patent Literature 1).

Further, in the above-mentioned conventional method for manufacturing a soy sauce, yeast fermentation is incorporated as a part of the step. The yeast fermentation is performed by adding a yeast to a fermentation raw liquid, and leaving the resultant as it is for about several weeks to several months.

Here, if the period of the yeast fermentation is short and the yeast fermentation is not sufficiently performed, production of an alcohol is not sufficiently performed, and there is a problem that a yeast fermented product with a rich aroma cannot be obtained. On the other hand, if the period of the yeast fermentation becomes too long, a problem that an alcohol content becomes high, an aroma becomes too strong, or the like occurs. Therefore, in order to obtain a yeast fermented product with high palatability, an appropriate fermentation control is required.

The conventional fermentation control has mainly been performed through an analysis of various components in a fermented product. Therefore, in order to analyze the components in the fermented product, a facility for the analysis and a technical skill of an analyst are required.

On the other hand, in the fermentation control in Japanese sake brewing, fermentation control by measuring a Baume degree using a Baume hydrometer whose structure and usage are simple has been adopted (see, for example, Patent Literature 2).

In recent years, foods and drinks with a gorgeous aroma such as a fruity aroma are preferred. By containing 4-hydroxy-2 (or 5)-ethyl-5 (or 2)-methyl-3(2H)-furanone (homofuraneol; HEMF), or the like, a soy sauce has a soy sauce-like flavor, but lacks a gorgeous aroma.

On the other hand, a soy sauce that is expressly stated to have a fruity aroma has already been manufactured and sold. However, such a soy sauce is manufactured by mixing a fruit, a wine, or the like, and its flavor is completely different from that of a soy sauce. For example, Patent Literature 3 describes that by externally adding a methyl fatty acid ethyl ester such as ethyl-2-methylbutanoate to a soy sauce, a soy sauce-like seasoning having a fruity aroma is obtained.

On the other hand, amino acids in a soy sauce include glutamic acid, glycine, lysine, alanine, aspartic acid, and the like, among which glutamic acid is contained in a large amount. Amino acids such as glutamic acid are nitrogen compounds that bring *umami* to a soy sauce. Therefore, the content of nitrogen compounds, that is, a total nitrogen content is used as an index of the *umami* of a soy sauce.

Most amino acids in a soy sauce are produced when proteins contained in soybeans or wheat serving as a raw material receive actions of a group of enzymes (proteases, peptidases, glutaminases, etc.) of a *koji* mold.

There is a rebrewed soy sauce as a soy sauce with an increased total nitrogen content therein. The rebrewed soy sauce is manufactured by performing a *koji* making step by putting a soy sauce *koji* into an unheated soy sauce using the unheated soy sauce as brewing water, and thereafter performing fermentation and aging with a yeast. The rebrewed soy sauce has a relatively high total nitrogen content.

However, in the manufacturing of a rebrewed soy sauce, an unheated soy sauce is used in place of a saline solution in the *koji* making step, and therefore, the growth of the yeast in the soy sauce *moromi* is poor, and alcohol fermentation of the soy sauce *moromi* becomes slow, and thus, the obtained rebrewed soy sauce has a different flavor from a regular soy sauce such as a *koikuchi* (dark-colored) soy sauce, and affects the consumer's palatability.

In order to solve the problem of such a rebrewed soy sauce, various studies have been made on a method for manufacturing a rich soy sauce having a flavor equivalent to that of a regular soy sauce while being rich in total nitrogen content.

For example, Patent Literature 4 describes a method for manufacturing a rich soy sauce characterized by putting a soy sauce *koji* together with a saline solution, and adding a soy sauce and a soy sauce *koji* during the process of fermentation and aging and after completion of lactic acid fermentation, followed by further aging.

In addition, Patent Literature 5 describes a method in which a soup obtained by pressing a soy sauce *moromi* in an initial stage of brewing is used as brewing water, and a soy sauce *koji* is added and mixed therewith, and thereafter, the resultant is subjected to fermentation and aging by an ordinary method.

The manufacturing of soy sauce by addition of salt solution and carbohydrate to a moromi and yeast fermentation is disclosed in US 2014004225 A1, for example.

The aroma composition of soy sauces is disclosed in Kobayashi et al, Flavor Chemistry of Ethnic Foods, 1998; 30: 5-14 (XP009520385) and Sun et al, Journal of the Institute of Brewing, 2010; 116 (3): 316-328 (XP055339118), for example.

### CITATION LIST

### PATENT LITERATURE

Patent Literature 1: JP-A-H2-39868
Patent Literature 2: JP-A-2002-191348
Patent Literature 3: JP-A-2016-140321
Patent Literature 4: Japanese Patent No. 4222487
Patent Literature 5: JP-B-H1-20

### SUMMARY OF INVENTION

### TECHNICAL PROBLEM

As described above, it is difficult to enjoy soy sauce brewing at home because in the conventional soy sauce brewing, the manufacturing process involves many stages, and there are many necessary equipment, raw materials, and microorganisms. Although some soy sauce brewing kits are known as those capable of enjoying soy sauce brewing easily even at home, all are kits including a soy sauce *koji.* It is still difficult to obtain a soy sauce with high palatability at home using such a soy sauce brewing kit, and there is a problem that waste such as a residue of a soy sauce *moromi* is generated, and soy sauce brewing at home has not yet popularized.

In addition, the lactic acid fermented product obtained by subjecting a soy sauce *koji* to lactic acid fermentation or the like contains a fermented component of *"moromi"* defined in the "Quality Labeling Standards for Soy Sauce" according to Ministry of Agriculture, Forestry and Fisheries Notification, and therefore can be utilized as a seasoning. However, there is a problem that it is difficult to use the lactic acid fermented product itself as a seasoning due to an insoluble solid content or the like.

With respect to yeast fermentation, in the brewing of a Japanese sake having a high alcohol content, a Baume degree greatly changes before and after yeast fermentation, and therefore, the fermentation can be appropriately controlled using the Baume degree as an index. However, in the brewing of a soy sauce with a low alcohol content, the change in the Baume degree before and after yeast fermentation is small, and therefore, it is difficult to perform fermentation control using the Baume degree as an index.

Further, in soy sauce brewing, a simple fermentation control method such as fermentation control using a Baume degree has not been known so far. In particular, when a seasoning is obtained as a yeast fermented product by subjecting a raw liquid for a seasoning to yeast fermentation at home, a material that can be used as an index of fermentation control for obtaining a seasoning with a stable flavor has not been known so far.

Therefore, the present invention has a first object to be achieved by the present invention to provide a raw liquid for a seasoning which can be utilized for obtaining a seasoning with a mellow aroma and high palatability by simply performing yeast fermentation so as to enable the yeast fermentation even at home, an index of fermentation control, a set of members including the raw liquid and the index, and a method for manufacturing a seasoning.

On the other hand, by a masking component such as 2-ethyl-6-methylpyrazine in a soy sauce, a fruity aroma due to a methyl fatty acid ethyl ester in a soy sauce-like seasoning described in Patent Literature 3 is reduced, and there is a problem that it is difficult to obtain a soy sauce stably having a fruity aroma.

Therefore, the present invention has a second object to be achieved by the present invention to provide a seasoning that has a fruity aroma hardly noticeable in a conventional soy sauce while having a flavor inherent in a soy sauce.

Further, the method described in Patent Literature 4 is a method in which a soy sauce *koji* and a soy sauce are added during fermentation or aging with a yeast in a method for manufacturing a regular soy sauce, and further aging with a yeast is performed. According to the method described in Patent Literature 4, a rich soy sauce having a total nitrogen content of 2 wt% or more is obtained.

However, the method described in Patent Literature 4 is a method using a large amount of a soy sauce manufactured by a method for manufacturing a regular soy sauce, and therefore is very uneconomical. Further, according to Example described in Patent Literature 4, the aroma of the inventive product is not much improved as compared with a rebrewed soy sauce used as a control product. Therefore, the rich soy sauce obtained by the method described in Patent Literature 4 is likely to have a poor flavor inherent in a soy sauce.

With respect to the method described in Patent Literature 5, according to the examination made by the present inventors, when rebrewing is performed using a soup obtained by pressing a soy sauce *moromi* as brewing water, yeast fermentation immediately takes place during rebrewing, and an alcohol is generated, and therefore, a generated aroma is adsorbed by an oil component in the soy sauce *moromi,* and there is no remarkable improvement in the aroma as compared with a regular rich soy sauce.

Accordingly, the present invention has a third object to be achieved by the present invention to provide a liquid seasoning having an excellent flavor inherent in a soy sauce while being rich in total nitrogen content, and a method for manufacturing the same.

### SOLUTION TO PROBLEM

In order to achieve the above-mentioned first object, the present inventors conducted intensive studies and repeated trial and error for a lactic acid fermented product suitable for being subjected to yeast fermentation and an original liquid for yeast fermentation suitable for being subjected to yeast fermentation. Then, they finally found out that a raw liquid for a seasoning in which an insoluble solid content is removed from a lactic acid fermented product, and further, the contents of a reducing sugar and ethanol are adjusted to predetermined amounts enables yeast fermentation at the latter stage to be performed simply. Then, a yeast fermented liquid obtained by subjecting the raw liquid for a seasoning to yeast fermentation can be used itself as a seasoning without performing pressing or the like, and therefore can be used as a seasoning even in the middle of the fermentation, and moreover, waste such as a press lees was not generated. That is, by using the above-mentioned raw liquid for a seasoning, a seasoning with high palatability can be simply obtained even at home.

Further surprisingly, by reducing the content of a lipid in the above-mentioned raw liquid for a seasoning, a seasoning to be obtained by yeast fermentation and the subsequent steps was successfully obtained as a seasoning with a more preferred aroma. Then, since the raw liquid for a seasoning contains a *moromi* fermented component by itself or by mixing with another seasoning, and therefore has an excellent flavor as a seasoning.

**In** addition, the present inventors repeated trial and error for a material to serve as an index of fermentation control as to whether or not appropriate yeast fermentation is performed. Then, finally, they found out that yeast fermentation can be simply controlled by putting a wood piece prepared by a compression processing technique for wood materials, and further molded so as to have a specific volume into a raw liquid for a seasoning, followed by yeast fermentation, and then confirming sinking and floating up of the wood piece. Such a thing can be achieved because the raw liquid for a seasoning is a liquid. Moreover, surprisingly, a seasoning obtained by performing fermentation control in this manner stably had a rich aroma.

Further surprisingly, depending on the type of wood material of the wood piece, the obtained seasoning was given a favorable aroma derived from the wood piece. Thus, in order to simply perform yeast fermentation, a wood piece, to which a compression processing technique is applied, and which has a specific volume was successfully created as an index of fermentation control for obtaining a seasoning with a mellow aroma.

Further, it was found out that by irradiation with light from the bottom face of a pedestal portion on which a container for yeast fermentation is placed, the aesthetic property of a soy sauce brewing kit as a whole can be improved while facilitating observation of a wood piece to be used for fermentation control.

Then, in order to simply manufacture a seasoning with a mellow aroma and high palatability even at home, the present inventors successfully created the above-mentioned raw liquid for a seasoning and the above-mentioned wood piece, and also a kit including a set of members such as the above-mentioned raw liquid for a seasoning, the above-mentioned wood piece, a yeast, and a container for placing these members therein.

On the other hand, in order to achieve the above-mentioned second object, the present inventors reexamined the components of a soy sauce, the manufacturing method therefor, and the like, and further intensively studied the aroma components thought to be 1,000 or more types, and repeated trial and error to obtain a soy sauce and a soy sauce-like seasoning with an excellent fruity aroma. Then, finally, they successfully obtained a seasoning containing a predetermined amount of either one type of fatty acid ester of ethyl decanoate and ethyl octanoate, both of which are not contained in a conventional soy sauce, by external addition or by yeast fermentation using a soy sauce *moromi* soup obtained by performing solid-liquid separation of a soy sauce *moromi* after completion of lactic acid fermentation, and further performing a membrane treatment, or the like. Then, surprisingly, the obtained seasoning was a seasoning with an especially excellent fruity aroma.

Even more surprisingly, the obtained seasoning had a reduced 2-ethyl-6-methylpyrazine content as compared with a conventional soy sauce. Nevertheless, the obtained seasoning had an HEMF content equal to or more than that of a conventional soy sauce, and was an excellent seasoning such that it has a fruity aroma while having a flavor inherent in a soy sauce.

The present inventors conducted intensive studies in order to achieve the above-mentioned third object, and repeated trial and error to obtain a liquid seasoning having an excellent flavor inherent in a soy sauce while being rich in total nitrogen content. For example, the present inventors faced a problem that it is difficult to further increase the total nitrogen content when obtaining the above-mentioned soy sauce and soy sauce-like seasoning with a fruity aroma.

**In** order to solve this problem, when the amount of brewing water was reduced or the raw material mixing ratio of soybeans was increased, the solid-liquid separation of a soy sauce *moromi* became difficult, and the quality of a soy sauce *koji* became poor and the aroma was deteriorated. **In** addition, when an unheated soy sauce obtained by subjecting a soy sauce *moromi* soup to yeast fermentation and pressing the resulting yeast fermented product was used as brewing water, yeast fermentation was inhibited by an alcohol derived from the unheated soy sauce in the same manner as a rebrewed soy sauce, and the flavor was deteriorated.

Through such trial and error, the present inventors finally successfully obtained a rich soy sauce and a rich soy sauce seasoning that are rich in total nitrogen content and have an excellent flavor inherent in a soy sauce by obtaining a first soy sauce *moromi* soup by removing a solid content and a microorganism from a soy sauce *moromi* obtained by mixing a soy sauce *koji* and a saline solution and performing lactic acid fermentation, and subsequently obtaining a second soy sauce *moromi* soup by removing a solid content from a second soy sauce *moromi* obtained by mixing the first soy sauce *moromi* soup and a soy sauce *koji* and dietary sodium chloride, and subsequently subjecting the second soy sauce *moromi* soup to yeast fermentation with a soy sauce yeast, and the like.

Moreover, surprisingly, the thus obtained rich soy sauce and rich soy sauce seasoning had a high 4-hydroxy-2 (or 5)-ethyl-5 (or 2)-methyl-3(2H)-furanone (homofuraneol; HEMF) content that imparts a flavor inherent in a soy sauce, and had an extremely excellent flavor. In particular, the rich soy sauce and the rich soy sauce seasoning obtained by the above-mentioned method contained ethyl decanoate and ethyl octanoate and had a fruity aroma.

Then, the present inventors successfully created a rich soy sauce and a rich soy sauce seasoning that are rich in total nitrogen content and have an excellent flavor inherent in a soy sauce, and a method for manufacturing the same.

The present invention, which is defined by the claims, is an invention that has been completed based on the above-mentioned successful examples or findings.

The present invention relates to:
- A raw liquid for seasoning, having a reducing sugar content of 4.5% or more and an ethanol content of 1.5% or less, wherein the raw liquid for a seasoning is a soy sauce *moromi* soup in which the insoluble content has been removed in advance.
- A method for manufacturing a seasoning, comprising a step of obtaining a seasoning by subjecting the above raw liquid for a seasoning to yeast fermentation;
- A soy sauce or a soy-like seasoning, wherein a content of ethyl octanoate and/or ethyl decanoate is any of the following (1) to (3): (1) a content of ethyl octanoate is 10 ppb to 20,000 ppb; (2) a content of ethyl decanoate is 10 ppb to 5,000 ppb; (3) a content of ethyl octanoate is 5 ppb to 10,000 ppb, and a content of ethyl decanoate is 5 ppb to 2,000 ppb; wherein the soy sauce, or the sauce-like seasoning has a homofuraneol content of 20 ppm or more;
- A seasoning obtained by heating the above soy sauce or sauce-like seasoning, wherein the soy sauce or the sauce-like seasoning has been obtained by yeast fermentation of a soy sauce *moromi* soup in which the insoluble content has been removed in advance.

The following aspects are disclosed:
[1] A raw liquid for a seasoning, having a reducing sugar content of 4.5 wt% or more and an ethanol content of 1.5 wt% or less.
[2] The raw liquid for a seasoning according to [1], wherein the raw liquid for a seasoning has a linoleic acid content of 0.03 wt% or less.
[3] The raw liquid for a seasoning according to any one of [1] to [2], wherein the raw liquid for a seasoning is a soy sauce *moromi* soup.
[4] The raw liquid for a seasoning according to any one of [1] to [3], wherein the seasoning is a soy sauce or a soy sauce-like seasoning.
[5] A method for manufacturing a seasoning, including a step of obtaining a seasoning by subjecting the raw liquid for a seasoning according to any one of [1] to [4] to yeast fermentation.
[6] A wood piece, having been subjected to compression processing, and having a volume less than 20 cm³.
[7] The wood piece according to [6], wherein the wood piece sinks in the raw liquid for a seasoning before yeast fermentation, and floats up in the vicinity of the liquid surface in the raw liquid for a seasoning after yeast fermentation.
[8] The wood piece according to any one of [6] to [7] wherein the compression processing is compression processing so that the density of the wood piece is increased by 1.1 times or more as compared with the density before the compression processing.
[9] The wood piece according to any one of [6] to [7], wherein the compression processing is compression processing so that the density of the wood piece is increased by 1.25 to 2.5 times as compared with the density before the compression processing.
[10] The wood piece according to any one of [6] to [9], wherein the wood piece is further boiled in a short time.
[11] The wood piece according to any one of [6] to [10], characterized in that the wood piece is a wood piece derived from a tree of a plant selected from the group consisting of plants of the family *Taxodiaceae*, plants of the family *Cupressaceae,* plants of the family *Rosaceae,* plants of the family *Fagaceae,* and plants of the family *Ulmaceae.*
[12] A method for manufacturing a seasoning, including a step of putting the wood piece according to any one of [6] to [11] in a raw liquid for a seasoning, followed by performing yeast fermentation, and obtaining a seasoning using floating up of the wood piece as an index.
[13] The method for manufacturing a seasoning according to [12], wherein the raw liquid for a seasoning is a soy sauce *moromi* soup.
[14] The method for manufacturing a seasoning according to any one of [12] to [13], wherein the seasoning is a soy sauce or a soy sauce-like seasoning.
[15] A kit for manufacturing a seasoning, including:
   a raw liquid for a seasoning having a reducing sugar content of 4.5 wt% or more, an ethanol content of 1.5 wt% or less, and a color number of 15 or more;
   a wood piece having been subjected to compression processing, and having a volume less than 20 cm³;
   a yeast-containing material to be added so that a number of bacteria becomes 1.0 × 10³ bacteria/mL or more as a final concentration; and
   a container for yeast fermentation.
[16] The kit according to [15], further including a container base provided with:
   a pedestal portion on which the container for yeast fermentation is placed;
   a hole portion provided passing through the pedestal portion so as to generate scattered light by irradiation with light from the bottom face of the container for yeast fermentation placed on the pedestal portion; and
   a light source housing portion capable of housing a light source for irradiating the bottom face of the container for yeast fermentation from the hole portion.
[17] The kit according to any one of [15] to [16], wherein the yeast-containing material is a seasoning obtained by yeast fermentation.
[18] The kit according to any one of [15] to [17], wherein the raw liquid for a seasoning is a soy sauce *moromi* soup.
[19] The kit according to any one of [15] to [18], wherein the seasoning is a soy sauce or a soy sauce-like seasoning.
[20] A method for manufacturing a seasoning, including a step of subjecting a container for yeast fermentation, to which
   a raw liquid for a seasoning having a reducing sugar content of 4.5 wt% or more, an ethanol content of 1.5 wt% or less, and a color number of 15 or more,
   a yeast-containing liquid to be added to the raw liquid for a seasoning so that a number of bacteria becomes 1.0 × 10³ bacteria/mL or more, and
   a wood piece having been subjected to compression processing, and having a volume less than 20 cm³ have been added,
   to yeast fermentation, and obtaining a seasoning using floating up of the wood piece in the container as an index.
[21] The manufacturing method according to [20], wherein the yeast-containing material is a seasoning obtained by yeast fermentation.
[22] The manufacturing method according to any one of [20] to [21], wherein the raw liquid for a seasoning is a soy sauce *moromi* soup.
[23] The manufacturing method according to any one of [20] to [22], wherein the seasoning is a soy sauce or a soy sauce-like seasoning.
[24] A soy sauce or a soy sauce-like seasoning, wherein a content of ethyl octanoate and/or ethyl decanoate is any of the following (1) to (3):
   (1) a content of ethyl octanoate is 10 ppb to 20,000 ppb;
   (2) a content of ethyl decanoate is 10 ppb to 5,000 ppb; and
   (3) a content of ethyl octanoate is 5 ppb to 10,000 ppb, and a content of ethyl decanoate is 5 ppb to 2,000 ppb.
[25] The soy sauce or the soy sauce-like seasoning according to [24], wherein the soy sauce or the soy sauce-like seasoning has a 2-ethyl-6-methylpyrazine content less than 10 ppb.
[26] The soy sauce or the soy sauce-like seasoning according to any one of [24] to [25], wherein the soy sauce or the soy sauce-like seasoning has an HEMF content of 20 ppm or more.
[27] The soy sauce or the soy sauce seasoning according to [24], wherein a total nitrogen content is 1.8 wt% or more, an HEMF content is 60 ppm or more, and it is rich.
[28] The soy sauce or the soy sauce seasoning according to [27], wherein the HEMF is not externally added HEMF.
[29] The rich soy sauce or the rich soy sauce seasoning according to any one of [27] to [28], wherein the soy sauce or the soy sauce seasoning contains a yeast fermented product of a soy sauce *moromi* soup, and the soy sauce *moromi* soup before yeast fermentation has a total nitrogen content of 1.8 wt% or more and a reducing sugar content of 5.0 wt% or more.
[30] A method for manufacturing a rich soy sauce or a rich soy sauce seasoning, including:
   a step of obtaining a first soy sauce *moromi* soup by subjecting a first soy sauce *moromi* obtained by subjecting a soy sauce *koji* and a saline solution to a mixing treatment to a solid-liquid separation treatment and a pasteurization treatment;
   a step of obtaining a second soy sauce *moromi* by subjecting the first soy sauce *moromi* soup, a soy sauce *koji,* and dietary sodium chloride to a mixing treatment;
   a step of obtaining a second soy sauce *moromi* soup by subjecting the second soy sauce *moromi* to a solid-liquid separation treatment or a solid-liquid separation treatment and a pasteurization treatment; and
   a step of obtaining a rich soy sauce or a rich soy sauce seasoning having a total nitrogen content of 1.8 wt% or more and an HEMF content of 60 ppm or more by subjecting the second soy sauce *moromi* soup to yeast fermentation using a soy sauce yeast.
[31] A method for manufacturing a rich soy sauce or a rich soy sauce seasoning, including:
   a step of obtaining a soy sauce *moromi* soup by subjecting a soy sauce *moromi* obtained by subjecting a soy sauce *koji* and a saline solution to a mixing treatment to a solid-liquid separation treatment and a pasteurization treatment;
   a step of obtaining an adjusted soy sauce *moromi* soup by adjusting the soy sauce *moromi* soup so as to have a total nitrogen content of 2.0 wt% or more and a reducing sugar content of 5.0 wt% or more; and
   a step of obtaining a rich soy sauce or a rich soy sauce seasoning having a total nitrogen content of 1.8 wt% or more and an HEMF content of 60 ppm or more by subjecting the adjusted soy sauce *moromi* soup to yeast fermentation using a soy sauce yeast.

### ADVANTAGEOUS EFFECTS OF INVENTION

According to the raw liquid for a seasoning and the manufacturing method which are one aspect of the present invention, yeast fermentation can be simply performed, and therefore, a seasoning can be easily manufactured not only by a manufacturer of the seasoning but also at home.

According to the wood piece yeast fermentation can be simply performed for obtaining a seasoning with a mellow aroma, and therefore, the seasoning can be easily manufactured not only by a manufacturer of the seasoning but also at home. Further, according to the wood piece yeast fermentation can be simply controlled, and therefore, a seasoning such as a soy sauce or a soy sauce-like seasoning can be simply manufactured even at home. Moreover, surprisingly, the seasoning obtained by fermentation in this manner stably had a rich aroma.

According to the kit and the manufacturing method yeast fermentation can be simply performed, and therefore, a seasoning can be easily manufactured not only by a manufacturer of the seasoning but also at home without generating extra waste.

According to the soy sauce and the soy sauce-like seasoning which are one aspect of the present invention, a seasoning that has an excellent fruity aroma hardly noticeable in a conventional soy sauce while having a flavor inherent in a soy sauce can be provided. Moreover, the soy sauce and the soy sauce-like seasoning which are one aspect of the present invention can be obtained by yeast fermentation using a soy sauce *moromi* soup even without continuously manufacturing them from brewing of raw materials unlike a conventional method for manufacturing a soy sauce, and therefore, they can be easily obtained not only by a manufacturer of the seasoning but also at home.

According to the rich soy sauce and the rich soy sauce seasoning which are one aspect of the present invention, a liquid seasoning having an especially excellent flavor inherent in a soy sauce while being rich in total nitrogen content can be provided. Moreover, the rich soy sauce and the rich soy sauce seasoning which are one aspect of the present invention can contain HEMF at a higher concentration than a general commercially available soy sauce.

Further, the rich soy sauce and the rich soy sauce seasoning which are one aspect of the present invention can be obtained by subjecting a soy sauce *moromi* soup to yeast fermentation, and therefore, they can be given a fruity aroma in addition to a flavor inherent in a soy sauce. In this manner, the rich soy sauce and the rich soy sauce seasoning which are one aspect of the present invention can be obtained by yeast fermentation using a soy sauce *moromi* soup even without continuously manufacturing them from brewing of raw materials unlike a conventional method for manufacturing a soy sauce, and therefore, they can be easily obtained not only by a manufacturer of the seasoning but also at home.

According to the method for manufacturing a rich soy sauce and a rich soy sauce seasoning which is one aspect of the present invention, a liquid seasoning having an especially excellent flavor inherent in a soy sauce while being rich in total nitrogen content, and further having a fruity aroma can be manufactured.

### BRIEF DESCRIPTION OF DRAWINGS

[FIG. 1] FIG. 1 is a diagram representing the results of testing an effect on yeast fermentation when changing the content of a reducing sugar in a raw liquid for a seasoning as described in the below-mentioned Example.
[FIG. 2] FIG. 2 is a diagram representing the results of testing an effect on yeast fermentation when changing the content of ethanol in a raw liquid for a seasoning as described in the below-mentioned Example.
[FIG. 3A] FIG. 3A is a captured photograph of a wood piece in a spherical shape provided with a hole portion at the center.
[FIG. 3B] FIG. 3B is a captured photograph of a wood piece shaped by trimming the corners of the wood piece in a rectangular parallelepiped shape.
[FIG. 4] FIG. 4 is a captured photograph of a state where a wood piece is put in a container by being held with chopsticks.
[FIG. 5] FIG. 5 is a captured photograph of a state where a container in which a wood piece and a raw liquid for a seasoning were placed was subjected to yeast fermentation, thereby generating a gas (bubble), so that the wood piece floated up in the vicinity of the liquid surface.
[FIG. 6] FIG. 6 is a view showing a specific mode of a kit.
[FIG. 7] FIG. 7 is a view for illustrating a specific mode of a manufacturing method of one aspect of the present invention.
[FIG. 8A] FIG. 8A is a view showing one preferred mode of a container base.
[FIG. 8B] FIG. 8B is a view showing a use mode of one preferred mode of a container base.
[FIG. 9] FIG. 9 is a diagram representing the results of sensory evaluation when changing the addition amount of each of various types of esters to be added to an unheated soy sauce as described in the below-mentioned Example.
[FIG. 10] FIG. 10 is a diagram representing the results of sensory evaluation of each of liquid seasonings 4-1 to 4-2 and commercially available soy sauces 1 to 2 as described in the below-mentioned Example.
[FIG. 11] FIG. 11 is a diagram representing the results of sensory evaluation when changing the content of each of various types of esters to be added to the liquid seasoning 4-2 as described in the below-mentioned Example.

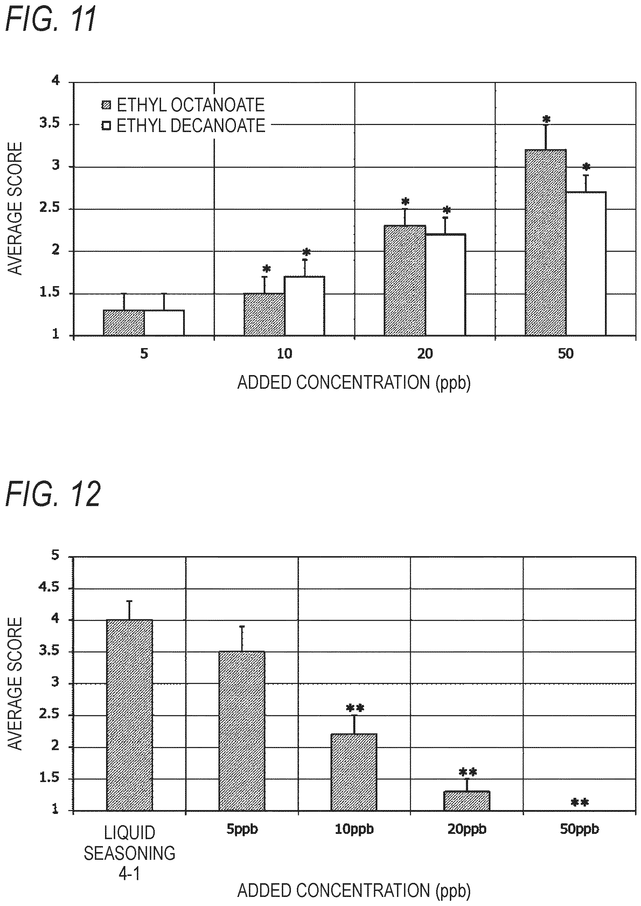

[FIG. 11] FIG. 11 is a diagram representing the results of sensory evaluation when changing the content of each of various types of esters to be added to the liquid seasoning 4-2 as described in the below-mentioned Example.
[FIG. 12] FIG. 12 is a diagram representing the results of sensory evaluation when changing the addition amount of 2-ethyl-6-methylpyrazine to be added to the liquid seasoning 4-1 as described in the below-mentioned Example.

### DESCRIPTION OF EMBODIMENTS

Hereinafter, a raw liquid for a seasoning, a wood piece, a kit, a soy sauce and a soy sauce-like seasoning (hereinafter collectively referred to as a liquid seasoning) and a method for manufacturing the same, a rich soy sauce and a rich soy sauce seasoning (hereinafter collectively referred to as a liquid rich seasoning) and a method for manufacturing the same will be described in detail. The present invention remains defined by the claims.

Each term in this description is used in the meaning generally used by those skilled in the art unless otherwise specified and should not be interpreted as having an unduly restrictive meaning.

The term "content" has the same meaning as concentration and means the ratio (for example, wt%) of the amount (for example, mass) of a component with respect to the total amount (for example, mass) of a raw liquid for a seasoning or a seasoning.

The term "ppm" is a unit as the generally known meaning, and specifically, 1 ppm is 1 mg/L (w/v).

The term "ppb" is a unit as the generally known meaning, and specifically, 1 ppb is 1 µg/L (w/v).

The term "flavor inherent in a soy sauce" means the aroma of an unheated soy sauce manufactured by an ordinary brewing process using soybeans and wheat as raw materials, which comes up from the inside of the mouth to the nose when eating and drinking.

The term "simple yeast fermentation" means yeast fermentation that can be performed without using a large-scale manufacturing device, for example, even at home.

The terms "fermentation" and "aging" are not strictly distinguished, and are sometimes referred to as fermentation by combining these.

The number in the "color number" means the number of "Standard Color of Soy Sauce" stated in the "Japanese Agricultural Standards for Soy Sauce" in Ministry of Agriculture, Forestry and Fisheries Notification.

In this description, the term "fruity aroma" means a sweet aroma like a white wine produced using grapes as a raw material, which is perceived only by the nose without eating and drinking. Note that in the case of using merely "aroma", it means at least one of an aroma which is perceived only by the nose without eating and drinking or an aroma which comes up from the inside of the mouth to the nose when eating and drinking.

The term *"umami"* means a taste known as a basic taste along with generally known sweetness, acid taste, salty taste, and bitterness. The *umami* can be, for example, at least any taste of a taste wrapping around the whole tongue so as to spread over the tongue, a taste that lasts unlike an acid taste or a salty taste and affects the aftertaste, a taste that promotes secretion of saliva moistening the inside of the mouth while being viscous, and the like.

The term "rich" means that the *umami* and/or the flavor inherent in a soy sauce is excellent as compared with a commercially available unheated soy sauce, for example, an unheated soy sauce having a total nitrogen content less than 1.8 wt% and/or an HEMF content less than 50 ppm.

The term "and/or" means any one, or an arbitrary combination of two or more, or a combination of all of a plurality of related items listed.

### 1. Raw Liquid for Seasoning of One Aspect of the Present Invention

The raw liquid for a seasoning of one aspect of the present invention is configured such that the content of a reducing sugar and the content of ethanol are adjusted to predetermined amounts, and therefore can be provided for the use of simple yeast fermentation. As a result, by using the raw liquid for a seasoning of one aspect of the present invention, a seasoning as a yeast fermented product having a stable quality can be obtained.

The raw liquid for a seasoning of one aspect of the present invention is a liquid material to be used for obtaining a seasoning. The seasoning is not particularly limited as long as it is a material to be used for the purpose of adjusting the taste when processing a food material, and examples thereof include a soy sauce, a soy sauce-like seasoning, a cooking sake, a sweet sake, a salted *koji,* a soup for noodles, a soup for a one-pot dish, a soup stock, a dressing, and a sauce, and it is preferably a soy sauce and a soy sauce-like seasoning.

The soy sauce (also referred to as *shoyu)* is not particularly limited as long as it is a material to be used as a seasoning as generally known, and examples thereof include those stated in the "Quality Labeling Standards for Soy Sauce" or the "Japanese Agricultural Standards for Soy Sauce" in Ministry of Agriculture, Forestry and Fisheries Notification, and specific examples thereof include a *koikuchi* (dark-colored) soy sauce, an *usukuchi* (light-colored) soy sauce, a *shiro* (very light-colored) soy sauce, a *tamari* (rich) soy sauce, and a rebrewed soy sauce. Additional examples thereof include an unheated soy sauce, a *dashi* (soup stock) soy sauce, a *teri* soy sauce (a soy sauce for imparting a glaze), a *kiage* (just pressed) soy sauce, a fast brewed soy sauce, an amino acid-mixed soy sauce, a soy sauce with a reduced sodium chloride content, and a soy sauce with a low sodium chloride content. The soy sauce can be one type alone or a combination of two or more types of those exemplified above.

The soy sauce-like seasoning refers to a seasoning to be used for the same purpose as the "soy sauce" defined in the Japanese Agricultural Standards, and is a concept including a soy sauce, a soy sauce processed product, and a fermented seasoning blend. If it is used for the same purpose as the "soy sauce", a raw material (for example, soybeans or wheat) derived from a soy sauce *koji* may not be used for the soy sauce-like seasoning.

The raw liquid for a seasoning is not particularly limited as long as it is a liquid material to be used for obtaining a seasoning, and examples thereof include liquid materials to be used for manufacturing a soy sauce, a soy sauce-like seasoning, a cooking sake, a sweet sake, a salted *koji,* a soup for noodles, a soup for a one-pot dish, a soup stock, a dressing, a sauce, or the like, and it is preferably a raw liquid for a soy sauce and a raw liquid for a soy sauce-like seasoning. However, the raw liquid for a seasoning is not prevented from being used as a seasoning as it is.

The content of a reducing sugar in the raw liquid for a seasoning is an amount capable of performing yeast fermentation, and is specifically 4.5 wt% or more, and from the viewpoint that a sufficient amount of ethanol content can be achieved by providing a long fermentation period, it is preferably 5 wt% or more, more preferably 6 wt% or more, and further more preferably 7 wt% or more. The upper limit of the content of a reducing sugar in the raw liquid for a seasoning is not particularly limited, but is, for example, such an amount that yeast fermentation is not inhibited, and is approximately 30 wt% or less. Note that the reducing sugar means a direct reducing sugar as stated in the "Japanese Agricultural Standards for Soy Sauce" in Ministry of Agriculture, Forestry and Fisheries Notification.

When the content of a reducing sugar in the raw liquid for a seasoning is less than 4.5 wt%, it can be adjusted to 4.5 wt% by adding a reducing sugar component to the raw liquid for a seasoning. The reducing sugar component to be added at that time is not particularly limited as long as it can be measured as a direct reducing sugar by the method described in the below-mentioned Example, and examples thereof include glucose, fructose, and maltose, and among these, glucose is preferred.

The content of ethanol in the raw liquid for a seasoning is an amount capable of performing yeast fermentation, and is specifically 1.5 wt% or less, and from the viewpoint that more stable yeast fermentation can be performed, it is preferably 1.0 wt% or less, and more preferably 0.5 wt% or less. The lower limit of the content of ethanol in the raw liquid for a seasoning is not particularly limited, but may be less than the lower detection limit, that is, may be substantially 0 wt%. Further, if the above-mentioned content is achieved, ethanol may be added to the raw liquid for a seasoning, and examples of the ethanol that can be used at that time include food grade alcohols to be used for foods and liquors containing ethanol, and it is not particularly limited.

The content of linoleic acid in the raw liquid for a seasoning is not particularly limited, but is, for example, less than 0.15 wt%, and from the viewpoint that the aroma of a seasoning obtained by subjecting the raw liquid for a seasoning to yeast fermentation is made favorable, it is preferably 0.10 wt% or less, more preferably 0.05 wt% or less, further more preferably 0.03 wt% or less, and still further more preferably 0.01 wt% or less. The lower limit of the content of linoleic acid in the raw liquid for a seasoning is not particularly limited, but may be less than the lower detection limit, that is, may be substantially 0 wt%.

The contents of a reducing sugar, ethanol, and linoleic acid in the raw liquid for a seasoning can be measured by the method described in the below-mentioned Example. Therefore, the contents of a reducing sugar, ethanol, and linoleic acid described above are values obtained by measurement using the method described in the below-mentioned Example.

The raw liquid for a seasoning is, for example, placed in a container for yeast fermentation together with a wood piece and a yeast-containing material, and subjected to yeast fermentation. **In** the yeast fermentation at that time, the yeast fermentation is controlled by using floating up of the wood piece as an index, and therefore, the raw liquid for a seasoning preferably has a color number so as to be able to visually recognize the wood piece included therein. The color number of the raw liquid for a seasoning is, for example, 15 or more, preferably 20 or more, more preferably 30 or more, and further more preferably 35 or more. For example, when the wood piece is a Japanese cedar wood piece having a volume of 1 cm³, if the color number of the raw liquid for a seasoning is 15 or more, the Japanese cedar wood piece included therein can be visually recognized through a transparent container.

The method for manufacturing a raw liquid for a seasoning is not particularly limited as long as it is a method capable of obtaining a raw liquid for a seasoning in which the content of a reducing sugar and the content of ethanol, and the like are predetermined amounts. For example, when the raw liquid for a seasoning is a raw liquid for a soy sauce or a raw liquid for a soy sauce-like seasoning, the raw liquid for a seasoning can be manufactured by a method for manufacturing a soy sauce including steps before a yeast fermentation step, that is, a method for manufacturing a soy sauce *moromi.* A specific example of the raw liquid for a seasoning of one aspect of the present invention is a soy sauce *moromi* soup obtained by a method for manufacturing a soy sauce using a brewing process, and can be a liquid to serve as a raw material of an aged *moromi.*

The method for manufacturing a soy sauce *moromi* is not particularly limited as long as it is a method including steps until a soy sauce *moromi* is obtained in a method for manufacturing a soy sauce as generally known. As one aspect of the method for manufacturing a soy sauce *moromi,* for example, a method including steps of obtaining a soy sauce *koji* by inoculating a seed *koji* starter into a soy sauce raw material that is a mixture of soybeans denatured by steaming, roasted crushed cereal grains, or the like, and performing *koji* making with aeration at 20 to 40°C for about 2 to 4 days, and subsequently subjecting a material obtained by putting the soy sauce *koji* into a saline solution having a sodium chloride concentration of 20 to 30 wt% and further arbitrarily adding a soy sauce lactic acid bacterium thereto to lactic acid fermentation and aging at 20 to 40°C for 10 to 200 days while appropriately stirring, thereby obtaining a soy sauce *moromi.*

The soy sauce raw material is not particularly limited, but examples thereof include soybeans such as whole soybeans and defatted soybeans, cereal grains such as wheat, barley, naked barley, and Job's tears, cereal grain gluten, rice, and corn.

The seed *koji* starter is not particularly limited as long as it is a *koji* mold that is generally utilized when manufacturing a soy sauce, and examples thereof include *Aspergillus oryzae* and *Aspergillus sojae.* The soy sauce lactic acid bacterium is not particularly limited as long as it is a soy sauce lactic acid bacterium that is generally utilized when manufacturing a soy sauce, and examples thereof include salt-tolerant lactic acid bacteria such as *Tetragenococcus halophilus.*

In the method for manufacturing a soy sauce *moromi,* when the amount of the starch raw material such as wheat or rice is small in the soy sauce raw material, a soy sauce *moromi* in which the content of a reducing sugar is a predetermined amount may not be able to be obtained. Therefore, it is preferred that the amount of the starch raw material such as wheat or rice in the soy sauce raw material is such an amount that a soy sauce *moromi* in which the content of a reducing sugar is a predetermined amount can be obtained. However, this shall not apply when a soy sauce *moromi* in which the content of a reducing sugar is a predetermined amount is obtained by adding a reducing sugar component to a soy sauce *moromi.*

In a soy sauce *moromi,* obtained by a regular method for manufacturing a soy sauce *moromi,* an insoluble solid content derived from a soy sauce raw material such as soybeans or wheat is mixed. Therefore, a soup obtained by removing the insoluble solid content from the soy sauce *moromi* is the raw liquid for a seasoning of one aspect of the present invention. By using such a soy sauce *moromi* soup, a soy sauce or a soy sauce-like seasoning is obtained by simply performing yeast fermentation. However, in other aspects the amount of the insoluble solid content is such an amount that it does not inhibit sinking and floating up of the wood piece, the raw liquid for a seasoning may contain the insoluble solid content.

A method for obtaining the soy sauce *moromi* soup by removing the insoluble solid content from the soy sauce *moromi* is not particularly limited, but is, for example, a generally known solid-liquid separation method and the like are exemplified, and specifically, a pressing treatment and a filtration treatment that are generally used in a method for manufacturing a soy sauce, and the like are exemplified, and more specifically, a pressing filtration treatment with a press machine using a filter cloth, a membrane filtration treatment using various permeable membranes such as an MF membrane and a UF membrane, and the like are exemplified. When the soy sauce lactic acid bacterium is left in a large amount in the soy sauce *moromi* soup at that time, yeast fermentation may not be appropriately performed. Therefore, when obtaining the soy sauce *moromi* soup, it is preferred to adopt a method capable of removing most of the soy sauce lactic acid bacterium together with the insoluble solid content. The content of the lactic acid bacterium in the soy sauce *moromi* soup is not particularly limited, but is, for example, preferably 1.0 × 10⁸ bacteria/mL or less, more preferably 1.0 × 10⁷ bacteria/mL or less, and further more preferably 1.0 × 10⁶ bacteria/mL or less. Therefore, the raw liquid for a seasoning of one aspect of the present invention is preferably a soup obtained by removing the insoluble solid content and the microorganism from the soy sauce *moromi.*

A seasoning obtained by subjecting the soy sauce *moromi* soup to yeast fermentation has a soy sauce-like aroma and flavor. **In** particular, since the content of ethanol in the soy sauce *moromi* soup is a predetermined amount, 4-hydroxy-2 (or 5)-ethyl-5 (or 2)-methyl-3(2H)-furanone (homofuraneol; HEMF) can be produced in an amount capable of bringing about a soy sauce-like aroma and flavor by yeast fermentation. Therefore, the raw liquid for a seasoning of one aspect of the present invention is preferably a raw liquid for a seasoning with which HEMF is produced in an amount capable of bringing about a soy sauce-like aroma and flavor by being subjected to yeast fermentation. The amount in which HEMF brings about a soy sauce-like aroma and flavor is, for example, 15 ppm (0.0015 wt%) or more, preferably 20 ppm or more, and more preferably 30 ppm or more. The content of HEMF can be measured by the method described in the below-mentioned Example. The upper limit of the content of HEMF may be set according to a desired soy sauce-like aroma and flavor, and is not particularly limited.

The yeast fermentation of the soy sauce *moromi* soup is not particularly limited as long as it is yeast fermentation using a soy sauce yeast when manufacturing a soy sauce as generally known, and for example, yeast fermentation of an ordinary method using a soy sauce yeast under a condition according to the type of the soy sauce yeast, a number of bacteria, or the like is exemplified. The soy sauce yeast is not particularly limited as long as it is a yeast that is generally used when manufacturing a soy sauce, and examples thereof include salt-tolerant yeasts such as *Zygosaccharomyces rouxii, Zygosaccharomyces bailii* (*Z. bailii*)*, Candida etchellsii,* and *Candida versatilis* (*C. versatilis*)*.*

The yeast fermentation is not particularly limited, and yeast fermentation of an ordinary method may be performed under a condition according to the type of the yeast, a number of bacteria, or the like, and for example, a period until the production amount of ethanol reaches a maximum amount, or the like is exemplified. More specifically, when *Zygosaccharomyces rouxii* is used as the soy sauce yeast, it is about 7 to 45 days at room temperature, preferably at 15 to 30°C.

In the raw liquid for a seasoning of one aspect of the present invention, the content of a reducing sugar and ethanol are present in a predetermined amount, and further, various other components can be contained as long as they do not prevent the object of the present invention from being achieved. Such other components are not particularly limited, but examples thereof include seasoning components and food materials, and specific examples thereof include vegetable components (radish, carrot, onion, potato, garlic, etc.), meat (beef, pork, chicken, etc.), fish, yeast extracts, meat extracts (chicken extract, pork extract, beef extract, fish meat extract, etc.), fruit juices (apple juice, etc.), spices (ginger, red pepper, pepper, basil, oregano, etc.), chemical seasonings (monosodium glutamate, disodium inosinate, etc.), and flavors, and among these, one type can be used alone or two or more types can be used in combination. The content of such other components can be appropriately set as long as the object of the present invention can be achieved.

Note that when the soy sauce *moromi* soup or the raw liquid for a seasoning obtained above is subjected to a decoloring treatment using an adsorptive resin, a free fatty acid, an amino acid, or the like is adsorbed, and therefore, it is not preferred to subject the soy sauce *moromi* soup or the raw liquid for a seasoning to a decoloring treatment using an adsorptive resin.

The raw liquid for a seasoning of one aspect of the present invention can be formed into a container-packed raw liquid in which it is packed and sealed in a container. The container is not particularly limited, but examples thereof include packaging containers such as a single-layer or laminate film bag, a retort pouch, a vacuum pack, an aluminum container, a plastic container, a bottle, and a can made of a metal such as aluminum, a paper, a plastic such as PET or PTP, a glass, or the like, and among these, a laminate film, a glass bottle, and a plastic container having experience as a packaging container of foods are preferred. The raw liquid for a seasoning of one aspect of the present invention is preferably subjected to a pasteurization treatment by pressurization and/or heating, or the like for avoiding denaturation over time.

It is preferred that the entire amount of the raw liquid for a seasoning of one aspect of the present invention is subjected to yeast fermentation. For example, performing yeast fermentation by placing the raw liquid for a seasoning of one aspect of the present invention and a soy sauce yeast in a soy sauce bottle that is suitable for yeast fermentation and can be used immediately after yeast fermentation from a container in which the raw liquid for a seasoning of one aspect of the present invention is placed, and then leaving the bottle to stand at room temperature, etc. are exemplified.

As a specific mode of the raw liquid for a seasoning of one aspect of the present invention, a raw liquid for a seasoning in which the content of a reducing sugar and the content of ethanol are as the following (1-1) and (2-1), respectively, is exemplified.
(1-1) the content of a reducing sugar: 4.5 to 30 wt%
(2-1) the content of ethanol: 0 to 1.5 wt%

As a further specific mode of the raw liquid for a seasoning of one aspect of the present invention, a raw liquid for a seasoning in which the content of a reducing sugar, the content of ethanol, and the content of linoleic acid are as the following (1-2), (2-2), and (3-2), respectively, is exemplified.
(1-2) the content of a reducing sugar: 4.5 to 30 wt%
(2-2) the content of ethanol: 0 to 1.5 wt%
(3-2) the content of linoleic acid: 0 to 0.10 wt%

As a yet further specific mode of the raw liquid for a seasoning of one aspect of the present invention, a raw liquid for a seasoning in which the content of a reducing sugar, the sugar, the content of ethanol, and the content of linoleic acid are as the following (1-3), (2-3), and (3-3), respectively, is exemplified.
(1-3) the content of a reducing sugar: 6 to 30 wt%
(2-3) the content of ethanol: 0 to 1.0 wt%
(3-3) the content of linoleic acid: 0 to 0.03 wt%

The raw liquid for a seasoning of one aspect of the present invention is used for obtaining a seasoning by being subjected to yeast fermentation, but the raw liquid itself may be used as a seasoning in expectation of adjusting the taste by the components in the raw liquid for a seasoning.

The manufacturing method (1) of one aspect of the present invention is a method for manufacturing a seasoning including at least a step of obtaining a seasoning by subjecting the raw liquid for a seasoning of one aspect of the present invention to yeast fermentation. In the manufacturing method (1) of one aspect of the present invention, after subjecting the raw liquid for a seasoning of one aspect of the present invention to yeast fermentation, a step at the latter stage of the yeast fermentation to be used in a method for manufacturing a regular soy sauce such as pressing, filtration, or heating, or the like may be performed. A seasoning obtained by the manufacturing method (1) of one aspect of the present invention may be formed into a container-packed seasoning by being packed in a container such as a bottle.

The seasoning obtained by the manufacturing method (1) of one aspect of the present invention can be used alone or by mixing with another seasoning component such as a soup stock, an acidulant, an amino acid, a nucleic acid, an organic acid, a protein hydrolysate, a sugar, a sake, a sweet sake, an alcohol, a thickener, an emulsifier, or an inorganic salt in addition to a vegetable component, meat, fish, a yeast extract, a meat extract, a fruit juice, a spice, a chemical seasoning, or a flavor described above for cooking various food materials or for a processing method therefor, and can be used for various foods such as Japanese foods, Western foods, and Chinese foods, and specifically, can be used for deep-fried foods, grilled slices of meat, udon, soba, ramen, Hamburg steak, meatballs, simmered chicken and root vegetables, teriyaki, curry, stew, hashed beef, etc., but it is not limited thereto.

### 2. Wood Piece of One Aspect (not Part of the Present Invention)

The wood piece of one aspect is characterized by having been subjected to compression processing, and having a specific volume. Although the technical scope of the present disclosure does not adhere to any theory or speculation, the wood piece of one aspect is configured to be made of a wood material having been subjected to compression processing, and therefore, there is a possibility that a woody tissue is ruptured so that a gas inside the tissue is easily released and a liquid easily penetrates inside, and further, the specific gravity is increased, and therefore, the wood piece can sink in a liquid although it is a wood material. In addition, when a gas (bubble) comes into contact with the wood piece that has sunk in a liquid, gas-liquid exchange occurs inside the tissue of the wood piece, so that a buoyant force is increased by incorporating the gas, and the wood piece floats up. Further, as yeast fermentation proceeds, an alcohol is generated so that the density of the raw liquid for a seasoning is decreased, which is also considered to be one of the causes of floating up of the wood piece. However, at that time, when the volume (mass) is large, the floating up of the wood piece is inhibited, and therefore, the wood piece has such a volume that it can float up when incorporating a gas. On the other hand, many wood pieces derived from a natural wood material that has not been subjected to compression processing do not sink in a liquid because of having a low specific gravity. Even in the case of a wood piece that sinks, due to the reason that a gas hardly adheres to the wood piece, air is hardly incorporated inside the tissue, or the like, it does not incorporate a gas and remains in a state of sinking, and therefore, they are not suitable as an index of fermentation in any case.

The wood piece is utilized as an index when manufacturing a seasoning. That is, the wood piece is preferably a wood piece that sinks in the raw liquid for a seasoning before yeast fermentation, and floats up in the vicinity of the liquid surface in the raw liquid for a seasoning after yeast fermentation. More specifically, when the wood piece is put in the raw liquid for a seasoning and yeast fermentation is performed, the wood piece that has sunk in the raw liquid for a seasoning at the beginning incorporates carbon dioxide generated as yeast fermentation proceeds and floats up in the vicinity of the liquid surface in a short time. The generation of carbon dioxide accompanies the production of an alcohol, and based on this, it can be confirmed that yeast fermentation is appropriately performed, and a seasoning with a rich aroma is obtained from the raw liquid for a seasoning. In fact, as described in the below-mentioned Example, it can be determined whether or not a seasoning with a rich aroma can be obtained based on whether or not the wood piece provided for yeast fermentation floats up. Therefore, by using the wood piece of one aspect of the present invention as an index, yeast fermentation can be simply and appropriately controlled, and a seasoning stably having a mellow aroma and high palatability can be manufactured. In this manner, the wood piece can be said to be a wood piece usable as a fermentation index or a wood piece usable as a yeast fermentation index.

The degree of compression processing is not particularly limited as long as it is compression processing so that the wood piece can sink in the raw liquid for a seasoning, and for example, compression processing so that the density of the wood piece is increased is exemplified, and preferably, compression processing so that the density of the wood piece is increased by 1.1 times or more, more preferably 1.25 times or more, and further more preferably 1.4 times or more as compared with the density before the compression processing is exemplified. In addition, from the viewpoint of leaving certain processability in the cut face, the density of the wood pieces is preferably 2.5 times or less as compared with the density before the compression processing. Here, the "compression processing so that the density of the wood piece is increased by 1.4 times or more as compared with the density before the compression processing" means, for example, when the density of a natural wood material before the compression processing is 0.400 g/cm³, compression processing so that the density thereof becomes 0.560 g/cm³ or more.

The compression processing of a wood material for obtaining the wood piece can be performed by, for example, the method described in JP-A-2017-19177. Specifically, the bark is peeled from a cut wood material having an outer peripheral face of a raw wood and a cut face substantially parallel to the axial direction of the raw wood, and then the peeled cut wood material is softened by steaming at 60°C to 150°C for about 30 minutes, or the like, and subsequently, a pressing force is applied to the softened cut wood material from the outer peripheral face side at a compression rate of 10% to 70% while heating, followed by cooling the cut wood material subjected to compression processing so as to fix the compressed shape, whereby a compressed wood material in which the cut wood material is subjected to compression processing can be obtained. Note that the compression rate of 70% refers to compression of a cut wood material with a thickness of 10 cm to a thickness of 3 cm. Further, by processing at a compression rate of 70%, the volume is decreased to 30%.

The wood piece can be obtained by molding the above-mentioned compressed wood material. The volume of the wood piece is such a volume that the wood piece that has sunk in the raw liquid for a seasoning is made to float up after being subjected to yeast fermentation, and is specifically less than 20 cm³, preferably 15 cm³ or less, and more preferably 10 cm³ or less. The lower limit of the volume of the wood piece is not particularly limited, but is, for example, such a volume that the wood piece in the raw liquid for a seasoning can be visually recognized, and is specifically about 8.0 mm³.

The density of the wood piece is not particularly limited as long as it is such a density that the wood piece sinks in the raw liquid for a seasoning, but is, for example, 0.6 g/cm³ or more, preferably 0.7 g/cm³ or more, and more preferably 0.75 g/cm³ or more. The upper limit of the density of the wood piece is not particularly limited, but is, for example, such a density that it is obtained by compressing a wood material before compression processing at a compression rate of 60%. Note that even if a wood material of the same type is subjected to compression processing at the same compression rate, the density can vary due to the density of the wood grain or the like.

The mass of the wood piece is determined from the volume and the density of the wood piece, and therefore is not particularly limited, but is, for example, about 0.01 to 20 g, preferably 0.5 to 15 g, and more preferably 5 to 10 g.

The wood piece may be one having been subjected to further processing in addition to the compression processing. The wood piece is preferably one from which an internal gas has been removed when it is put in the raw liquid for a seasoning. A method for removing the internal gas from the wood piece is not particularly limited, but for example, a method in which a generally known degassing means utilizing heating, decompression, ultrasonic waves, or the like is adopted, and the like are exemplified, however it is preferably a method of boiling for several minutes to about 10 minutes. At that time, when the boiling time becomes long, the wood piece is denatured, and therefore, it is not preferred.

The wood piece is preferably shaped by trimming the corners of the wood piece cut into a rectangular parallelepiped shape. Further, the wood piece of one aspect of the present invention may be provided with a hole portion passing therethrough at the center. By subjecting the wood piece of one aspect of the present invention to processing to increase the surface area such as trimming the corners or providing a hole portion passing therethrough at the center, incorporation of a gas is more facilitated during yeast fermentation, and the wood piece is more likely to float up.

The wood piece is not particularly limited as long as it is obtained from a tree to be generally subjected to wood processing, and is preferably derived from a tree of a plant selected from the group consisting of, for example, plants of the family *Taxodiaceae,* plants of the family *Rosaceae,* plants of the family *Fagaceae,* and plants of the family *Ulmaceae,* and is more preferably derived from a Japanese cedar, a Japanese cypress, a cherry tree, a camphor tree, a zelkova, a red oak, and a white oak, and further more preferably derived from a Japanese cedar, a Japanese cypress, and a cherry tree.

The shape of the wood piece can be appropriately set according to the shape of the container in which the raw liquid for a seasoning to be used is placed, the spout thereof, the amount of the raw liquid for a seasoning, or the like, and is not particularly limited, but examples thereof include a rectangular parallelepiped shape, a cubic shape, a spherical shape, and an indefinite shape with irregularities.

As a non-limiting specific mode of the wood piece for example, a wood piece having the following characteristics (1-1) to (1-4) is exemplified.
(1-1) the volume (cm³): 0.008 to 18
(1-2) the degree of compression processing: compression processing so that the density of the wood piece is increased by 1.25 to 2.5 times as compared with the density before the compression processing
(1-3) the density (g/cm³): 0.500 to 1.000
(1-4) the shape: a rectangular parallelepiped shape, a cubic shape, or a spherical shape

As a non-limiting specific mode of the wood piece for example, a wood piece having the following characteristics (2-1) to (2-4) is exemplified.
(2-1) the volume (cm³): 1 to 10
(2-2) the degree of compression processing: compression processing so that the density of the wood piece is increased by 1.4 to 2.0 times as compared with the density before the compression processing
(2-3) the density (g/cm³): 0.700 to 0.900
(2-4) the shape: a rectangular parallelepiped shape or a spherical shape

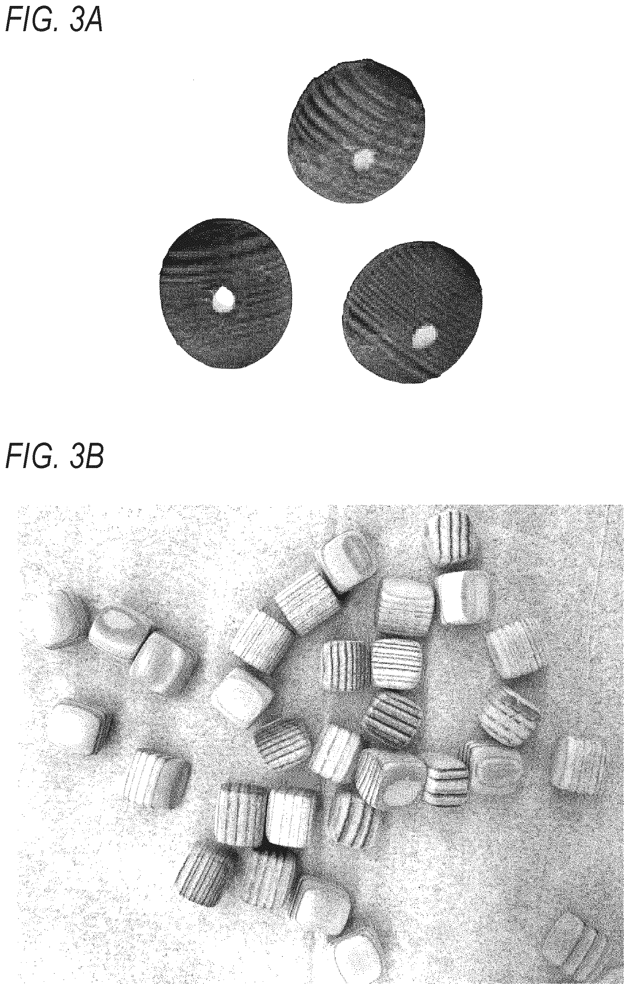

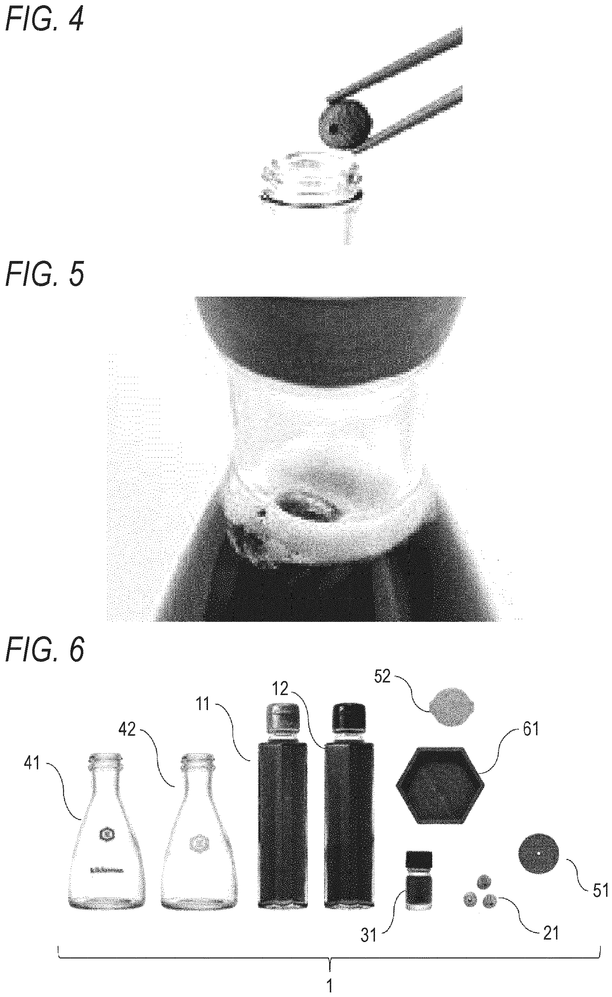

As a specific example of the wood piece a wood piece provided with a hole portion at the center is illustrated in FIG. 3A, and a wood piece obtained by cutting a wood material into a rectangular parallelepiped shape is illustrated in FIG. 3B. Further, in FIG. 4, a state where the wood piece held with chopsticks is put in a container in which the raw liquid for a seasoning has been placed is shown. In FIG. 5, a state where a container in which the wood piece and a raw liquid for a seasoning were placed was subjected to yeast fermentation, thereby generating a gas (bubble), so that the wood piece floated up in the vicinity of the liquid surface is shown.

The manufacturing method (2) of one aspect of the present invention is a method for manufacturing a seasoning utilizing the wood piece of one aspect of the present invention. Specifically, the manufacturing method (2) of one aspect of the present invention includes at least a step of putting the wood piece in the raw liquid for a seasoning, followed by performing yeast fermentation, and obtaining a seasoning using floating up of the wood piece as an index.

### 3. Kit of One Aspect (not Part of the Present Invention)

The kit includes at least a raw liquid for a seasoning to serve as an original liquid for a seasoning, a wood piece to serve as an index of yeast fermentation, a yeast-containing material for yeast fermentation, and a container for yeast fermentation for performing yeast fermentation by putting these therein.

### [3-1. Raw Liquid for Seasoning]

The raw liquid for a seasoning is a liquid material to be used for obtaining a seasoning. A specific example of the raw liquid for a seasoning included in the kit is the raw liquid for a seasoning of one aspect of the present invention. However, the raw liquid for a seasoning included in the kit is placed in the container for yeast fermentation together with the wood piece and the yeast-containing material, and is subjected to control of yeast fermentation using floating up of the wood piece as an index, and therefore, the color number of the raw liquid for a seasoning is 15 or more.

### [3-2. Wood Piece]

The wood piece is characterized by having been subjected to compression processing, and having a specific volume. A specific example of the wood piece included in the kit is the wood piece described above.

### [3-3. Yeast-Containing Material]

The yeast-containing material is a yeast itself or a material containing a yeast, and is specifically a yeast-containing material to be added so that a number of bacteria becomes 1.0 × 10³ bacteria/mL or more as a final concentration. The phrase "to be added so that a number of bacteria becomes 1.0 × 10³ bacteria/mL or more as a final concentration" means that it is added so that a number of bacteria becomes 1.0 × 10³ bacterium or more per volume (1 mL) of a member for yeast fermentation including the yeast-containing material and the raw liquid for a seasoning.

The yeast is not particularly limited as long as it can be generally used for yeast fermentation, and examples thereof include a soy sauce yeast that is generally used when manufacturing a soy sauce, and specific examples thereof include salt-tolerant yeasts such as *Zygosaccharomyces rouxii, Zygosaccharomyces bailii (Z. bailii), Candida etchellsii,* and *Candida versatilis (C. versatilis).*

The yeast-containing material can be dry yeast bacterium, wet yeast bacterium, a solid material containing a yeast, a liquid material in which a yeast is dissolved in a solution, or the like. A method for obtaining a solid material of the yeast-containing material is not particularly limited, but for example, a method including formulating only dry yeast bacterium or a mixture of dry yeast bacterium and another component such as an excipient into a tablet, a granule, a powder, or the like is exemplified. A method for obtaining a liquid material of the yeast-containing material is not particularly limited, but for example, it is obtained by a method including dissolving dry yeast bacterium or wet yeast bacterium in a solution that does not affect the viability of the yeast such as physiological saline, or the like.

The yeast-containing material may be a seasoning, which is obtained by yeast fermentation, and in which the yeast is not killed. Such a seasoning can be used, for example, as a "seed soy sauce" when the seasoning is a soy sauce.

The number of bacteria of the yeast in the yeast-containing material is not particularly limited as long as it is a number of bacteria of the yeast to be added so that the number of bacteria becomes 1.0 × 10³ bacteria/mL or more as a final concentration, and for example, when the yeast-containing material is a liquid material, it is a number of bacteria more than 1.0 × 10³ bacteria/mL, preferably 5.0 × 10³ bacteria/mL or more, more preferably 1.0 × 10⁴ bacteria/mL or more, and further more preferably 5.0 × 10⁴ bacteria/mL or more.

The final concentration of the yeast cells by adding the yeast-containing material is not particularly limited as long as it is 1.0 × 10³ bacteria/mL or more, but is, for example, a number of bacteria more than 1.0 × 10³ bacteria/mL, preferably 5.0 × 10³ bacteria/mL or more, more preferably 1.0 × 10⁴ bacteria/mL or more, and further more preferably about 1.0 × 10⁵ bacteria/mL to 1.0 × 10⁶ bacteria/mL.

### [3-4. Container for Yeast Fermentation]

The container for yeast fermentation is not particularly limited as long as it is a container capable of performing yeast fermentation by placing at least the raw liquid for a seasoning, the wood piece, and the yeast-containing material therein, and also capable of distinguishing sinking and floating up of the wood piece. It is preferred that the container for yeast fermentation has a height, a width, and a depth sufficient for the diameter of the wood piece, and is further transparent or clear so that the wood piece can be visually recognized. As a specific mode of the container for yeast fermentation, a soy sauce bottle (tabletop bottle) as generally known, etc. are exemplified, but it is not limited thereto.

The container for yeast fermentation is preferably provided with a cap. Further, it is preferred that there are two types of caps: a first cap for yeast fermentation; and a second cap including a pouring hole for pouring the seasoning in the container after the yeast fermentation. That is, it is preferred that the container for yeast fermentation is provided with two types of caps separately for during yeast fermentation or thereafter.

The first cap for yeast fermentation preferably has a hole portion with a diameter of 2 to 5 mm, preferably a diameter of about 3 mm passing therethrough at around the center for preventing excessive supply of oxygen while supplying oxygen into the container from the outside. The second cap including a pouring hole can be equivalent to a cap attached to an ordinary soy sauce bottle.

### [3-5. Container Base]

The kit preferably includes a container base for placing the container for yeast fermentation. The container base is not particularly limited as long as it includes a pedestal portion capable of placing the container for yeast fermentation.

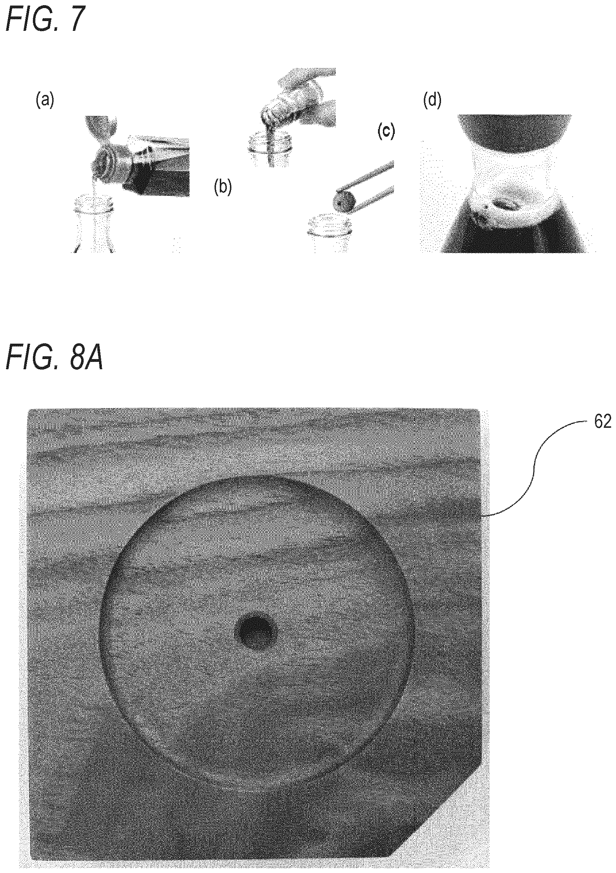

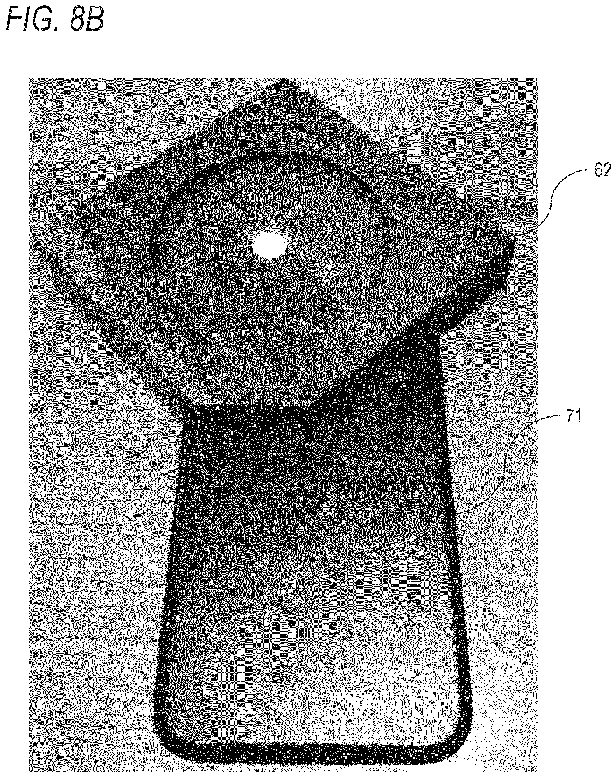

As a preferred mode of the container base, for example, a container base including, in addition to the pedestal portion, a hole portion provided passing through the pedestal portion so as to generate scattered light by irradiation with light from the bottom face of the container for yeast fermentation placed on the pedestal portion, and a light source housing portion capable of housing a light source for irradiating the bottom face of the container for yeast fermentation from the hole portion, and the like are exemplified. By using such a container base, by irradiation with light from the bottom face of the container for yeast fermentation, scattered light is generated in the liquid in the container, and the entire container mysteriously and gorgeously glitters, and therefore, the container for yeast fermentation during yeast fermentation can be utilized as a part of interior decoration. Further, by irradiation with light from the bottom face of the pedestal portion on which the container for yeast fermentation is placed, the visibility of the wood piece to be used for fermentation control can also be improved. As such a preferred mode of the container base, a container base capable of housing a light source in a lower part as illustrated in FIG. 8A and FIG. 8B is exemplified, but it is not limited thereto.

### [3-6. Method for Manufacturing Seasoning]

The manufacturing method (3) of one aspect of the present invention is a method for manufacturing a seasoning using the kit described above. That is, the manufacturing method (3) of one aspect of the present invention includes at least a step of subjecting a container for yeast fermentation, to which a raw liquid for a seasoning to serve as an original liquid for a seasoning, a yeast-containing material for yeast fermentation, and a wood piece to serve as an index of yeast fermentation have been added, to yeast fermentation, and obtaining a seasoning using floating up of the wood piece in the container as an index.

The order of adding the raw liquid for a seasoning, the wood piece, and the yeast-containing material to the container for yeast fermentation is not particularly limited, but it is preferred that after the raw liquid for a seasoning is added to the container for yeast fermentation, the yeast-containing material is added to the container, and then the wood piece is further added to the solution.

The container for yeast fermentation to which the raw liquid for a seasoning, the yeast-containing material, and the wood piece have been added is preferably subjected to yeast fermentation in a state of being covered with the first cap for yeast fermentation described above.

When a soy sauce is manufactured by the manufacturing method (3) of one aspect of the present invention using a soy sauce *moromi* soup as the raw liquid for a seasoning and using a seed soy sauce as the yeast-containing material, unlike a method for manufacturing a regular soy sauce, yeast fermentation is performed using only a liquid, and therefore, yeast fermentation can be simply performed in a state where the container is left to stand without performing stirring, aeration, or the like in the container.

Moreover, since the raw liquid for a seasoning is a soy sauce *moromi* soup in which most or whole of the insoluble solid content has been removed in advance, a material obtained after yeast fermentation is a yeast fermented liquid having a low solid content, and the material itself can be used as a liquid seasoning (soy sauce). In addition, it is not necessary to perform pressing or the like in a method for manufacturing a regular soy sauce, and therefore, fouling or generation of waste can be avoided, and moreover, the material can be used at any time even in the middle of fermentation, and a change in the seasoning due to a difference in the fermentation process can be enjoyed.

Unlike an ordinary soy sauce *moromi* having a high solid content, by using the raw liquid for a seasoning that is a liquid material, the process for manufacturing a seasoning can be simply confirmed using floating up of the wood piece as an index.

Then, a soy sauce to be obtained has a fresh fruity aroma that cannot be brought about by an ordinary manufacturing method, and is rich in palatability capable of enjoying a mellow aroma as if it were a wine. Therefore, the yeast fermented liquid is preferably used for cooking or in a cooked material as it is without heating or the like.

Further, for example, in the case where the raw liquid for a seasoning that is a soy sauce *moromi* soup is used, it has a color number of around 40 and is light brown, however, when it is used in the manufacturing method (3) of one aspect of the present invention, after 7 to 35 days from yeast fermentation, the color number is changed to around 18, and the color turns into dark brown. Then, although it had no aroma at the beginning, it begins to smell a fruity aroma according to the change in the color number.

The seasoning having a fruity aroma obtained by the manufacturing method (3) of one aspect of the present invention can be, for example,
a seasoning having an ethyl octanoate content of 10 ppb to 20,000 ppb;
a seasoning having an ethyl decanoate content of 10 ppb to 5,000 ppb; or
a seasoning having an ethyl octanoate content of 5 ppb to 10,000 ppb, and an ethyl decanoate content of 5 ppb to 2,000 ppb.

A specific example of the seasoning having a fruity aroma obtained by the manufacturing method (3) of one aspect of the present invention is a seasoning having an ethyl octanoate content of 5 ppb to 1,000 ppb, an ethyl decanoate content of 5 ppb to 1,000 ppb, a 2-ethyl-6-methylpyrazine content of 0 ppb to less than 10 ppb, and an HEMF content of 20 ppm to 200 ppm, or the like, but it is not limited thereto.

In the manufacturing methods (1) to (3) of one aspect of the present invention, various steps or operations can be added at the former stage or the latter stage of the above-mentioned step or in the step as long as the object of the present invention can be achieved.

### [3-7. Specific Mode of Kit and Manufacturing Method]

As a specific example of the kit, a kit 1 shown in FIG. 6 is exemplified. The kit 1 includes a first seasoning raw liquid-containing container 11 and a second seasoning raw liquid-containing container 12, each of which contains a raw liquid for a seasoning; a wood piece 21 to serve as an index of yeast fermentation; a seed soy sauce 31 containing a yeast; a first container for yeast fermentation 41 and a second container for yeast fermentation 42 for placing these therein and performing yeast fermentation; a first cap 51 for covering the container for yeast fermentation during yeast fermentation; a second cap 52 for covering the container for yeast fermentation after yeast fermentation; and a first container base for placing the container for yeast fermentation. Then, as a specific example of the manufacturing method (3) of one aspect of the present invention, a method for manufacturing a seasoning using the kit 1 is exemplified. Hereinafter, with reference to FIG. 7, the method for manufacturing a seasoning using the kit 1 will be described.

The raw liquid for a seasoning in the first seasoning raw liquid-containing container 11 is poured into the first container for yeast fermentation 41 (see FIG. 7(a)). At that time, in place of the first container for yeast fermentation 41, the second container for yeast fermentation 42 may be used. Subsequently, in the first container for yeast fermentation 41 into which the raw liquid for a seasoning has been poured, the seed soy sauce 31 and the wood piece 21 are sequentially placed (see FIGS. 7(b) and 7(c)). Subsequently, the first container for yeast fermentation 41 in which the raw liquid for a seasoning, the seed soy sauce 31, and the wood piece 21 have been placed, is covered with the first cap and placed on the first container base 61, and then left to stand at room temperature, thereby performing yeast fermentation. It is confirmed that yeast fermentation is appropriately performed, and a seasoning is produced by using floating up of the wood piece 21 as an index (see FIG. 7(d)) in about 1 week after yeast fermentation. The yeast fermentation is performed for about 1 to 4 weeks, and when the seasoning in the container is used during that period, the seasoning is poured out by replacing the first cap 51 with the second cap 52 on each occasion.

The color depth of the raw liquid for a seasoning in the first container for yeast fermentation 41 is gradually increased from a light color and the color turns into dark red as the yeast fermentation proceeds. Therefore, the first container for yeast fermentation 41 is placed on a second container base 62 as illustrated in FIG. 8A, a personal digital assistant (smartphone) with a light source or the like is placed in a light source housing portion provided in a lower part of the second container base 62 as illustrated in FIG. 8B, and the entire container is lightened by the light source from the bottom face of the first container for yeast fermentation 41, whereby the entire container aesthetically glitters dark red because an insoluble solid content is low in the raw liquid for a seasoning. Moreover, the dark red color changes day by day with the lapse of yeast fermentation, and therefore, the first container for yeast fermentation 41 during the yeast fermentation can be utilized as a part of interior decoration.

The raw liquids for a seasoning contained in the first seasoning raw liquid-containing container 11 and the second seasoning raw liquid-containing container 12 may be either the same or different. For example, when a raw liquid for a seasoning manufactured using soybeans produced in Hokkaido as a raw material is placed in the first seasoning raw liquid-containing container 11, and a raw liquid for a seasoning manufactured using soybeans produced in Niigata as a raw material is placed in the second seasoning raw liquid-containing container 12, two types of seasonings having different flavors can be obtained in the end.

### 4. Liquid Seasoning of One Aspect of the Present Invention

The liquid seasoning of one aspect of the present invention is a soy sauce or a soy sauce-like seasoning in which the content of ethyl octanoate, the content of ethyl decanoate, or the content of each of ethyl octanoate and ethyl decanoate is a predetermined amount. Specifically, the liquid seasoning (1-1) of a first aspect of the present invention is a soy sauce or a soy sauce-like seasoning in which the content of ethyl octanoate is a predetermined amount. The liquid seasoning (1-2) of a second aspect of the present invention is a soy sauce or a soy sauce-like seasoning in which the content of ethyl decanoate is a predetermined amount. The liquid seasoning (1-3) of a third aspect of the present invention is a soy sauce or a soy sauce-like seasoning in which the content of each of ethyl octanoate and ethyl decanoate is a predetermined amount.

The liquid seasoning of one aspect of the present invention is configured such that the content of ethyl octanoate, the content of ethyl decanoate, or the content of each of ethyl octanoate and ethyl decanoate is a predetermined amount, and therefore can be used for adjusting the taste of foods and drinks as a soy sauce or a soy sauce-like seasoning with a more excellent fruity aroma than a conventional soy sauce while having a flavor inherent in a soy sauce. As a result, by using the liquid seasoning of one aspect of the present invention, a seasoning or a food or drink having both a soy sauce flavor and a fruity aroma can be obtained.

The liquid seasoning of one aspect of the present invention is not particularly limited as long as it is a seasoning either of a soy sauce and a soy sauce-like seasoning, and is used for the purpose of adjusting the taste when processing a food material.

The content of ethyl octanoate in the liquid seasoning of the first aspect of the present invention is such an amount that the liquid seasoning has a fruity aroma. Specifically, the content of ethyl octanoate in the liquid seasoning (1-1) of the first aspect of the present invention is 10 ppb to 20,000 ppb, and from the viewpoint of having a more fruity aroma, it is preferably 20 ppb to 15,000 ppb, and more preferably 50 ppb to 10,000 ppb. However, when the content of ethyl octanoate is more than 20,000 ppb, the aroma is too strong and it smells unpleasant like petroleum, and the aroma of the entire liquid seasoning becomes unpleasant, and therefore, the upper limit of the content of ethyl octanoate is preferably an amount smaller than 20,000 ppb, that is, less than 20,000 ppb. The content of ethyl octanoate in the liquid seasoning (1-3) of the third aspect of the present invention is 5 ppb to 10,000 ppb, and from the viewpoint of having a more fruity aroma, it is preferably 10 ppb to 5,000 ppb, and more preferably 15 ppb to 1,000 ppb.

When the content of ethyl octanoate in the liquid seasoning is a smaller amount than the above-mentioned predetermined amount, it can be adjusted to the predetermined amount by adding ethyl octanoate or an ethyl octanoate-containing material to the liquid seasoning. The ethyl octanoate-containing material is not particularly limited as long as it can be measured as ethyl octanoate by the method described in the below-mentioned Example.

The content of ethyl decanoate in the liquid seasoning of the first aspect of the present invention is such an amount that the liquid seasoning has a fruity aroma. Specifically, the content of ethyl decanoate in the liquid seasoning (1-2) of the second aspect of the present invention is 10 ppb to 5,000 ppb, and from the viewpoint of having a more fruity aroma, it is preferably 20 ppb to 2,000 ppb, and more preferably 50 ppb to 1,000 ppb. However, when the content of ethyl decanoate is more than 5,000 ppb, the aroma is too strong and it smells unpleasant like petroleum, and the aroma of the entire liquid seasoning becomes unpleasant, and therefore, the upper limit of the content of ethyl decanoate is preferably an amount smaller than 5,000 ppb, that is, less than 5,000 ppb. The content of ethyl decanoate in the liquid seasoning (1-3) of the third aspect of the present invention is 5 ppb or more, and from the viewpoint of having a more fruity aroma, it is preferably 10 ppb to 2,000 ppb, more preferably 20 ppb to 1,500 ppb, and further more preferably 30 ppb to 1,000 ppb.

When the content of ethyl decanoate in the liquid seasoning is a smaller amount than the above-mentioned predetermined amount, it can be adjusted to the predetermined amount by adding ethyl decanoate or an ethyl decanoate-containing material to the liquid seasoning. The ethyl decanoate-containing material is not particularly limited as long as it can be measured as ethyl decanoate by the method described in the below-mentioned Example.

The liquid seasoning is configured such that the content of ethyl octanoate and/or ethyl decanoate is the above-mentioned amount, and therefore has a fruity aroma hardly noticeable in a conventional soy sauce. On the other hand, the fruity aroma derived from ethyl octanoate and/or ethyl decanoate can be masked by 2-ethyl-6-methylpyrazine intrinsically contained in a conventional soy sauce. Therefore, the content of 2-ethyl-6-methylpyrazine in the liquid seasoning is, for example, such an amount that the fruity aroma derived from ethyl octanoate and/or ethyl decanoate is not suppressed, and is preferably 50 ppb or less, more preferably 20 ppb or less, further more preferably 10 ppb or less, and still further more preferably 5 ppb or less. The lower limit of the content of 2-ethyl-6-methylpyrazine in the liquid seasoning is not particularly limited, but may be less than the lower detection limit, that is, may be substantially 0 ppb.

The liquid seasoning is characterized by having a flavor inherent in a soy sauce due to HEMF or the like by containing a soy sauce component while having a fruity aroma. Therefore, the content of HEMF in the liquid seasoning is preferably 20 ppm or more, more preferably 30 ppm or more, and further more preferably 40 ppm or more. The upper limit of the content of HEMF may be appropriately set according to a desired flavor inherent in a soy sauce, and is typically about 200 ppm.

The contents of ethyl octanoate, ethyl decanoate, 2-ethyl-6-methylpyrazine, and HEMF in the liquid seasoning can be measured by the method described in the below-mentioned Example. Therefore, the contents of ethyl octanoate, ethyl decanoate, 2-ethyl-6-methylpyrazine, and HEMF described above are values obtained by measurement using the method described in the below-mentioned Example. Note that for 2-ethyl-6-methylpyrazine and HEMF, a peak area is determined using the following m/z.
2-ethyl-6-methylpyrazine: m/z: 121
HEMF: m/z: 142

A method for manufacturing the liquid seasoning of one aspect of the present invention is not particularly limited as long as it is a method capable of obtaining a liquid seasoning in which the content of ethyl octanoate and/or ethyl decanoate is a predetermined amount.

The liquid seasoning of one aspect of the present invention can be manufactured by, for example, mixing a commercially available soy sauce with ethyl octanoate and/or ethyl decanoate.

The method for manufacturing the liquid seasoning is not particularly limited as long as it is a method capable of obtaining a liquid seasoning in which the content of ethyl octanoate, the content of ethyl decanoate, or the like is a predetermined amount. The liquid seasoning can be manufactured by, for example, a method including subjecting a soy sauce *moromi* obtained after performing lactic acid fermentation through a method for manufacturing a regular soy sauce to solid-liquid separation, and further treating a liquid part with a UF membrane, thereby obtaining a soy sauce *moromi* soup, and subsequently subjecting the soy sauce *moromi* soup to yeast fermentation using a soy sauce yeast, or the like. The method includes separating a soy sauce *moromi* into an insoluble solid part (soy sauce *moromi* concentrate) and a liquid part (soy sauce *moromi* soup) before it is subjected to yeast fermentation, and subsequently performing yeast fermentation for the soy sauce *moromi* soup without continuously subjecting a soy sauce *moromi* after lactic acid fermentation to yeast fermentation unlike a method for manufacturing a regular soy sauce. Therefore, the method includes at least a step of obtaining a soy sauce *moromi,* a step of obtaining a soy sauce *moromi* soup, and a step of performing yeast fermentation. The thus obtained liquid seasoning can be, for example, (i) a liquid seasoning in which the content of ethyl octanoate is 10 ppb to 20,000 ppb, (ii) a liquid seasoning in which the content of ethyl decanoate is 10 ppb to 5,000 ppb, or (iii) a liquid seasoning in which the content of ethyl octanoate is 5 ppb to 10,000 ppb and the content of ethyl decanoate is 5 ppb to 2,000 ppb.

The step of obtaining a soy sauce *moromi* is not particularly limited as long as it is a step until a soy sauce *moromi* is obtained in a method for manufacturing a soy sauce as generally known. Note that a soy sauce is manufactured by obtaining a soy sauce *koji* by inoculating a seed *koji* starter including a *koji* mold into a mixture of a protein raw material such as soybeans denatured by heating and a starch raw material such as wheat pregelatinized by heating, followed by culturing to make a *koji,* and subsequently obtaining a soy sauce *moromi* by putting the obtained soy sauce *koji* into a saline solution, followed by lactic acid fermentation and aging, and subsequently obtaining an aged *moromi* by subjecting the obtained soy sauce *moromi* to yeast fermentation and aging, and subsequently obtaining an unheated soy sauce by subjecting the obtained aged *moromi* to a pressing treatment or a filtration treatment, and subsequently heating the obtained unheated soy sauce, etc. in the case of a brewing process.

As one aspect of the step of obtaining a soy sauce *moromi,* for example, a step of obtaining a soy sauce *koji* by inoculating a seed *koji* starter into a soy sauce raw material that is soybeans denatured by steaming or a mixture of soybeans denatured by steaming, roasted crushed cereal grains, and the like, and performing *koji* making with aeration at 20 to 40°C for about 2 to 4 days, and subsequently subjecting a material obtained by putting the soy sauce *koji* into a saline solution prepared by adding dietary sodium chloride to water so that the sodium chloride concentration is 20 to 30% (w/v), and further arbitrarily adding a soy sauce lactic acid bacterium thereto to lactic acid fermentation and aging at 15 to 40°C for 10 to 200 days, preferably for 15 to 40 days while appropriately stirring, thereby obtaining a soy sauce *moromi,* or the like is exemplified.

The soy sauce raw material is not particularly limited, but examples thereof include soybeans such as whole soybeans and defatted soybeans, cereal grains such as wheat, barley, naked barley, and Job's tears, cereal grain gluten, rice, and corn.

The seed *koji* starter is not particularly limited as long as it is a *koji* mold that is generally utilized when manufacturing a soy sauce, and examples thereof include *Aspergillus oryzae* and *Aspergillus sojae.* The soy sauce lactic acid bacterium is not particularly limited as long as it is a soy sauce lactic acid bacterium that is generally utilized when manufacturing a soy sauce, and examples thereof include salt-tolerant lactic acid bacteria such as *Tetragenococcus halophilus.*

In the step of obtaining a soy sauce *moromi,* when the amount of the starch raw material such as wheat or rice is small in the soy sauce raw material, the content of a reducing sugar becomes small, and a soy sauce *moromi* with which yeast fermentation can be appropriately performed may not be able to be obtained. Therefore, it is preferred that the amount of the starch raw material such as wheat or rice in the soy sauce raw material is such an amount that a soy sauce *moromi* having a high reducing sugar content can be obtained. However, this shall not apply when a soy sauce *moromi* having a high reducing sugar content is obtained by adding a reducing sugar component, for example, glucose, fructose, maltose, table sugar, a sweet sake, or the like to a soy sauce *moromi.* That is, in the soy sauce *koji,* an adjusted soy sauce *koji* adjusted by adding a reducing sugar component after obtaining a soy sauce *koji* having a high total nitrogen content by inoculating a seed *koji* starter into a protein raw material such as soybeans to make a *koji* is included.

In the step of obtaining a soy sauce *moromi* soup, a soy sauce *moromi* soup is obtained by a solid-liquid separation treatment for removing an insoluble solid content derived from a soy sauce raw material such as soybeans or wheat from a soy sauce *moromi* (lactic acid fermented product) containing the insoluble solid content and/or a pasteurization treatment for removing a microorganism. A method for obtaining a soy sauce *moromi* soup from a soy sauce *moromi* is not particularly limited, but for example, a solid-liquid separation method and a pasteurization method that are generally known, and the like are exemplified, and specifically, a pressing treatment and a filtration treatment that are generally used in a method for manufacturing a soy sauce, and the like are exemplified, and more specifically, a pressing filtration treatment with a press machine using a filter cloth, a membrane filtration treatment using a filter medium such as diatomaceous earth or various permeable membranes such as a UF membrane and an MF membrane, a heating treatment of increasing the temperature until a microorganism is killed, and the like are exemplified. At that time, the soy sauce lactic acid bacterium is left in a large amount in the soy sauce *moromi* soup, yeast fermentation may not be appropriately performed. Therefore, when obtaining the soy sauce *moromi* soup, it is preferred to adopt a method capable of removing most of the soy sauce lactic acid bacterium together with the insoluble solid content. The content of the lactic acid bacterium in the soy sauce *moromi* soup is not particularly limited, but is, for example, preferably 1.0 × 10⁸ bacteria/mL or less, more preferably 1.0 × 10⁷ bacteria/mL or less, and further more preferably 1.0 × 10⁶ bacteria/mL or less.

In the step of performing yeast fermentation, yeast fermentation of an ordinary method is performed for the soy sauce *moromi* soup using a soy sauce yeast that is used when manufacturing a soy sauce as generally known under a condition according to the type of the soy sauce yeast, a number of bacteria, or the like. The soy sauce yeast is not particularly limited as long as it is a yeast to be generally used when manufacturing a soy sauce, and examples thereof include salt-tolerant yeasts such as *Zygosaccharomyces rouxii, Zygosaccharomyces bailii* (*Z. bailii*)*, Candida etchellsii,* and *Candida versatilis* (*C. versatilis*)*.*

The period of the yeast fermentation is not particularly limited as long as it is a period in which the content of each of ethyl octanoate, ethyl decanoate, and the like in the fermented liquid becomes a predetermined amount, and for example, when *Zygosaccharomyces rouxii* is used as the soy sauce yeast, it is about 10 to 100 days, preferably about 14 to 60 days, and more preferably about 45 days at 15 to 30°C. Further, the period of the yeast fermentation is preferably a period in which the production amount of ethanol reaches the maximum.

Note that the step of performing yeast fermentation can be simply performed by, for example, placing the soy sauce *moromi* soup and the soy sauce yeast in a soy sauce bottle that is suitable for yeast fermentation and is capable of using the fermented liquid immediately after yeast fermentation, and then leaving the bottle to stand at room temperature, thereby performing yeast fermentation, or the like.

In the step of performing yeast fermentation, the soy sauce *moromi* soup in which the insoluble solid content has been removed in advance is used, and therefore, a material obtained after the yeast fermentation is a yeast fermented liquid having a low solid content, and the yeast fermented liquid itself may be used as a liquid seasoning. Further, for the purpose of removing the yeast or a residue present in the yeast fermented liquid, or the like, the yeast fermented liquid is subjected to a treatment or the like at the latter stage of the yeast fermentation to be used in a method for manufacturing a regular soy sauce such as pressing, filtration, heating, or sediment removal, and the obtained liquid part may be used as the liquid seasoning.

In the liquid seasoning of one aspect of the present invention, the content of each of ethyl octanoate, ethyl decanoate, and the like may be a predetermined amount, and various other components can be contained as long as they do not prevent the object of the present invention from being achieved. The other components are not particularly limited, but examples thereof include seasoning components and food materials, and specific examples thereof include vegetable components (radish, carrot, onion, potato, garlic, etc.), meat (beef, pork, chicken, etc.), fish, yeast extracts, meat extracts (chicken extract, pork extract, beef extract, fish meat extract, etc.), fruit juices (apple juice, etc.), spices (ginger, red pepper, pepper, basil, oregano, etc.), chemical seasonings (monosodium glutamate, disodium inosinate, etc.), and flavors, and among these, one type can be used alone or two or more types can be used in combination. The content of such other components can be appropriately set as long as the object of the present invention can be achieved.

The liquid seasoning of one aspect of the present invention can be formed into a container-packed liquid seasoning in which it is packed and sealed in a container, that is, a container-packed soy sauce or a container-packed soy sauce-like seasoning. The container is not particularly limited, but examples thereof include packaging containers such as a single-layer or laminate film bag, a retort pouch, a vacuum pack, an aluminum container, a plastic container, a bottle, and a can made of a metal such as aluminum, a paper, a plastic such as PET or PTP, a glass, or the like. The container-packed soy sauce and the container-packed soy sauce-like seasoning can be distributed and sold in the market independently by itself.

The liquid seasoning of one aspect of the present invention can be used in the same manner as an ordinary liquid seasoning. That is, the liquid seasoning of one aspect of the present invention can be used alone or by mixing or combining with another seasoning component such as a soup stock, an acidulant, an amino acid, a nucleic acid, an organic acid, a protein hydrolysate, a sugar, a sake, a sweet sake, an alcohol, a thickener, an emulsifier, or an inorganic salt in addition to a vegetable component, meat, fish, a yeast extract, a meat extract, a fruit juice, a spice, a chemical seasoning, or a flavor described above for cooking various food materials or for a processing method therefor. For example, the liquid seasoning of one aspect of the present invention can be used for various foods such as Japanese foods, Western foods, and Chinese foods, and specifically, can be used for deep-fried foods, grilled slices of meat, udon, soba, ramen, Hamburg steak, meatballs, simmered chicken and root vegetables, stewed meat and potatoes, teriyaki, curry, stew, hashed beef, etc., but it is not limited thereto.

As a non-limiting specific mode of the liquid seasoning of one aspect of the present invention, for example, a liquid seasoning in which the content of ethyl octanoate is as the following (1-1) is exemplified.
(1-1) the content of ethyl octanoate: 20 ppb to 10,000 ppb

As a non-limiting specific mode of the liquid seasoning of one aspect of the present invention, for example, a liquid seasoning in which the content of ethyl decanoate is as the following (2-1) is exemplified.
(2-1) the content of ethyl decanoate: 20 ppb to 2,000 ppb

As a non-limiting specific mode of the liquid seasoning of one aspect of the present invention, for example, a liquid seasoning in which the content of ethyl octanoate and the content of ethyl decanoate are as the following (1-2) and (2-2), respectively, is exemplified.
(1-2) the content of ethyl octanoate: 5 ppb to 1,000 ppb
(2-2) the content of ethyl decanoate: 5 ppb to 1,000 ppb

As a non-limiting specific mode of the liquid seasoning of one aspect of the present invention, for example, a liquid seasoning in which the content of ethyl octanoate, the content of ethyl decanoate, and the content of 2-ethyl-6-methylpyrazine are as the following (1-3), (2-3), and (3-3), respectively, is exemplified.
(1-3) the content of ethyl octanoate: 5 ppb to 1,000 ppb
(2-3) the content of ethyl decanoate: 5 ppb to 1,000 ppb
(3-3) the content of 2-ethyl-6-methylpyrazine: 0 ppb to less than 10 ppb

As a non-limiting specific mode of the liquid seasoning of one aspect of the present invention, for example, a liquid seasoning in which the content of ethyl octanoate, the content of ethyl decanoate, the content of 2-ethyl-6-methylpyrazine, and the content of HEMF are as the following (1-4), (2-4), (3-4), and (4-4), respectively, is exemplified.
(1-4) the content of ethyl octanoate: 5 ppb to 1,000 ppb
(2-4) the content of ethyl decanoate: 5 ppb to 1,000 ppb
(3-4) the content of 2-ethyl-6-methylpyrazine: 0 ppb to less than 10 ppb
(4-4) the content of HEMF: 20 ppm to 200 ppm

### 5. Liquid Rich Seasoning of One Aspect of the Present Invention

Among the liquid seasonings of one aspect of the present invention, a rich one is referred to as a liquid rich seasoning. That is, a liquid rich seasoning of one aspect of the present invention is configured such that the total nitrogen content and the content of 4-hydroxy-2 (or 5)-ethyl-5 (or 2)-methyl-3(2H)-furanone (homofuraneol; HEMF) are adjusted to predetermined amounts, and therefore has an especially excellent flavor inherent in a soy sauce while having *umami.* Accordingly, the liquid rich seasonings of one aspect of the present invention can be used for adjusting the taste of foods and drinks as a rich soy sauce and a rich soy sauce seasoning.

The liquid rich seasoning of one aspect of the present invention is not particularly limited as long as it is a seasoning either of a rich soy sauce and a rich soy sauce seasoning, and is used for the purpose of adjusting the taste when processing a food material.

The amount of the total nitrogen content in the liquid rich seasoning is such an amount that *umami* is perceived more in the liquid rich seasoning than in a commercially available unheated soy sauce. Specifically, the amount of the total nitrogen content in the liquid rich seasoning is 1.8 wt% or more, and from the viewpoint that more *umami* is perceived, it is preferably 1.9 wt% or more, and more preferably 2.0 wt% or more. The upper limit of the total nitrogen content may be appropriately set according to a desired flavor inherent in a soy sauce and is not particularly limited, but is typically about 4 wt%.

The content of HEMF in the liquid rich seasoning is such an amount that a flavor inherent in a soy sauce is perceived more in the liquid rich seasoning than in a commercially available unheated soy sauce. Specifically, the content of HEMF in the liquid rich seasoning is 60 ppm or more, and from the viewpoint that a more flavor inherent in a soy sauce is perceived, it is preferably 70 ppm or more, more preferably 80 ppm or more, and further more preferably 90 ppm or more. The upper limit of the content of HEMF may be appropriately set according to a desired flavor inherent in a soy sauce and is not particularly limited, but is typically about 200 ppm.

HEMF in the liquid rich seasoning is not externally added to a soy sauce manufactured by a brewing process, but is preferably HEMF to be produced in the process for manufacturing a soy sauce by a brewing process. That is, it is preferred that HEMF in the liquid rich seasoning is one that is not added as HEMF in the form of a purified product or an HEMF-containing material.

The liquid rich seasoning of one aspect of the present invention is not particularly limited as long as the amounts of the total nitrogen content and HEMF are the above-mentioned amounts, but, for example, from the viewpoint that they may affect the taste or aroma of the liquid rich seasoning, it is preferably configured such that the amounts of a reducing sugar, ethyl decanoate, ethyl octanoate, 2-ethyl-6-methylpyrazine, and the like are predetermined amounts.

The content of a reducing sugar in the liquid rich seasoning is preferably an amount larger than 3.0 wt% that is the amount of a reducing sugar in a commercially available unheated soy sauce, and from the viewpoint that the liquid rich seasoning can be made to have smooth *koku* attribute and rich sweetness, it is more preferably 4.0 wt% or more, further more preferably 6.0 wt% or more, still further more preferably 7.0 wt% or more, and particularly preferably 8.0 wt% or more. The upper limit of the content of a reducing sugar is not particularly limited, but in consideration of the sweetness or energy of the liquid rich seasoning, it is typically about 20 wt%.

The content of ethyl decanoate in the liquid rich seasoning is preferably such an amount that the liquid rich seasoning has a fruity aroma, and from the viewpoint of having a more fruity aroma, it is more preferably 10 ppb to 2,000 ppb, and further more preferably 50 ppb to 1,000 ppb. However, when the content of ethyl decanoate is more than 5,000 ppb, the aroma is too strong and it smells unpleasant like petroleum, and the aroma of the entire liquid rich seasoning tends to become unpleasant.

The content of ethyl octanoate in the liquid rich seasoning is preferably such an amount that the liquid rich seasoning has a fruity aroma, and from the viewpoint of having a more fruity aroma, it is more preferably 10 ppb to 10,000 ppb, and further more preferably 50 ppb to 10,000 ppb. However, when the content of ethyl octanoate is more than 20,000 ppb, the aroma is too strong and it smells unpleasant like petroleum, and the aroma of the entire liquid rich seasoning tends to become unpleasant.

When the liquid rich seasoning contains both ethyl decanoate and ethyl octanoate, the amount of the lower limit of each component can be further decreased. The contents of ethyl decanoate and ethyl octanoate in the liquid rich seasoning in such a case are preferably 5 ppb to 2,000 ppb and 5 ppb to 10,000 ppb, respectively, and from the viewpoint of having a more fruity aroma, they are more preferably 20 ppb to 1,500 ppb and 10 ppb to 5,000 ppb, respectively, and further more preferably 30 ppb to 1,000 ppb and 15 ppb to 1,000 ppb, respectively.

Incidentally, the liquid rich seasoning containing ethyl decanoate and ethyl octanoate in amounts within the respective preferred ranges is a preferred one having a fruity aroma, and an unpleasant odor is not perceived. Therefore, as a specific aspect of the liquid rich seasoning, a liquid rich seasoning having an ethyl decanoate content of 2,000 ppb and an ethyl octanoate content of 10,000 ppb is exemplified.

Since the liquid rich seasoning contains ethyl decanoate and/or ethyl octanoate, particularly, the content of ethyl decanoate and/or ethyl octanoate is the above-mentioned amount, the liquid rich seasoning has a fruity aroma hardly noticeable in a conventional soy sauce. On the other hand, the fruity aroma derived from ethyl decanoate and/or ethyl octanoate can be masked by 2-ethyl-6-methylpyrazine intrinsically contained in a conventional soy sauce. Therefore, the content of 2-ethyl-6-methylpyrazine in the liquid rich seasoning is, for example, such an amount that the fruity aroma derived from ethyl decanoate and/or ethyl octanoate is not suppressed, and is preferably 50 ppb or less, more preferably 20 ppb or less, further more preferably less than 10 ppb, and still further more preferably 5 ppb or less. The lower limit of the content of 2-ethyl-6-methylpyrazine in the liquid rich seasoning is not particularly limited, but may be less than the lower detection limit, that is, may be substantially 0 ppb.

The total nitrogen content, and the contents of HEMF, a reducing sugar, ethyl decanoate, ethyl octanoate, and 2-ethyl-6-methylpyrazine in the liquid rich seasoning can be measured by the method described in the below-mentioned Example. Therefore, the total nitrogen content, and the contents of HEMF, a reducing sugar, ethyl decanoate, ethyl octanoate, and 2-ethyl-6-methylpyrazine described above are values obtained by measurement using the method described in the below-mentioned Example.

A method for manufacturing a liquid rich seasoning is not particularly limited as long as it is a method capable of obtaining a liquid rich seasoning that can achieve the object of the present invention, specifically, a method capable of obtaining a liquid rich seasoning in which the total nitrogen content and the content of HEMF are predetermined amounts, preferably a liquid rich seasoning in which the total nitrogen content and the content of HEMF are predetermined amounts, and the content of a reducing sugar, ethyl decanoate, ethyl octanoate, and/or 2-ethyl-6-methylpyrazine is a predetermined amount.

Another aspect of the present invention is a method for manufacturing a liquid rich seasoning, that is, a method for manufacturing a rich soy sauce and a rich soy sauce seasoning. By the method for manufacturing a liquid rich seasoning of one aspect of the present invention, the liquid rich seasoning of one aspect of the present invention can be manufactured. The method for manufacturing a liquid rich seasoning of one aspect of the present invention is broadly divided into two according to the steps included.

The method for manufacturing a liquid rich seasoning of a first aspect of the present invention includes at least a step of obtaining a first soy sauce *moromi* soup by subjecting a first soy sauce *moromi* obtained by subjecting a soy sauce *koji* and a saline solution to a mixing treatment to a solid-liquid separation treatment and a pasteurization treatment, a step of obtaining a second soy sauce *moromi* by subjecting the first soy sauce *moromi* soup, a soy sauce *koji,* and dietary sodium chloride to a mixing treatment, a step of obtaining a second soy sauce *moromi* soup by subjecting the second soy sauce *moromi* to a solid-liquid separation treatment or a solid-liquid separation treatment and a pasteurization treatment, and a step of obtaining a rich soy sauce or a rich soy sauce seasoning in which the total nitrogen content and the content of HEMF are predetermined amounts by subjecting the second soy sauce *moromi* soup to yeast fermentation using a soy sauce yeast.

In the method for manufacturing a liquid rich seasoning of the first aspect of the present invention, a first soy sauce *moromi* after lactic acid fermentation is not continuously subjected to yeast fermentation unlike a method for manufacturing a regular soy sauce, the method includes separating a soy sauce *moromi* into an insoluble solid part (a first soy sauce *moromi* concentrate) and a liquid part (a first soy sauce *moromi* soup) so as to remove the microorganism before it is subjected to yeast fermentation, subsequently separating a second soy sauce *moromi* obtained by promoting an action of a soy sauce *koji* using the first soy sauce *moromi* soup as brewing water into an insoluble solid part (a second soy sauce *moromi* concentrate) and a liquid part (a second soy sauce *moromi* soup), and performing yeast fermentation of the second soy sauce *moromi* soup. Therefore, the method includes at least a step of obtaining a first soy sauce *moromi* soup from a first soy sauce *moromi,* a step of obtaining a second soy sauce *moromi,* a step of obtaining a second soy sauce *moromi* soup, and a step of performing yeast fermentation. The thus obtained liquid rich seasoning can be, for example, a liquid rich seasoning in which the total nitrogen content is 1.8 wt% or more and the content of HEMF is 60 ppm or more. In the present description, for convenience, the step of obtaining a first soy sauce *moromi* corresponding to the former stage of the step of obtaining a first soy sauce *moromi* soup from the first soy sauce *moromi* will be also described. The method of the first aspect of the present invention may or may not include the step of obtaining a first soy sauce *moromi.*

The step of obtaining a first soy sauce *moromi* is not particularly limited as long as it is a step until a soy sauce *moromi* is obtained in a method for manufacturing a soy sauce as generally known. Note that a soy sauce is manufactured by obtaining a soy sauce *koji* by inoculating a seed *koji* starter including a *koji* mold into a mixture of a protein raw material such as soybeans denatured by heating and a starch raw material such as wheat pregelatinized by heating, followed by culturing to make a *koji,* and subsequently obtaining a soy sauce *moromi* by putting the obtained soy sauce *koji* into a saline solution, followed by lactic acid fermentation and aging, and subsequently obtaining an aged *moromi* by subjecting the obtained soy sauce *moromi* to yeast fermentation and aging, and subsequently obtaining an unheated soy sauce by subjecting the obtained aged *moromi* to a pressing treatment or a filtration treatment, and subsequently heating the obtained unheated soy sauce, etc. in the case of a brewing process.

As one aspect of the step of obtaining a first soy sauce *moromi,* for example, a step of obtaining a soy sauce *koji* by inoculating a seed *koji* starter into a soy sauce raw material that is soybeans denatured by steaming or a mixture of soybeans denatured by steaming, roasted crushed cereal grains, and the like, and performing *koji* making with aeration at 20 to 40°C for about 2 to 4 days, and subsequently subjecting a material obtained by putting the soy sauce *koji* into a saline solution prepared by adding dietary sodium chloride to water so that the sodium chloride concentration is 20 to 30% (w/v), and further arbitrarily adding a soy sauce lactic acid bacterium thereto to a mixing treatment under conditions of 15 to 40°C for 10 to 200 days, preferably for 15 to 40 days while appropriately stirring, thereby obtaining a soy sauce *moromi,* or the like is exemplified. In this mixing treatment, an action of a soy sauce *koji* and lactic acid fermentation by a soy sauce lactic acid bacterium can occur. Note that in the mixing treatment in the step of obtaining a first soy sauce *moromi,* it is preferred to add a soy sauce lactic acid bacterium.

The soy sauce raw material is not particularly limited, but examples thereof include soybeans such as whole soybeans and defatted soybeans, cereal grains such as wheat, barley, naked barley, and Job's tears, cereal grain gluten, rice, and corn.

The *koji* mold is not particularly limited as long as it is a *koji* mold that is generally utilized when manufacturing a soy sauce, and examples thereof include *Aspergillus oryzae* and *Aspergillus sojae.* The soy sauce lactic acid bacterium is not particularly limited as long as it is a soy sauce lactic acid bacterium that is generally utilized when manufacturing a soy sauce, and examples thereof include salt-tolerant lactic acid bacteria such as *Tetragenococcus halophilus.*

In the step of obtaining a first soy sauce *moromi,* when the amount of the starch raw material such as wheat or rice is small in the soy sauce raw material, the content of a reducing sugar becomes small, and a soy sauce *moromi* with which yeast fermentation can be appropriately performed may not be able to be obtained. Therefore, it is preferred that the amount of the starch raw material such as wheat or rice in the soy sauce raw material is such an amount that a soy sauce *moromi* having a high reducing sugar content can be obtained. However, this shall not apply when a soy sauce *moromi* having a high reducing sugar content is obtained by adding a reducing sugar component, for example, glucose, fructose, maltose, table sugar, a sweet sake, or the like to a soy sauce *moromi.* That is, in the soy sauce *koji,* an adjusted soy sauce *koji* adjusted by adding a reducing sugar component after obtaining a soy sauce *koji* having a high total nitrogen content by inoculating a seed *koji* starter into a protein raw material such as soybeans to make a *koji* is included.

In the step of obtaining a first soy sauce *moromi* soup, a first soy sauce *moromi* soup is obtained by a solid-liquid separation treatment for removing an insoluble solid content derived from a soy sauce raw material such as soybeans or wheat from a first soy sauce *moromi* containing the insoluble solid content and a pasteurization treatment for removing a microorganism from the first soy sauce *moromi.* The solid-liquid separation treatment for removing an insoluble solid content from the first soy sauce *moromi* is not particularly limited, but for example, a generally known solid-liquid separation method, and the like are exemplified, and specifically, a pressing treatment and a filtration treatment that are generally used in a method for manufacturing a soy sauce, and the like are exemplified, and more specifically, a pressing filtration treatment with a press machine using a filter cloth, a membrane filtration treatment using various permeable membranes such as a UF membrane and an MF membrane, and the like are exemplified. In the solid-liquid separation treatment, one type of the above-mentioned treatments or methods can be used alone or two or more types thereof can be used in combination.

The pasteurization treatment for removing a microorganism from the first soy sauce *moromi* is not particularly limited, but specifically, a filtration treatment using a filter medium such as diatomaceous earth or various permeable membranes such as a UF membrane to be used when removing a microorganism, a heating treatment of increasing the temperature until a microorganism is killed, and the like are exemplified. In the pasteurization treatment, one type of the above-mentioned treatments or methods can be used alone or two or more types thereof can be used in combination. Note that the pasteurization treatment can be a treatment for killing a microorganism present in the system without removing it out of the system, in addition to the treatment for removing a microorganism out of the system. The microorganism to be mainly removed in the pasteurization treatment is a yeast, but is not limited thereto.

Incidentally, when a filtration treatment using a membrane through which a microorganism does not permeate is utilized in the solid-liquid separation, it can serve as both the solid-liquid separation treatment and the pasteurization treatment simultaneously. Therefore, the solid-liquid separation treatment and the pasteurization treatment in the step of obtaining a first soy sauce *moromi* soup may be performed as individual separate treatments, or may be performed as one integrated treatment. Further, the order of the solid-liquid separation treatment and the pasteurization treatment is not limited and either may be performed first, however, it is preferred that a liquid part obtained after performing the solid-liquid separation treatment is subjected to the pasteurization treatment.

The amount of the microorganism in the first soy sauce *moromi* soup is not particularly limited as long as it is such an amount that yeast fermentation does not occur in the step of obtaining a second soy sauce *moromi* at the latter stage, but for example, the yeast count in the first soy sauce *moromi* soup is preferably 1.0 × 10³ bacteria/mL or less, more preferably 1.0 × 10² bacteria/mL or less, and further more preferably 1.0 × 10¹ bacteria/mL or less.

In the step of obtaining a first soy sauce *moromi* soup, it is preferred to remove an oil content in addition to an insoluble solid content and a microorganism from the first soy sauce *moromi.* For example, an insoluble solid content, a microorganism, and an oil content can be removed from the first soy sauce *moromi* by subjecting a pressed liquid obtained by subjecting the first soy sauce *moromi* to a pressing treatment to a filtration treatment using diatomaceous earth once or twice or more.

The step of obtaining a second soy sauce *moromi* is performed in the same manner as the step of obtaining a first soy sauce *moromi* except that the first soy sauce *moromi* soup is used as brewing water in place of water. However, it is preferred that a soy sauce lactic acid bacterium is not added in the step of obtaining a second soy sauce *moromi.*

The step of obtaining a second soy sauce *moromi* soup is performed in the same manner as the step of obtaining a first soy sauce *moromi* soup. However, in the step of obtaining a second soy sauce *moromi* soup, the second soy sauce *moromi* may be subjected to a solid-liquid separation treatment, and it is not necessary to perform a pasteurization treatment, but it is preferred that the second soy sauce *moromi* is subjected to a solid-liquid separation treatment and a pasteurization treatment. A liquid rich seasoning obtained by performing yeast fermentation at the latter stage may have an unpleasant odor such as a natto odor, and therefore, it is preferred that in the second soy sauce *moromi* soup, the content of isobutyric acid is 20 ppm or less, the content of isovaleric acid is 20 ppm or less, or the content of each of isobutyric acid and isovaleric acid is 20 ppm or less.

In the step of performing yeast fermentation, yeast fermentation of an ordinary method is performed for the second soy sauce *moromi* soup using a soy sauce yeast to be used when manufacturing a soy sauce as generally known under a condition according to the type of the soy sauce yeast, a number of bacteria, or the like. The soy sauce yeast is not particularly limited as long as it is a yeast that is generally used when manufacturing a soy sauce, and examples thereof include salt-tolerant yeasts such as *Zygosaccharomyces rouxii, Zygosaccharomyces bailii (Z. bailii), Candida etchellsii,* and *Candida versatilis (C. versatilis).*

The period of the yeast fermentation is not particularly limited as long as it is a period in which HEMF is produced in a sufficient amount in the fermented liquid, preferably a period in which the content of HEMF becomes a predetermined amount and ethyl decanoate and ethyl octanoate are produced, more preferably a period in which the contents of HEMF, ethyl decanoate, and ethyl octanoate become predetermined amounts, and further more preferably a period in which the content of HEMF becomes 60 ppm or more, the content of ethyl decanoate becomes 10 ppb or more, and the content of ethyl octanoate becomes 10 ppb or more, and for example, when *Zygosaccharomyces rouxii* is used as the soy sauce yeast, it is about 10 to 100 days, and preferably about 14 to 60 days at 15 to 30°C. Further, the period of the yeast fermentation is preferably a period in which the production amount of ethanol reaches the maximum.

Note that the step of performing yeast fermentation can be simply performed by, for example, placing the second soy sauce *moromi* soup and the soy sauce yeast in a soy sauce bottle that is suitable for yeast fermentation and is capable of using the fermented liquid immediately after yeast fermentation, and then leaving the bottle to stand at room temperature, thereby performing yeast fermentation, or the like.

In the step of performing yeast fermentation, the second soy sauce *moromi* soup in which the insoluble solid content has been removed in advance is used, and therefore, a material obtained after the yeast fermentation is a yeast fermented liquid having a low solid content, and the yeast fermented liquid itself may be used as a liquid rich seasoning. Further, for the purpose of removing the yeast or a residue present in the yeast fermented liquid or the like, the yeast fermented liquid is subjected to a treatment or the like at the latter stage of the yeast fermentation to be used in a method for manufacturing a regular soy sauce such as pressing, filtration, heating, or sediment removal, and the obtained liquid part may be used as the liquid rich seasoning.

The method of a second aspect of the present invention includes at least a step of obtaining a soy sauce *moromi* soup by subjecting a soy sauce *moromi* obtained by subjecting a soy sauce *koji* and a saline solution to a mixing treatment to a solid-liquid separation treatment and a pasteurization treatment, a step of obtaining an adjusted soy sauce *moromi* soup by adjusting the soy sauce *moromi* soup so that the total nitrogen content and the content of a reducing sugar become predetermined amounts, and a step of obtaining a rich soy sauce or a rich soy sauce seasoning in which the total nitrogen content and the content of HEMF are predetermined amounts by subjecting the adjusted soy sauce *moromi* soup to yeast fermentation using a soy sauce yeast.

The method of the second aspect of the present invention includes at least a step of obtaining a soy sauce *moromi* soup, a step of obtaining an adjusted soy sauce *moromi* soup, and a step of performing yeast fermentation. The thus obtained liquid rich seasoning can be, for example, a liquid rich seasoning in which the total nitrogen content is 1.8 wt% or more and the content of HEMF is 60 ppm or more.

In the method of the second aspect of the present invention, the step of obtaining a soy sauce *moromi* soup can be performed in the same manner as the step of obtaining a first soy sauce *moromi* soup from the first soy sauce *moromi* in the method of the first aspect of the present invention. The soy sauce *moromi* in the step of obtaining a soy sauce *moromi* soup may be a *tamari* (rich) soy sauce. The *tamari* soy sauce is preferably a *tamari* soy sauce in which the content of isobutyric acid is 20 ppm or less, the content of isovaleric acid is 20 ppm or less, or the content of each of isobutyric acid and isovaleric acid is 20 ppm or less.

In the step of obtaining an adjusted soy sauce *moromi* soup, the soy sauce *moromi* soup is adjusted so that the total nitrogen content and the content of a reducing sugar become predetermined amounts, for example, 1.8 wt% or more and 4.0 wt% or more, respectively, preferably 1.8 wt% or more and 5.0 wt% or more, respectively, more preferably 2.0 wt% or more and 5.0 wt% or more, respectively, and further more preferably 2.2 wt% or more and 7.0 wt% or more, respectively. The upper limits of the total nitrogen content and the content of a reducing sugar are not particularly limited, but are typically about 4 wt% and about 20 wt%, respectively. However, when the total nitrogen content and the content of a reducing sugar in the soy sauce *moromi* soup are the above-mentioned amounts, the step of obtaining an adjusted soy sauce *moromi* soup can be omitted. The liquid rich seasoning of one aspect of the present invention is preferably one obtained by subjecting the soy sauce *moromi* soup in which the total nitrogen content and the content of a reducing sugar are the above-mentioned amounts to yeast fermentation, that is, one containing a fermented product of the soy sauce *moromi* soup or a fermented product of the soy sauce *moromi* soup.

For example, when a soy sauce *koji* manufactured using a protein raw material such as soybeans is used in a large amount, a soy sauce *moromi* soup having a high total nitrogen content is obtained, and when a soy sauce *koji* manufactured using a starch raw material such as wheat or rice is used in a large amount, a soy sauce *moromi* soup having a high reducing sugar content is obtained. Therefore, in order to make the total nitrogen content and the content of a reducing sugar predetermined amounts, a reducing sugar component may be added to a soy sauce *moromi* soup having a high total nitrogen content according to an ordinary method, and a total nitrogen content component may be added to a soy sauce *moromi* soup having a high reducing sugar content according to an ordinary method. Further, both a reducing sugar component and a total nitrogen content component may be added to a soy sauce *moromi* soup. The total nitrogen content component is not particularly limited as long as it is a component that is generally contained as a total nitrogen content of a soy sauce, but is preferably an *umami* component such as an amino acid or a peptide, for example, glutamic acid, a soybean peptide, or the like.

In the method of the second aspect of the present invention, the step of performing yeast fermentation can be performed in the same manner as the step of performing yeast fermentation in the method of the first aspect of the present invention using the adjusted soy sauce *moromi* soup in place of the second soy sauce *moromi* soup.

In the liquid rich seasoning of one aspect of the present invention, the total nitrogen content and the content of HEMF may be predetermined amounts, and various other components can be contained as long as they do not prevent the object of the present invention from being achieved. Such other components are not particularly limited, but examples thereof include seasoning components and food materials, and specific examples thereof include vegetable components (radish, carrot, onion, potato, garlic, etc.), meat (beef, pork, chicken, etc.), fish, yeast extracts, meat extracts (chicken extract, pork extract, beef extract, fish meat extract, etc.), fruit juices (apple juice, etc.), spices (ginger, red pepper, pepper, basil, oregano, etc.), chemical seasonings (monosodium glutamate, disodium inosinate, etc.), and flavors, and among these, one type can be used alone or two or more types can be used in combination. The content of such other components can be appropriately set as long as the object of the present invention can be achieved.

The liquid rich seasoning of one aspect of the present invention can be formed into a container-packed liquid rich seasoning in which it is packed and sealed in a container, that is, a container-packed rich soy sauce or a container-packed rich soy sauce-like seasoning. The container is not particularly limited, but examples thereof include packaging containers such as a single-layer or laminate film bag, a retort pouch, a vacuum pack, an aluminum container, a plastic container, a bottle, and a can made of a metal such as aluminum, a paper, a plastic such as PET or PTP, a glass, or the like. The container-packed rich soy sauce and the container-packed rich soy sauce-like seasoning can be distributed and sold in the market independently by themselves.

The liquid rich seasoning of one aspect of the present invention can be used in the same manner as an ordinary liquid seasoning. That is, the liquid rich seasoning of one aspect of the present invention can be used alone or by mixing or combining with another seasoning component such as a soup stock, an acidulant, an amino acid, a nucleic acid, an organic acid, a protein hydrolysate, a sugar, a sake, a sweet sake, an alcohol, a thickener, an emulsifier, or an inorganic salt in addition to a vegetable component, meat, fish, a yeast extract, a meat extract, a fruit juice, a spice, a chemical seasoning, or a flavor described above for cooking various food materials or for a processing method therefor. For example, the liquid rich seasoning of one aspect of the present invention can be used for various foods such as Japanese foods, Western foods, and Chinese foods, and specifically, can be used for deep-fried foods, grilled slices of meat, udon, soba, ramen, Hamburg steak, meatballs, simmered chicken and root vegetables, teriyaki, curry, stew, hashed beef, etc., but it is not limited thereto.

As a non-limiting specific mode of the liquid rich seasoning of one aspect of the present invention, for example, a liquid rich seasoning in which the total nitrogen content and the content of HEMF are as follows is exemplified.
the total nitrogen content: 1.8 wt% to 4 wt%
the content of HEMF: 60 ppm to 200 ppm

As a non-limiting specific mode of the liquid rich seasoning of one aspect of the present invention, for example, a liquid rich seasoning in which the total nitrogen content and the content of HEMF are as follows is exemplified.
the total nitrogen content: 2.0 wt% to 4 wt%
the content of HEMF: 80 ppm to 200 ppm

As a non-limiting specific mode of the liquid rich seasoning of one aspect of the present invention, for example, a liquid rich seasoning in which the total nitrogen content and the contents of HEMF and a reducing sugar are as follows is exemplified.
the total nitrogen content: 1.9 wt% to 4 wt%
the content of HEMF: 80 ppm to 200 ppm
a reducing sugar: 7.0 wt% to 20 wt%

As a non-limiting specific mode of the liquid rich seasoning of one aspect of the present invention, for example, a liquid rich seasoning in which the total nitrogen content and the contents of HEMF, a reducing sugar, and ethyl decanoate are as follows is exemplified.
the total nitrogen content: 1.9 wt% to 4 wt%
the content of HEMF: 80 ppm to 200 ppm
a reducing sugar: 7.0 wt% to 20 wt%
ethyl decanoate: 10 ppb to 2,000 ppb

As a non-limiting specific mode of the liquid rich seasoning of one aspect of the present invention, for example, a liquid rich seasoning in which the total nitrogen content and the contents of HEMF, a reducing sugar, and ethyl octanoate are as follows is exemplified.
the total nitrogen content: 1.9 wt% to 4 wt%
the content of HEMF: 80 ppm to 200 ppm
a reducing sugar: 7.0 wt% to 20 wt%
ethyl octanoate: 10 ppb to 10,000 ppb

As a non-limiting specific mode of the liquid rich seasoning of one aspect of the present invention, for example, a liquid rich seasoning in which the total nitrogen content and the contents of HEMF, a reducing sugar, ethyl decanoate, and ethyl octanoate are as follows is exemplified.
the total nitrogen content: 1.9 wt% to 4 wt%
the content of HEMF: 80 ppm to 200 ppm
a reducing sugar: 7.0 wt% to 20 wt%
ethyl decanoate: 5 ppb to 2,000 ppb
ethyl octanoate: 5 ppb to 10,000 ppb

As a non-limiting specific mode of the liquid rich seasoning of one aspect of the present invention, for example, a liquid rich seasoning in which the total nitrogen content and the contents of HEMF, a reducing sugar, ethyl decanoate, ethyl octanoate, and 2-ethyl-6-methylpyrazine are as follows is exemplified.
the total nitrogen content: 1.9 wt% to 4 wt%
the content of HEMF: 80 ppm to 200 ppm
a reducing sugar: 7.0 wt% to 20 wt%
ethyl decanoate: 5 ppb to 2,000 ppb
ethyl octanoate: 5 ppb to 10,000 ppb
the content of 2-ethyl-6-methylpyrazine: less than 10 ppb

Hereinafter, the present invention will be described in more detail by way of Examples, however, the present invention is not limited to these Examples, and the present invention can take various modes as long as the object of the present invention can be achieved.

### Example 1

### [1. Various Methods]

### 1-1. Measurement Method for Reducing Sugar

The content of a reducing sugar in a raw liquid for a seasoning and a liquid seasoning was measured by the method described in the document "Japanese Agricultural Standards for Soy Sauce" (Ministry of Agriculture, Forestry and Fisheries Notification) directly as the content of a reducing sugar.

### 1-2. Measurement Method for Ethanol

The content of ethanol in a raw liquid for a seasoning and a liquid seasoning was measured by GC-FID under the following conditions according to an ordinary method.

### <GC-FID Analysis Conditions>

Measuring device: GC-2014AF (manufactured by Shimadzu Corporation)
Column: porapack q (80-100 mesh) (manufactured by GL Sciences, Inc.)
Inlet temperature: 230°C
Temperature condition: held at 155°C (7 min)
Carrier gas: nitrogen
Column flow rate: 20 mL/min
Detector temperature: 250°C

### 1-3. Measurement Method for HEMF

The contents of HEMF and 2-octanone used as an internal standard substance in a raw liquid for a seasoning and a liquid seasoning were measured for an extract solution obtained by an extraction treatment using ethyl acetate by GC-MS according to the following conditions.

To 5.0 g of a sample, 2.0 g of dietary sodium chloride, and 100 µL of a 2-octanone solution (20 ppm) were added. Subsequently, 1 mL of ethyl acetate was added, and after vigorously stirring for 5 minutes, the organic solvent layer was extracted. This operation was repeated three times, and the obtained organic solvent layer was dehydrated over anhydrous sodium sulfate and then concentrated to 500 µL, whereby an aroma concentrate was obtained. The obtained aroma concentrate was analyzed by GC-MS under the following conditions.

### <GC-MS Conditions>

Measuring device: 7890B-5977 MSD (manufactured by Agilent Technologies, Inc.)
Column: DB-WAX (length: 60 m, diameter: 0.25 mm, film thickness: 0.25 µm) (manufactured by Agilent Technologies, Inc.)
Inlet temperature: 250°C
Temperature condition: held at 40°C (3 min) → raised to 250°C at 6 °C/min → held for 15 min
Carrier: high purity helium, constant pressure mode at 229 kPa
Scan mass range: m/z: 30.0 to 250.0
Ionization method: EI

The peak areas of HEMF and 2-octanone that is the internal standard substance were determined using the following m/z.
HEMF: m/z: 142
2-octanon: m/z: 58

### 1-4. Measurement Method for Linoleic Acid

The contents of linoleic acid and heptadecanoic acid used as an internal standard substance in a raw liquid for a seasoning and a liquid seasoning were measured by GC-MS according to the following conditions for a liquid in which a fatty acid was methyl-esterified using a fatty acid methylation kit (manufactured by Nacalai Tesque, Inc.).

### <GC-MS Conditions>

Measuring device: 7890B-5977 MSD (manufactured by Agilent Technologies, Inc.)
Column: DB-WAX (length: 60 m, diameter: 0.25 mm, film thickness: 0.25 µm) (manufactured by Agilent Technologies, Inc.)
Inlet temperature: 250°C
Temperature condition: held at 40°C (3 min) → raised to 250°C at 6 °C/min → held for 15 min
Carrier: high purity helium, constant pressure mode at 229 kPa
Scan mass range: m/z: 30.0 to 500.0
Ionization method: EI

The peak areas of methyl-esterified linoleic acid and heptadecanoic acid that is the internal standard substance were determined using the following m/z.
methyl linoleate: m/z: 294
methyl heptadecanoate: m/z: 284

### 1-5. Sensory Evaluation Method

Sensory evaluation was performed by eleven panelists having a discrimination ability with respect to the liquid seasonings for three items: "a fruity aroma", "an oily odor", and "an oxidized odor" at five levels (1: quite weak, 2: weak, 3: neither, 4: strong, 5: quite strong), and an average value thereof was calculated.

### [2. Evaluation of Effect of Reducing Sugar in Raw Liquid for Seasoning on Yeast Fermentation]

### 2-1. Preparation of Raw Liquids for Seasoning 1 to 4

A seed starter of *Aspergillus sojae* was inoculated into steamed soybeans, followed by *koji* making for 43 hours by an ordinary method, whereby a soy sauce *koji* was obtained.

100 parts by mass of the obtained soy sauce *koji* was put into 120 parts by mass of a saline solution (sodium chloride concentration: 23.5%), and further a soy sauce lactic acid bacterium (*Tetragenococcus halophilus*) was added thereto, and the resultant was subjected to lactic acid fermentation and aging at 25°C for 120 days while appropriately stirring, and thereafter, subjected to a pressing treatment and a filtration treatment, whereby a soy sauce *moromi* was obtained.

When the content of a reducing sugar in the obtained soy sauce *moromi* was measured, it was about 1.2 wt%. Raw liquids for a seasoning 1 to 4 were obtained by adding glucose in accordance with the measurement result so that the content of a reducing sugar was adjusted to 4 wt%, 5 wt%, 6 wt%, and 7.0 wt%, respectively. Note that when the contents of a reducing sugar and ethanol in the raw liquid for a seasoning 4 were measured, they were 6.6 wt% and 0.04 wt%, respectively.

### 2-2. Yeast Fermentation of Raw Liquids for Seasoning 1 to 4

Into the raw liquids for a seasoning 1 to 4, *Zygosaccharomyces rouxii* was inoculated, and yeast fermentation was performed at 20 to 25°C for 45 days without stirring.

### 2-3. Evaluation of Effect of Reducing Sugar on Yeast Fermentation

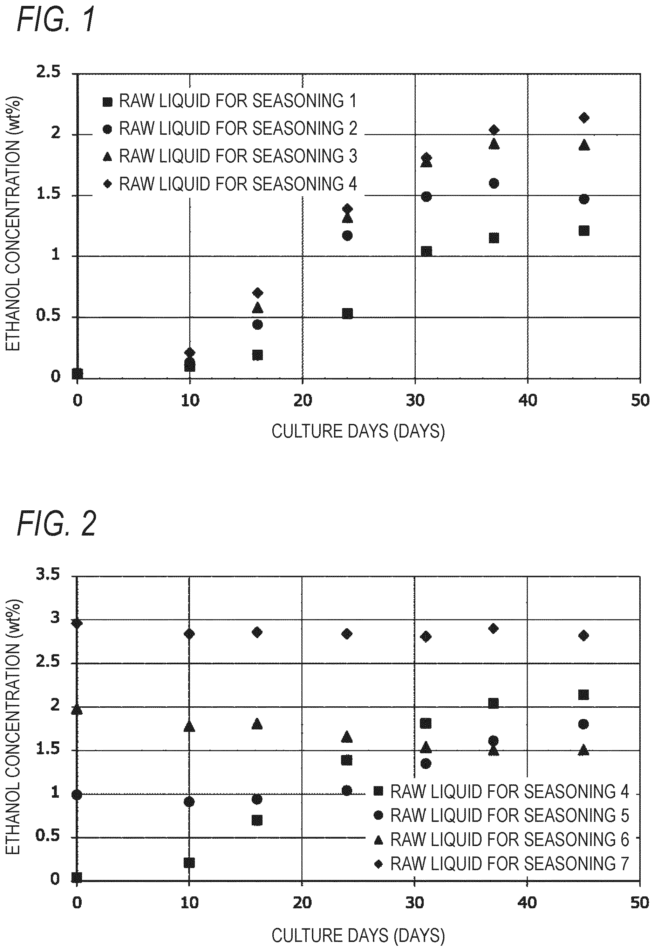

As described in the above 2-2, by subjecting the raw liquids for a seasoning 1 to 4 to yeast fermentation, liquid seasonings 1 to 4 were obtained. In the yeast fermentation for the liquid seasonings 1 to 4, the concentration of ethanol in the liquid seasonings 1 to 4 was measured after 10, 16, 24, 31, 37, and 45 days from the inoculation of the yeast. The results are shown in Table 1 and FIG. 1.

**[Table 1]**

| Elapsed days (days) | Ethanol concentration (%) | | | |
|---|---|---|---|---|
| | Liquid seasoning 1 | Liquid seasoning 2 | Liquid seasoning 3 | Liquid seasoning 4 |
| 0 | 0.04 | 0.04 | 0.04 | 0.04 |
| 10 | 0.10 | 0.13 | 0.15 | 0.21 |
| 16 | 0.19 | 0.44 | 0.58 | 0.70 |
| 24 | 0.53 | 1.17 | 1.32 | 1.39 |
| 31 | 1.04 | 1.49 | 1.78 | 1.81 |
| 37 | 1.15 | 1.60 | 1.93 | 2.04 |
| 45 | 1.21 | 1.47 | 1.92 | 2.14 |

As shown in Table 1 and FIG. 1, it was confirmed that when the raw liquids for a seasoning 3 and 4 in which the concentration of a reducing sugar is 6 wt% or more were used, ethanol fermentation by the yeast favorably proceeds, and 1.9 wt% is reached on day 37. On the other hand, in the case of the raw liquid for a seasoning 1 in which the concentration of a reducing sugar is 4 wt%, although ethanol was produced to some extent, the production speed was low, and the maximum concentration of ethanol resulted in less than 1.5 wt%.

When the concentration of ethanol in the seasoning is low, the microbial resistance decreases so that the possibility of contamination increases. In fact, even when each of the liquid seasonings 3 and 4 in which the concentration of ethanol is 1.5% or more is dispensed in a sterile test tube with a silicon stopper in an amount of 3 mL, and *Zygosaccharomyces rouxii* that is a film yeast is inoculated at 10⁴ cfu/mL, and stationary cultured at 30°C for 5 days under an aerobic condition, a thin film is not formed on a liquid surface or a tube wall, and abnormality is not observed in appearance. Therefore, it was confirmed that the concentration of a reducing sugar in the raw liquid for a seasoning is desirably 6 wt% or more.

In addition, when sensory evaluation was performed with respect to the liquid seasonings 1 to 4, a soy sauce-like aroma was strongly felt in the liquid seasonings 2, 3, and 4 in which the concentration of a reducing sugar is 5 wt% or more as compared with the liquid seasoning 1 in which the concentration of a reducing sugar is 4 wt%. It is generally known that the concentration of ethanol in a soy sauce *moromi* after yeast fermentation exceeds 1.5%. Also from this fact, it is considered that in the liquid seasoning 1, yeast fermentation was insufficient as compared with the liquid seasonings 2, 3, and 4, and a soy sauce-like aroma was not sufficiently felt.

Accordingly, it was found that in the case of a raw liquid for a seasoning in which the concentration of a reducing sugar is 5 wt% or more, ethanol can be produced by adding a yeast, and a liquid seasoning obtained by yeast fermentation has a soy sauce-like aroma.

### [3. Evaluation of Effect of Ethanol in Raw Liquid for Seasoning on Yeast Fermentation]

### 3-1. Preparation of Raw Liquids for Seasoning 5 to 7

Raw liquids for a seasoning 5 to 7 were prepared by adding ethanol to the raw liquid for a seasoning 4 so that the content of ethanol became 1.0 wt%, 2.0 wt%, and 3.0 wt%, respectively.

### 3-2. Yeast Fermentation of Raw Liquids for Seasoning 5 to 7

Yeast fermentation was performed in the same manner as in the above 2-2 using the raw liquids for a seasoning 5 to 7.

### 3-3. Evaluation of Effect of Ethanol on Yeast Fermentation

As described in the above 3-2, by subjecting the raw liquids for a seasoning 5 to 7 to yeast fermentation, liquid seasonings 5 to 7 were obtained. In the yeast fermentation for the liquid seasonings 5 to 7, the concentration of ethanol in the liquid seasonings 5 to 7 was measured after 10, 16, 24, 31, 37, and 45 days from the inoculation of the yeast. The results are shown in Table 2 and FIG. 2. Note that in Table 2 and FIG. 2, the results obtained using the raw liquid for a seasoning 4 are also shown.

**[Table 2]**

| Elapsed days (days) | Ethanol concentration (%) | | | |
|---|---|---|---|---|
| | Liquid seasoning 4 | Liquid seasoning 5 | Liquid seasoning 6 | Liquid seasoning 7 |
| 0 | 0.04 | 0.99 | 1.98 | 2.96 |
| 10 | 0.21 | 0.91 | 1.78 | 2.84 |
| 16 | 0.70 | 0.94 | 1.81 | 2.86 |
| 24 | 1.39 | 1.04 | 1.66 | 2.84 |
| 31 | 1.81 | 1.35 | 1.54 | 2.81 |
| 37 | 2.04 | 1.61 | 1.51 | 2.90 |
| 45 | 2.14 | 1.80 | 1.51 | 2.82 |

As shown in Table 2 and FIG. 2, it was confirmed that when the raw liquids for a seasoning 6 and 7 in which the initial ethanol concentration is 2.0 wt% or more were used, ethanol fermentation by the yeast did not proceed, and the ethanol concentration was not increased, but on the other hand, when the raw liquids for a seasoning 4 and 5 in which the initial ethanol concentration is 1 wt% or less were used, the ethanol concentration was favorably increased.

### [4. Evaluation of Effect of Raw Liquid for Seasoning on Soy Sauce Aroma]

It is known that some aroma components forming a soy sauce-like aroma are produced during yeast fermentation. HEMF that is one of the compounds to be produced by yeast fermentation is known as a characteristic component of a brewed soy sauce (see, for example, Non-Patent Literature "Shin Zoho Shoyu no Kagaku to Gijutsu (New supplement, Science and Technology of Soy Sauce)" written and edited by Tatsurokuro Tochikura, newly supplemented on January 30, 2012, page 286, or the like). Further, according to JP-A-2014-233292, when the content of HEMF in a soy sauce is less than 15 ppm, the characteristic aroma of the soy sauce tends to decrease.

Therefore, in order for a liquid seasoning obtained by subjecting a raw liquid for a seasoning to yeast fermentation to have a soy sauce-like aroma and flavor, it is preferred that the liquid seasoning after yeast fermentation contains HEMF at 15 ppm or more.

In view of this, with respect to the liquid seasonings 4 to 7 obtained by subjecting the raw liquids for a seasoning 4 to 7 to yeast fermentation as described in the above 2-2 and 3-2, the concentration of HEMF was measured. The results are shown in Table 3.

**[Table 3]**

| | Liquid seasoning 4 | Liquid seasoning 5 | Liquid seasoning 6 | Liquid seasoning 7 |
|---|---|---|---|---|
| HEMF (ppm) | 34.2 | 21.3 | 3.1 | 0.3 |

As shown in Table 3, it was confirmed that in the liquid seasonings 4 and 5 obtained by subjecting the raw liquids for a seasoning 4 and 5 in which the concentration of ethanol is 1.0 wt% or less to yeast fermentation, the concentration of HEMF is 15 ppm or more. On the other hand, it was confirmed that in the liquid seasonings 6 and 7 obtained by subjecting the raw liquids for a seasoning 6 and 7 in which the concentration of ethanol is 2.0 wt% or more to yeast fermentation, the production of HEMF is remarkably low and they do not have a soy sauce-like aroma and flavor.

Accordingly, it was found that when a raw liquid for a seasoning in which the concentration of ethanol is 1.0 wt% or less is used, a liquid seasoning having a soy sauce-like aroma and flavor is obtained by yeast fermentation.

### [5. Evaluation of Effect of Linoleic Acid in Raw Liquid for Seasoning on Yeast Fermentation]

### 5-1. Preparation of Raw Liquids for Seasoning 8 to 12

A seed starter of *Aspergillus sojae* was inoculated into a material obtained by mixing steamed soybeans and crushed roasted wheat in equal amounts, followed by *koji* making for 43 hours by an ordinary method, whereby a soy sauce *koji* was obtained.

100 parts by mass of the obtained soy sauce *koji* was put into 98 parts by mass of a saline solution (sodium chloride concentration: 26%), and further a soy sauce lactic acid bacterium (*Tetragenococcus halophilus*) was added thereto, and the resultant was subjected to lactic acid fermentation at 15 to 25°C for 50 days while appropriately stirring according to an ordinary method, and thereafter, subjected to solid-liquid separation and diatomaceous earth filtration, whereby a lactic acid fermented soup was collected and used as a raw liquid for a seasoning 8. The content of linoleic acid in the raw liquid for a seasoning 8 was measured using a fatty acid methylation kit (manufactured by Nacalai Tesque, Inc.) and GC-MS as described in the above 1-4.

Raw liquids for a seasoning 9 to 12 were prepared by adding a soy sauce oil to the raw liquid for a seasoning 8 so that the content (added concentration) thereof becomes 0.06 wt%, 0.31 wt%, 0.61 wt%, and 3.07 wt%, respectively. Further, the content of linoleic acid in the raw liquids for a seasoning 9 to 12 was measured.

Into the raw liquids for a seasoning 8 to 12, *Zygosaccharomyces rouxii* was inoculated, and yeast fermentation was performed at 25 to 30°C for 45 days without stirring. By the yeast fermentation, liquid seasonings 8 to 12 were obtained.

### 5-2. Results of Measurement of Content of Linoleic Acid in Raw Liquids for Seasoning 8 to 12

The concentration of linoleic acid in the raw liquids for a seasoning 8 to 12 is shown in Table 4.

**[Table 4]**

| | Liquid seasoning 8 | Liquid seasoning 9 | Liquid seasoning 10 | Liquid seasoning 11 | Liquid seasoning 12 |
|---|---|---|---|---|---|
| linoleic acid (wt%) | 0 | 0.03 | 0.15 | 0.30 | 1.48 |

### 5-3. Results of Sensory Evaluation of Liquid Seasonings 8 to 12

The results of sensory evaluation of the liquid seasonings 8 to 12 obtained by subjecting the raw liquids for a seasoning 8 to 12 having different linoleic acid content to yeast fermentation are shown in Table 5. Note that "*" indicates that the difference was statistically significant (P < 0.05) as compared with the liquid seasoning 8.

**[Table 5]**

| | Liquid seasoning 8 | Liquid seasoning 9 | Liquid seasoning 10 | Liquid seasoning 11 | Liquid seasoning 12 |
|---|---|---|---|---|---|
| fruity aroma | 4.1±0.3 | 3.6±0.3 | 2.1±0.4* | 1.3±0.2* | 1.2±0.1* |
| oily odor | 1.1±0.1 | 2.0±0.3* | 2.7±0.3* | 4.2±0.2* | 4.9±0.1* |
| oxidized odor | 1.1±0.1 | 1.7±0.3* | 1.8±0.3* | 2.4±0.4* | 2.9±0.5* |

From the results of measurement of linoleic acid and the results of sensory evaluation shown in Table 4 and Table 5, it was found that the liquid seasonings 8 and 9 obtained by subjecting the raw liquid for a seasoning 8 that does not contain linoleic acid and the raw liquid for a seasoning 9 in which the content of linoleic acid is 0.03 wt% or less to yeast fermentation have a remarkably high fruity aroma as compared with the liquid seasonings 10 to 12 containing linoleic acid at 0.15 wt% or more.

Further, it was found that in the liquid seasoning 8 obtained by subjecting the raw liquid for a seasoning 8 that does not contain linoleic acid to yeast fermentation, an oily odor and an oxidized odor are remarkably reduced as compared with the liquid seasonings 9 to 12 containing linoleic acid at 0.03 wt% or more. That is, it was found that when utilizing a raw liquid for a seasoning that does not contain an oil content (linoleic acid), a liquid seasoning not only having a reduced oily odor and oxidized odor, but also having a very fruity aroma is obtained by yeast fermentation.

### [6. Sensory Evaluation of Seasoning Obtained by Subjecting Lactic Acid Fermented Soup to Yeast Fermentation]

### 6-1. Preparation of Liquid Seasonings 13 to 14

Steamed soybeans (whole soybeans or defatted soybeans) and crushed roasted wheat were mixed at a ratio of 6:4, and a seed starter of *Aspergillus sojae* was inoculated thereinto, followed by *koji* making for 43 hours by an ordinary method, whereby a soy sauce *koji* was obtained.

100 parts by mass of the obtained soy sauce *koji* was put into 94 parts by mass of a saline solution (sodium chloride concentration: 24% (w/v)), and further a soy sauce lactic acid bacterium (*Tetragenococcus halophilus*) was added thereto, and the resultant was subjected to lactic acid fermentation at 15 to 25°C for 20 days while appropriately stirring according to an ordinary method, and thereafter, a salt-tolerant yeast (*Zygosaccharomyces rouxii*) was added thereto, and the resultant was subjected to fermentation and aging for 100 days while appropriately stirring. The obtained aged *moromi* was subjected to solid-liquid separation, and the obtained supernatant was treated with a disposable membrane filter (pore diameter: 0.45 µm) (manufactured by ADVANTEC Co., Ltd.), whereby an unheated soy sauce was obtained. The unheated soy sauce obtained using whole soybeans as a raw material was used as a liquid seasoning 13, and the unheated soy sauce obtained using defatted soybeans as a raw material was used as a liquid seasoning 14.

### 6-2. Preparation of Liquid Seasonings 15 to 16

Steamed soybeans (whole soybeans or defatted soybeans) and crushed roasted wheat were mixed at a ratio of 6:4, and a seed starter of *Aspergillus sojae* was inoculated thereinto, followed by *koji* making for 43 hours by an ordinary method, whereby a soy sauce *koji* was obtained.

100 parts by mass of the obtained soy sauce *koji* was put into 94 parts by mass of a saline solution (sodium chloride concentration: 24% (w/v)), and further a soy sauce lactic acid bacterium (*Tetragenococcus halophilus*) was added thereto, and the resultant was subjected to lactic acid fermentation at 15 to 25°C for 20 days while appropriately stirring according to an ordinary method. The soy sauce *moromi* after completion of the lactic acid fermentation was subjected to solid-liquid separation, and further the liquid part was treated with a UF membrane, whereby a lactic acid fermented soup was obtained.

To the obtained lactic acid fermented soup, a salt-tolerant yeast (*Zygosaccharomyces rouxii*) was added, and fermentation was performed at 25°C for 28 days without stirring, followed by centrifugation at 3,000 rpm for 15 minutes, whereby an unheated soy sauce was collected as a supernatant. The unheated soy sauce obtained using whole soybeans as a raw material was used as a liquid seasoning 15, and the unheated soy sauce obtained using defatted soybeans as a raw material was used as a liquid seasoning 16.

### 6-3. Results of Sensory Evaluation

Sensory evaluation was performed with respect to the liquid seasonings 13 to 16 by the method described in the above 1-5 except that the number of panelists was changed to 5 and the evaluation item was changed to "fruity aroma".

The results of the sensory evaluation of the liquid seasoning 13 and the liquid seasoning 15 obtained using whole soybeans as a raw material are shown in Table 6. Note that "**" indicates that the difference was statistically significant (*P* < 0.01) as compared with the liquid seasoning 13.

**[Table 6]**

| | Liquid seasoning 13 | Liquid seasoning 15 |
|---|---|---|
| fruity aroma | 1.0±0.0 | 4.2±0.4** |

Further, the results of the sensory evaluation of the liquid seasoning 14 and the liquid seasoning 16 obtained using defatted soybeans as a raw material are shown in Table 7. Note that "***" indicates that the difference was statistically significant (*P* ≤ 0.001) as compared with the liquid seasoning 14.

**[Table 7]**

| | Liquid seasoning 14 | Liquid seasoning 16 |
|---|---|---|
| fruity aroma | 1.0±0.0 | 5.0±0.0*** |

As shown in Table 6 and Table 7, it was found that the liquid seasonings 15 to 16 obtained by subjecting the lactic acid fermented soup to yeast fermentation have a remarkably high fruity aroma as compared with the liquid seasonings 13 to 14 obtained by a conventional method for manufacturing an unheated soy sauce.

Therefore, by using the raw liquid for a seasoning that is one aspect of the present invention, a liquid seasoning is obtained without particularly performing steps after yeast fermentation, and moreover, the obtained liquid seasoning is a liquid seasoning having a very favorable fruity aroma. Accordingly, by using the raw liquid for a seasoning that is one aspect of the present invention, a seasoning with high palatability can be simply obtained even at home.

### Example 2

[1. Evaluation of Sinking Property and Floating Property of Wood Piece]
1-1: Evaluation of Sinking Property of Wood Piece in Raw Liquid for Seasoning

### (1) Method for Manufacturing Raw Liquid for Seasoning

Into a mixture obtained by mixing steamed whole soybeans and crushed roasted wheat at a ratio of 6:4, a seed starter of *Aspergillus sojae* was inoculated, followed by *koji* making for 43 hours by an ordinary method, whereby a soy sauce *koji* was obtained.

100 parts by mass of the obtained soy sauce *koji* was put into 116 parts by mass of a saline solution (sodium chloride concentration: 25% (w/v)), and further a soy sauce lactic acid bacterium (*Tetragenococcus halophilus*) was added thereto, and the resultant was subjected to lactic acid fermentation at 15 to 25°C for 20 days while appropriately stirring according to an ordinary method. The soy sauce *moromi* after completion of the lactic acid fermentation was subjected to solid-liquid separation, and further the soup was treated with a UF membrane, whereby a raw liquid for a seasoning having a specific gravity (g/mL) of 1.207 was obtained.

### (2) Method for Obtaining Compressed Wood Piece

A compressed wood material of a Japanese cedar having been subjected to 50% compression processing, a compressed wood material of a Japanese cypress having been subjected to 40% compression processing, a compressed wood material of a cherry tree having been subjected to 30% compression processing by the method described in JP-A-2017-19177 were obtained from Hida Sangyo Co., Ltd.

### (3) Evaluation Method

Japanese cedar wood pieces 4 to 6 and Japanese cypress wood pieces 4 to 6 were prepared, respectively, by cutting each of the compressed wood materials into a 1 cm³ rectangular parallelepiped shape. On the other hand, Japanese cedar wood pieces 1 to 3 and Japanese cypress wood pieces 1 to 3 were prepared by cutting each of natural wood materials that are not subjected to compression processing into a 1 cm³ rectangular parallelepiped shape.

Each wood piece was put in 800 mL of water placed in a 2000 mL capacity stainless steel cup, and boiled for 10 minutes. Further, the wood piece after boiling was taken out, and put in 150 mL of the raw liquid for a seasoning placed in a 150 mL capacity tabletop bottle, and left to stand for 1 day.

The sinking property of the wood piece was evaluated by visually confirming whether the wood piece sinks in water after boiling and whether the wood piece sinks within 1 day after it is put in the raw liquid for a seasoning. A case where the wood piece sinks so that it remains on the bottom face of the container was evaluated as "A", and a case where the wood piece does not sink was evaluated as "B".

### (4) Evaluation Results

The results of the evaluation are shown in Table 8.

**[Table 8]**

| | Compression processing | Specific gravity | Sinking in water by boiling | Sinking in raw liquid for seasoning |
|---|---|---|---|---|
| Japanese cedar wood piece 1 | without | 0.404 | B | B |
| Japanese cedar wood piece 2 | without | 0.435 | B | B |
| Japanese cedar wood piece 3 | without | 0.387 | B | B |
| Japanese cedar wood piece 4 | with | 0.757 | A | A |
| Japanese cedar wood piece 5 | with | 0.815 | A | A |
| Japanese cedar wood piece 6 | with | 0.688 | A | A |
| Japanese cypress wood piece 1 | without | 0.458 | B | B |
| Japanese cypress wood piece 2 | without | 0.443 | B | B |
| Japanese cypress wood piece 3 | without | 0.453 | B | B |
| Japanese cypress wood piece 4 | with | 0.784 | A | A |
| Japanese cypress wood piece 5 | with | 0.771 | A | A |
| Japanese cypress wood piece 6 | with | 0.754 | A | A |
| Cherry wood piece 1 | without | 0.670 | B | B |
| Cherry wood piece 2 | without | 0.642 | B | B |
| Cherry wood piece 3 | without | 0.681 | B | B |
| Cherry wood piece 4 | with | 0.984 | A | A |
| Cherry wood piece 5 | with | 0.983 | A | A |
| Cherry wood piece 6 | with | 0.934 | A | A |

As shown in Table 8, it was found that the Japanese cedar, Japanese cypress, and cherry wood pieces having been subjected to compression processing sink in water after boiling and in the raw liquid for a seasoning. It was confirmed that even the cherry wood piece 6 having a density about 1.4 times the density of the wood piece before the compression processing sinks.

In addition, a camphor wood piece 1, a zelkova wood piece 1, a red oak wood piece 1, and a white oak wood piece 1 were prepared by cutting each of wood materials of a camphor tree, a zelkova, a red oak, and a white oak that are not subjected to compression processing while having a density equal to or more than that of a compressed wood material of a Japanese cedar having been subjected to 50% compression processing into a 1 cm³ rectangular parallelepiped shape. Further, a Japanese cedar wood piece 7 and a Japanese cypress wood piece 7 were prepared, respectively, by cutting each of a compressed wood material of a Japanese cedar having been subjected to 50% compression processing and a compressed wood material of a Japanese cypress having been subjected to 40% compression processing into a 1 cm³ rectangular parallelepiped shape. With respect to these wood pieces, the sinking property of a wood piece was evaluated in the same manner as described above. The results are shown in Table 9.

**[Table 9]**

| | Compression | Density (g/cm³) | Sinking in boiling water | Sinking in raw liquid for seasoning |
|---|---|---|---|---|
| Japanese cedar wood piece 7 | with | 0.686 | A | A |
| Japanese cypress wood piece 7 | with | 0.754 | A | A |
| Camphor wood piece 1 | without | 0.546 | B | B |
| Zelkova wood piece 1 | without | 0.735 | B | B |
| Red oak wood piece 1 | without | 0.680 | A | A |
| White oak wood piece 1 | without | 0.961 | A | A |

As shown in Table 9, it was found that in addition to the Japanese cedar wood piece and the Japanese cypress wood piece obtained from the compressed wood materials having been subjected to compression processing, the red oak wood piece and the white oak wood piece that are not subjected to compression processing also sink in water after boiling and in the raw liquid for a seasoning.

### 1-2: Evaluation of Floating Property of Wood Piece in Yeast Fermentation (1)

### (1) Evaluation Method

To the raw liquids for a seasoning in which the Japanese cedar wood piece 7, the Japanese cypress wood piece 7, the cherry wood piece 4, the red oak wood piece 1, and the white oak wood piece 1 were made to sink, respectively, *Zygosaccharomyces rouxii* was added at 1.0 × 10⁵ bacteria/mL, and yeast fermentation was performed at room temperature for 30 days without stirring. A case where each of the wood pieces floats up to the vicinity of the liquid surface by yeast fermentation was evaluated as "A", and a case where the wood piece does not float up was evaluated as "B".

### (2) Evaluation Results

The results of the evaluation are shown in Table 10.

**[Table 10]**

| | Whether wood piece floats up |
|---|---|
| Japanese cedar wood piece 7 | A |
| Japanese cypress wood piece 7 | A |
| Cherry wood piece 4 | A |
| Red oak wood piece 1 | B |
| White oak wood piece 1 | B |

As shown in Table 10, it was confirmed that the Japanese cedar wood piece, the Japanese cypress wood piece, and the cherry wood piece obtained from the compressed wood materials having been subjected to compression processing float up through yeast fermentation.

From the above results, it was found that a wood piece prepared from a compressed wood material having been subjected to compression processing sinks in a raw liquid for a seasoning by being subjected to a boiling treatment in a short time, and further floats up through yeast fermentation. Incidentally, it was also found that boiling for a long time deforms the wood piece, and therefore is not preferred.

### 1-3: Evaluation of Floating Property of Wood Piece in Yeast Fermentation (2)

### (1) Evaluation Method

Japanese cedar wood pieces 8 to 11, Japanese cypress wood pieces 8 to 11, and cherry wood pieces 7 to 10 were obtained by cutting each of a compressed wood material of a Japanese cedar having been subjected to 50% compression processing, a compressed wood material of a Japanese cypress having been subjected to 40% compression processing, and a compressed wood material of a cherry tree having been subjected to 30% compression processing into 1 cm³, 5 cm³, 10 cm³, and 20 cm³ rectangular parallelepiped shapes, respectively. The Japanese cedar wood pieces 8 to 11, the Japanese cypress wood pieces 8 to 11, and the cherry wood pieces 7 to 10 were put in 800 mL of water placed in a 2000 mL capacity stainless steel cup, and boiled for 10 minutes.

Each of the Japanese cedar wood pieces 8 to 11, the Japanese cypress wood pieces 8 to 11, and the cherry wood pieces 7 to 10 after boiling was put in 400 mL of the raw liquid for a seasoning placed in a 400 mL capacity Duran bottle, and it was confirmed that the Japanese cedar wood pieces 8 to 11, the Japanese cypress wood pieces 8 to 11, and the cherry wood pieces 7 to 10 sink. Subsequently, to the raw liquids for a seasoning containing each of the Japanese cedar wood piece, the Japanese cypress wood piece, and the cherry wood piece, *Zygosaccharomyces rouxii* was added at 1.0 × 10⁵ bacteria/mL, and yeast fermentation was performed at room temperature for 30 days without stirring, whereby liquid seasonings were obtained. During the yeast fermentation period, it was evaluated whether or not the Japanese cedar wood pieces 8 to 11, the Japanese cypress wood pieces 8 to 11, and the cherry wood pieces 7 to 10 float up. That is, a case where the Japanese cedar wood piece, the Japanese cypress wood piece, or the cherry wood piece floats up to the vicinity of the liquid surface when the yeast fermentation was completed was evaluated as "A", and a case where the wood piece does not float up was evaluated as "B".

### (2) Evaluation Results

The results of the evaluation are shown in Table 11.

**[Table 11]**

| | Compression | Density (g/cm³) | Volume (cm³) | Whether wood piece floats up |
|---|---|---|---|---|
| Japanese cedar wood piece 8 | with | 0.834 | 1 | A |
| Japanese cedar wood piece 9 | with | 0.786 | 5 | A |
| Japanese cedar wood piece 10 | with | 0.773 | 10 | A |
| Japanese cedar wood piece 11 | with | 0.794 | 20 | B |
| Japanese cypress wood piece 8 | with | 0.777 | 1 | A |
| Japanese cypress wood piece 9 | with | 0.768 | 5 | A |
| Japanese cypress wood piece 10 | with | 0.783 | 10 | A |
| Japanese cypress wood piece 11 | with | 0.780 | 20 | B |
| Cherry wood piece 7 | with | 0.982 | 1 | A |
| Cherry wood piece 8 | with | 0.978 | 5 | A |
| Cherry wood piece 9 | with | 0.975 | 10 | A |
| Cherry wood piece 10 | with | 0.983 | 20 | B |

As shown in Table 11, it was confirmed that when the volume of the wood piece is less than 20 cm³, the wood piece having sunk floats up.

### [2. Evaluation of Aroma of Seasoning Based on Floating Property of Wood Piece]

### (1) Test Method

Japanese cedar wood pieces 12 to 15 shown in Table 12 were prepared by cutting a compressed wood material of a Japanese cedar having been subjected to 50% compression processing into a 1 cm³ rectangular parallelepiped shape in the same manner as in the above 1.

**[Table 12]**

| | Density (g/cm²) |
|---|---|
| Japanese cedar wood piece 12 | 0.787 |
| Japanese cedar wood piece 13 | 0.744 |
| Japanese cedar wood piece 14 | 0.774 |
| Japanese cedar wood piece 15 | 0.761 |

Each of the Japanese cedar wood pieces 12 to 15 was put in 800 mL of water placed in a 2000 mL capacity stainless steel cup, and boiled for 10 minutes. Further, each wood piece after boiling was taken out, and put in 150 mL of the raw liquid for a seasoning prepared in Example 1 placed in a 150 mL capacity tabletop bottle, and made to sink by being left to stand for 1 day.

To the raw liquid for a seasoning in which the wood piece was made to sink, *Zygosaccharomyces rouxii* was added at 1.0 × 10⁵ bacteria/mL, and yeast fermentation was performed at 4°C, 15°C, 20°C, and 30°C without stirring. A case where the Japanese cedar wood piece floats up to the vicinity of the liquid surface after 1 day, 7 days, 14 days, 21 days and 28 days from the start of the yeast fermentation was evaluated as "A", and a case where the wood piece does not float up was evaluated as "B". In addition, the seasoning at that time point was evaluated based on the presence or absence of an aroma as to whether or not it has a "fruity aroma". Note that the "fruity aroma" is defined as a sweet aroma like a white wine produced using grapes as a raw material, which is perceived only by the nose without eating.

### (2) Evaluation Results

The results of the evaluation are shown in Table 13.

**[Table 13]**

| Temperature | Name of wood piece | Evaluation item | Elapsed days | | | | |
|---|---|---|---|---|---|---|---|
| | | | 1 day | 7 days | 14 days | 21 days | 28 days |
| 4°C | Japanese cedar wood piece 12 | Whether wood piece floats up | B | B | B | B | B |
| | | Sensory evaluation | B | B | B | B | B |
| 15°C | Japanese cedar wood piece 13 | Whether wood piece floats up | B | B | B | B | A |
| | | Sensory evaluation | B | B | B | B | A |
| 20°C | Japanese cedar wood piece 14 | Whether wood piece floats up | B | B | A | A | A |
| | | Sensory evaluation | B | B | A | A | A |
| 30°C | Japanese cedar wood piece 15 | Whether wood piece floats up | B | A | A | A | A |
| | | Sensory evaluation | B | A | A | A | A |

As shown in Table 13, the seasoning in which floating up of the wood piece could be confirmed was a seasoning having a "fruity aroma". Based on this, it was found that a wood piece obtained using a compressed wood material is useful as an index of fermentation control for obtaining a seasoning having a mellow aroma and high palatability.

### [3. Evaluation of Effect of Wood Piece on Flavor of Seasoning]

### (1) Test Method

To the raw liquid for a seasoning prepared as described in Example 1, *Zygosaccharomyces rouxii* was added, and yeast fermentation was performed at room temperature for 30 days, whereby a seasoning was obtained.

Each wood piece was prepared by cutting each of uncompressed wood materials of a Japanese cedar, a Japanese cypress, a cherry tree, a camphor tree, a zelkova, a red oak, and a white oak that are not subjected to compression processing into a 1 cm³ rectangular parallelepiped shape. Further, each wood piece was prepared by cutting each of a compressed wood material of a Japanese cedar having been subjected to 50% compression processing, a compressed wood material of a Japanese cypress having been subjected to 40% compression processing, and a compressed wood material of a cherry tree having been subjected to 30% compression processing in the same manner. Each wood piece was put in 800 mL of water placed in a 2000 mL capacity stainless steel cup, and boiled for 10 minutes.

Each wood piece after boiling was put in 200 mL of the seasoning placed in a 300 mL capacity plastic cup (three pieces per cup), and left to stand at room temperature for 1 week, whereby evaluation samples 1 to 7 were prepared. The evaluation samples 1 to 7 were subjected to sensory evaluation by six panelists. In the sensory evaluation, it was evaluated "whether the aroma of the wood piece itself is compatible with the seasoning and stimulates the appetite" by giving a score from 1 to 5, and an average score and a standard error were calculated. The standards of the scores were defined as follows: (1: quite poor, 2: slightly poor, 3: neither, 4: slightly good, and 5: quite good).

### (2) Evaluation Results

The results of performing the sensory evaluation are shown in Table 14.

**[Table 14]**

| Wood piece | Compatibility with seasoning | |
|---|---|---|
| | Before compression | After compression |
| Japanese cedar wood piece | 4.67±0.21 | 4.83±0.17 |
| Japanese cypress wood piece | 3.17±0.31 | 3.50±0.22 |
| Cherry wood piece | 4.17±0.40 | 4.67±0.21 |
| Camphor wood piece | 2.83±0.30 | |
| Zelkova wood piece | 3.50±0.22 | |
| Red oak wood piece | 3.67±0.33 | |
| White oak wood piece | 3.83±0.17 | |

As shown in Table 14, it was found that the Japanese cedar wood piece and the cherry wood piece have high compatibility with the seasoning. Also in the case of a zelkova, a red oak, and a white oak, a tendency that the aroma derived from the wood piece has a favorable effect on the seasoning was observed.

In addition, when the same evaluation was performed with respect to wood pieces obtained from compressed wood materials of a Japanese cedar, a Japanese cypress, and a cherry tree having been subjected to compression processing, it was found that as compared with uncompressed wood materials of the same types, a savory aroma is imparted and the compatibility with the seasoning is enhanced.

### Example 3

### [1. Evaluation of Effect of Color Number of Seasoning on Observation of Wood Piece as Index for Fermentation]

### 1-1. Preparation of Liquid Seasonings 8 to 12

A commercially available soy sauce "Kyushu Sashimi Amakuchi" (manufactured by Kikkoman Corporation) was diluted with water and adjusted so that the color number becomes 5 (liquid seasoning 8), 10 (liquid seasoning 9), 15 (liquid seasoning 10), 20 (liquid seasoning 11), and 30 (liquid seasoning 12).

### 1-2: Evaluation of Visibility of Wood Piece

150 mL of each of the liquid seasonings 8 to 12 was poured into a 150 mL capacity tabletop bottle (manufactured by Daiichi Glass Co., Ltd.), and three Japanese cedar wood pieces 1 having a volume of 1 cm³ described in the above 5-1 were made to sink. With respect to the wood pieces made to sink, the container containing the seasoning was visually observed from a fixed point of view, and a case where all the wood pieces can be visually recognized was evaluated as "A", a case where one to two wood pieces can be visually recognized was evaluated as "B", and a case where the wood pieces cannot be visually recognized was evaluated as "C".

The results of the evaluation are shown in Table 15.

**[Table 15]**

| Sample | Color degree (No.) | Whether wood piece can be confirmed |
|---|---|---|
| Liquid seasoning 8 | 5 | C |
| Liquid seasoning 9 | 10 | B |
| Liquid seasoning 10 | 15 | A |
| Liquid seasoning 11 | 20 | A |
| Liquid seasoning 12 | 30 | A |

As shown in Table 15, it was found that when the color number of the seasoning is 10 or more, at least some wood pieces can be visually recognized, and further, when the color number of the seasoning is 15 or more, the wood pieces can be easily confirmed.

### [2. Evaluation of Effect of Addition Amount of Yeast on Yeast Fermentation]

### 2-1. Preparation of Liquid Seasonings 13 to 16

To the raw liquid for a seasoning 8 prepared as described in the above 5-1, *Zygosaccharomyces rouxii* was added so that the number of bacteria of the yeast after the addition becomes 1.0 × 10¹ (=10) bacteria/mL (liquid seasoning 13), 1.0 × 10² (=100) bacteria/mL (liquid seasoning 14), and 1.0 × 10³ (=1,000) bacteria/mL (liquid seasoning 15). Further, the liquid to which the yeast is not added was used as a liquid seasoning 16.

### 2-2: Evaluation of Yeast Fermentation

The liquid seasonings 13 to 16 were subjected to yeast fermentation at 25°C for 14 days without stirring. The concentration of ethanol was measured as an index of yeast fermentation.

The results of measurement of the concentration of ethanol in the liquid seasonings after 0, 7, 14, 21, and 28 days from the addition of the yeast are shown in Table 16.

**[Table 16]**

| Elapsed days (days) | Ethanol concentration (%) | | | |
|---|---|---|---|---|
| | Liquid seasoning 16 | Liquid seasoning 13 | Liquid seasoning 14 | Liquid seasoning 15 |
| 0 | 0.03 | 0.03 | 0.03 | 0.03 |
| 7 | 0.04 | 0.03 | 0.04 | 0.26 |
| 14 | 0.03 | 0.03 | 0.04 | 0.59 |
| 21 | 0.03 | 0.03 | 0.03 | 0.92 |
| 28 | 0.04 | 0.04 | 0.04 | 1.46 |

As shown in Table 16, in the liquid seasonings 13, 14, and 16 in which the addition amount of the yeast is 0 to 1.0 × 10² bacteria/mL, the concentration of ethanol hardly changed. On the other hand, in the liquid seasoning 15 in which the addition amount of the yeast is 1.0 × 10³ bacteria/mL, the concentration of ethanol increased over time. Therefore, it was found that by adding the yeast at 1.0 × 10³ bacteria/mL or more, yeast fermentation rapidly starts up.

Note that when fermentation is performed without stirring, the yeast number of bacteria in a liquid seasoning after completion of the fermentation generally becomes about 5.0 × 10⁶ bacteria/mL. Therefore, by adding the liquid seasoning after completion of the yeast fermentation in an amount 1/1000 times or more the amount of the raw liquid for a seasoning, the yeast number of bacteria in the raw liquid for a seasoning becomes about 5.0 × 10³ bacteria/mL, and therefore, it is found that appropriate yeast fermentation can be performed.

### [3. Sensory Evaluation of Seasoning Obtained by Performing Yeast Fermentation According to Each Temperature Condition]

Into a mixture obtained by mixing steamed whole soybeans and crushed roasted wheat at a ratio of 6:4, a seed starter of *Aspergillus sojae* was inoculated, followed by *koji* making for 43 hours by an ordinary method, whereby a soy sauce *koji* was obtained.

100 parts by mass of the obtained soy sauce *koji* was put into 116 parts by mass of a saline solution (sodium chloride concentration: 25% (w/v)), and further a soy sauce lactic acid bacterium (*Tetragenococcus halophilus*) was added thereto, and the resultant was subjected to lactic acid fermentation at 15 to 25°C for 20 days while appropriately stirring according to an ordinary method. The soy sauce *moromi* after completion of the lactic acid fermentation was subjected to solid-liquid separation, and further the soup was treated with a UF membrane, whereby a raw liquid for a seasoning 9 having a specific gravity (g/mL) of 1.207 was obtained.

To the raw liquid for a seasoning 9, *Zygosaccharomyces rouxii* was added at 1.0 × 10⁵ bacteria/mL, and yeast fermentation was performed at 4°C, 15°C, 20°C, and 30°C without stirring, whereby liquid seasonings 17 to 20 were prepared. The liquid seasonings 17 to 20 after 1 day, 7 days, 14 days, 21 days, and 28 days from the start of the yeast fermentation were evaluated by confirming the presence or absence of a "fruity aroma". The results are shown in Table 17.

**[Table 17]**

| Temperature | Evaluation item | Elapsed days | | | | |
|---|---|---|---|---|---|---|
| | | 1 day | 7 days | 14 days | 21 days | 28 days |
| 4°C | Whether wood piece floats up | B | B | B | B | B |
| | Sensory evaluation | B | B | B | B | B |
| 15°C | Whether wood piece floats up | B | B | B | B | A |
| | Sensory evaluation | B | B | B | B | A |
| 20°C | Whether wood piece floats up | B | B | A | A | A |
| | Sensory evaluation | B | B | A | A | A |
| 30°C | Whether wood piece floats up | B | A | A | A | A |
| | Sensory evaluation | B | A | A | A | A |

As shown in Table 17, a yeast fermentation test was performed at various fermentation temperatures by assuming yeast fermentation at home, however, it was found that a sensorily favorable seasoning can be stably obtained at a temperature zone between 15°C and 30°C although there is a difference in fermentation period.

In addition, the seasoning in which floating up of the wood piece could be confirmed had a "fruity aroma". Based on this, it was found that the wood piece obtained using a compressed wood material is useful as an index of fermentation control for obtaining a seasoning having a mellow aroma and high palatability.

### Example 4

### [1. Various Methods]

### 1-1. Measurement Method for Ethyl Esters

In the measurement of the content of ethyl esters and cyclohexanol used as an internal standard substance in the liquid seasoning, after separating and concentrating the aroma components by a dynamic headspace method, the sample was subjected to an analysis by GC-MS.

### <Conditions for Extraction by Dynamic Headspace Method>

Collecting agent: Tenax TA (manufactured by GERSTEL, Inc.)
Volatile component extraction device: MPS2-DHS (manufactured by GERSTEL, Inc.)
Preheating: 30°C, 10 min
Collection volume: 650 mL
Collection speed: 100 mL/min
Collection temperature: 30°C
Dry purge volume: 500 mL
Dry purge rate: 50 mL/min
Dry purge temperature: 40°C

### <GC-MS Conditions>

Measuring device: 7890B-5975 MSD (manufactured by Agilent Technologies, Inc.)
Inlet: Heating and desorbing unit (manufactured by GERSTEL, Inc.)
Column: DB-WAX LTM (length: 30 m, diameter: 0.25 mm, film thickness: 0.25 µm) (manufactured by Agilent Technologies, Inc.)
Heating and desorbing condition: held at 30°C (0.5 sec) → raised to 280°C at 720 °C/min → held for 5 min
Temperature condition: held at 40°C (3 min) → raised to 160°C at 5 °C/min → raised to 240°C at 25 °C/min → held for 6 min
Carrier: high purity helium, constant pressure mode at 392.34 kPa
Scan mass range: m/z: 28.7 to 185.0
Ionization method: EI

The peak area of ethyl esters in the liquid seasoning and the peak area of the internal standard substance were measured by GC-MS as described above. The peak area was determined for ethyl esters and cyclohexanol that is the internal standard substance using the following m/z.
Ethyl octanoate: m/z: 88
Ethyl decanoate: m/z: 88
Cyclohexanol: m/z: 82

### 1-2. Measurement Method for 2-Ethyl-6-Methylpyrazine and HEMF

The contents of 2-ethyl-6-methylpyrazine, HEMF, and 2-octanone used as an internal standard substance in the liquid seasoning were measured for an extract solution obtained by an extraction treatment using ethyl acetate by GC-MS according to the following conditions.

To 5.0 g of the sample, 2.0 g of dietary sodium chloride and 100 µL of a 2-octanone solution (20 ppm) were added. Subsequently, 1 mL of ethyl acetate was added, and after vigorously stirring for 5 minutes, the organic solvent layer was extracted. This operation was repeated three times, and the obtained organic solvent layer was dehydrated over anhydrous sodium sulfate and then concentrated to 500 µL, whereby an aroma concentrate was obtained.

### <GC-MS Conditions>

Measuring device: 7890B-5977 MSD (manufactured by Agilent Technologies, Inc.)
Column: DB-WAX (length: 60 m, diameter: 0.25 mm, film thickness: 0.25 µm) (manufactured by Agilent Technologies, Inc.)
Inlet temperature: 250°C
Temperature condition: held at 40°C (3 min) → raised to 250°C at 6 °C/min → held for 15 min
Carrier: high purity helium, constant pressure mode at 229 kPa
Scan mass range: m/z: 30.0 to 250.0
Ionization method: EI

The peak areas of 2-ethyl-6-methylpyrazine, HEMF, and 2-octanone that is the internal standard substance were determined using the following m/z.
2-ethyl-6-methylpyrazine: m/z: 121
HEMF: m/z: 142
2-octanone: m/z: 58

### [2. Evaluation of Action of Improving Aroma of Externally Added Ethyl Octanoate and Ethyl Decanoate (1)]

### 2-1. Effect of Single Addition

An effect of improving (imparting) a "white wine-like fruity aroma" by adding either of ethyl octanoate and ethyl decanoate alone on a commercially available soy sauce was confirmed based on sensory evaluation.

Liquid seasonings 1-1 to 1-4 were prepared by adding ethyl octanoate to a commercially available unheated soy sauce ("Shiboritate Nama Shoyu (Extract up soy sauce)"; manufactured by Kikkoman Corporation) so that the final concentration becomes 5, 10, 20, and 50 ppb, respectively. Further, similarly, liquid seasonings 2-1 to 2-4 were prepared by adding ethyl decanoate to the unheated soy sauce so that the final concentration becomes 5, 10, 20, and 50 ppb, respectively.

Sensory evaluation was performed for the "white wine-like fruity aroma" by six panelists having a discrimination ability by evaluating the intensity at five levels when the commercially available unheated soy sauce (to which ethyl octanoate and ethyl decanoate are not added) was assigned a score of 1, and an average value thereof and a standard error were calculated.

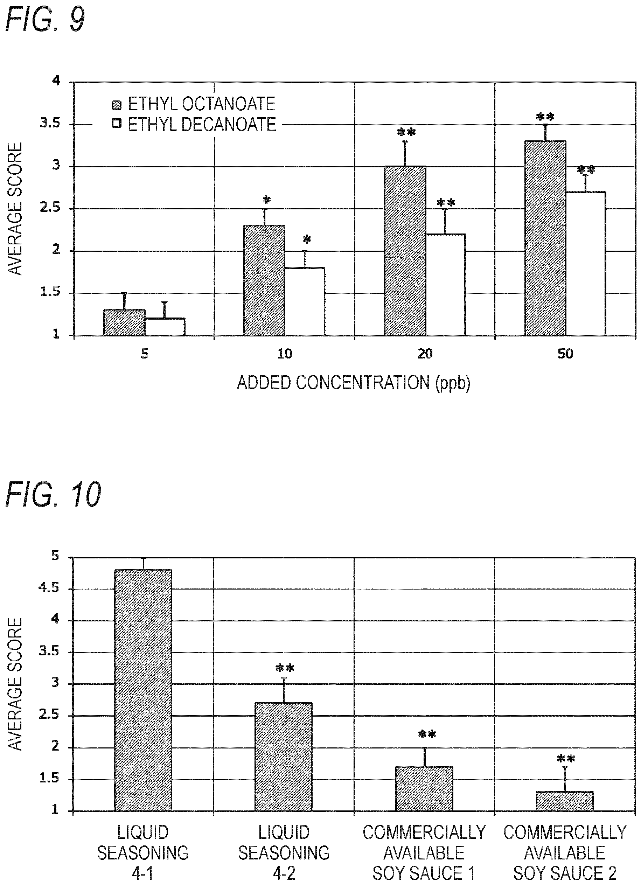

The results of the sensory evaluation of the liquid seasonings 1-1 to 1-4 and the liquid seasonings 2-1 to 2-4 are shown in Table 18 and FIG. 9. Note that "**" in FIG. 9 and Table 18 indicates that the difference was statistically significant (P < 0.01) as compared with the unheated soy sauce that is a control, and "*" indicates that the difference was statistically significant (P < 0.05) as compared with the unheated soy sauce that is a control.

**[Table 18]**

| | Average score ± standard error | |
|---|---|---|
| Added concentration | ethyl octanoate | ethyl decanoate |
| 5 ppb | 1.3±0.2 | 1.2±0.2 |
| 10 ppb | 2.3±0.2* | 1.8±0.2* |
| 20 ppb | 3.0±0.3** | 2.2±0.3** |
| 50 ppb | 3.3±0.2** | 2.7±0.2** |

As shown in Table 18 and FIG. 9, it was found that by adding either of ethyl octanoate and ethyl decanoate to the unheated soy sauce alone, the "white wine-like fruity aroma" is improved in a concentration-dependent manner.

### 2-2. Effect of Mixed Addition

An effect of improving (imparting) a "white wine-like fruity aroma" by adding ethyl octanoate and ethyl decanoate in admixture on a commercially available soy sauce was confirmed based on sensory evaluation.

Liquid seasonings 3-1 to 3-4 were prepared by adding ethyl octanoate and ethyl decanoate to a commercially available unheated soy sauce so that the final concentration of each component becomes 5, 10, and 20 ppb, respectively. Further, the sensory evaluation was performed with respect to the prepared liquid seasonings in the same manner as in the above 2-1.

The results of the sensory evaluation of the liquid seasonings 3-1 to 3-4 are shown in Table 19. Note that "**" in Table 19 indicates that the difference was statistically significant *(P* < 0.01) as compared with the unheated soy sauce that is a control.

**[Table 19]**

| | Average score ± standard error |
|---|---|
| Added concentration | ethyl octanoate and ethyl decanoate |
| 5 ppb | 2.3±0.3** |
| 10 ppb | 3.0±0.3** |
| 20 ppb | 3.8±0.2** |

As shown in Table 19, it was found that by adding ethyl octanoate and ethyl decanoate in admixture to the unheated soy sauce, the "white wine-like fruity aroma" is improved in a concentration-dependent manner.

### 2-3. Summary

As shown in Table 19 and FIG. 9, it was confirmed that when the amount is 10 ppb or more, by adding either of ethyl octanoate and ethyl decanoate alone, the "white wine-like fruity aroma" is improved as compared with the sample (unheated soy sauce) without addition thereof.

In addition, it was confirmed that by adding 5 ppb or more of ethyl octanoate and 5 ppb or more of ethyl decanoate in admixture, the "white wine-like fruity aroma" is remarkably improved as compared with the sample without addition thereof.

Therefore, it was revealed that by adding ethyl octanoate and/or ethyl decanoate to a soy sauce that does not originally contain these components, the "white wine-like fruity aroma" that the original soy sauce does not have can be imparted even if the concentration thereof is low at a ppb level.

### [3. Evaluation of Action of Improving Aroma of Liquid Seasoning Containing Ethyl Octanoate and Ethyl Decanoate]

### 3-1. Preparation of Liquid Seasoning

Into a mixture obtained by mixing steamed soybeans and crushed roasted wheat at a ratio of 6:4, a seed starter of *Aspergillus sojae* was inoculated, followed by *koji* making for 43 hours by an ordinary method, whereby a soy sauce *koji* was obtained.

100 parts by mass of the obtained soy sauce *koji* was put into 94 parts by mass of a saline solution (sodium chloride concentration: 24% (w/v)), and further a soy sauce lactic acid bacterium (*Tetragenococcus halophilus*) was added thereto, and the resultant was subjected to lactic acid fermentation at 15 to 25°C for 20 days while appropriately stirring according to an ordinary method. The soy sauce *moromi* after completion of the lactic acid fermentation was subjected to solid-liquid separation, and further the soup was treated with a UF membrane, whereby a permeated liquid (lactic acid fermented soup) was obtained.

To the lactic acid fermented soup, a salt-tolerant yeast (*Zygosaccharomyces rouxii*) was added, and yeast fermentation was performed at 25°C for 28 days without stirring. The obtained yeast fermented product was centrifuged at 3,000 rpm for 15 minutes, and a liquid seasoning 4-1 was collected as the supernatant. The obtained liquid seasoning 4-1 was treated with a disposable membrane filter (pore diameter: 0.45 µm) (manufactured by ADVANTEC Co., Ltd.), whereby a liquid seasoning 4-2 with reduced ethyl octanoate and ethyl decanoate was obtained.

Further, also with respect to a commercially available unheated soy sauce ("Shiboritate Nama Shoyu"; manufactured by Kikkoman Corporation) (hereinafter referred to as "commercially available soy sauce 1") and a commercially available *koikuchi* (dark-colored) soy sauce ("Kikkoman Koikuchi Shoyu"; manufactured by Kikkoman Corporation) (hereinafter referred to as "commercially available soy sauce 2"), ethyl octanoate and ethyl decanoate were measured, and sensory evaluation was performed.

### 3-2. Results of Measurement of Ethyl Octanoate and Ethyl Decanoate

With respect to the liquid seasonings 4-1 to 4-2 and the commercially available soy sauces 1 to 2, the contents of ethyl octanoate and ethyl decanoate were measured by a standard addition method using dynamic headspace GC-MS as described in the above 1-1. The results are shown in Table 20. Note that based on the results of GC-MS, with respect to the contents of the other soy sauce major aroma components, no change was observed among these samples.

**[Table 20]**

| Test sample | ethyl octanoate (ppb) | ethyl decanoate (ppb) |
|---|---|---|
| Liquid seasoning 4-1 | 18.7 | 40.3 |
| Liquid seasoning 4-2 | 5.6 | 3.2 |
| Commercially available soy sauce 1 | Not detected | Not detected |
| Commercially available soy sauce 2 | Not detected | Not detected |

### 3-3. Results of Sensory Evaluation

Sensory evaluation was performed by six panelists having a discrimination ability with respect to the liquid seasonings 4-1 to 4-2 and the commercially available soy sauces 1 to 2 for the "white wine-like fruity aroma" as the evaluation item at five levels (1: no aroma, 2: quite weak, 3: weak, 4: strong, 5: quite strong), and an average value thereof and a standard error were calculated.

The results of performing the sensory evaluation are shown in Table 21 and FIG. 10. Note that "**" in Table 21 and FIG. 10 indicates that the difference was statistically significant (*P* < 0.01) when using the liquid seasoning 4 as a control.

**[Table 21]**

| Test sample | Average score ± standard error |
|---|---|
| Liquid seasoning 4-1 | 4.8±0.2 |
| Liquid seasoning 4-2 | 2.7±0.4** |
| Commercially available soy sauce 1 | 1.7±0.3** |
| Commercially available soy sauce 2 | 1.3±0.4** |

### 3-4. Summary

As shown in Table 20, Table 21, and FIG. 10, it was confirmed that in the liquid seasoning 4-1 containing ethyl octanoate and ethyl decanoate each at 5 ppb or more, the intensity of the "white wine-like fruity aroma" is remarkably higher as compared with the liquid seasoning 4-2, the commercially available soy sauce 1, and the commercially available soy sauce 2.

### [4. Evaluation of Action of Improving Aroma of Externally Added Ethyl Octanoate and Ethyl Decanoate (2)]

### 4-1. Effect of Single Addition

An effect of improving (imparting) a "white wine-like fruity aroma" by adding either of ethyl octanoate and ethyl decanoate alone on the liquid seasoning 4-2 was confirmed based on sensory evaluation.

Liquid seasonings 5-1 to 5-4 were prepared by adding ethyl octanoate to the liquid seasoning 4-2 so that the final concentration becomes 5, 10, 20, and 50 ppb, respectively. Further, similarly, liquid seasonings 6-1 to 6-4 were prepared by adding ethyl decanoate to the liquid seasoning 4-2 so that the final concentration becomes 5, 10, 20, and 50 ppb, respectively. The sensory evaluation was performed in the same manner as in the above 2-1.

The results of the sensory evaluation of the liquid seasonings 5-1 to 5-4 and the liquid seasonings 6-1 to 6-4 are shown in Table 22 and FIG. 11. Note that "*" in Table 22 and FIG. 11 indicates that the difference was statistically significant (P < 0.05) as compared with the liquid seasoning 4-2 that is a control.

**[Table 22]**

| | Average score ± standard error | |
|---|---|---|
| Added concentration | ethyl octanoate | ethyl decanoate |
| 5 ppb | 1.3±0.2 | 1.3±0.2 |
| 10 ppb | 1.5±0.2* | 1.7±0.2* |
| 20 ppb | 2.3±0.2* | 2.2±0.2* |
| 50 ppb | 3.2±0.3* | 2.7±0.2* |

As shown in Table 22 and FIG. 11, it was found that in the same manner as the unheated soy sauce, by adding either of ethyl octanoate and ethyl decanoate to the liquid seasoning 4-2 alone, the "white wine-like fruity aroma" is improved in a concentration-dependent manner.

### 4-2. Effect of Mixed Addition

An effect of improving (imparting) a "white wine-like fruity aroma" by adding ethyl octanoate and ethyl decanoate in admixture on the liquid seasoning 4-2 was confirmed based on sensory evaluation.

Liquid seasonings 7-1 to 7-4 were prepared by adding ethyl octanoate and ethyl decanoate to the liquid seasoning 4-2 so that the final concentration of each component becomes 5, 10, and 20 ppb, respectively. Further, the sensory evaluation was performed with respect to the prepared liquid seasonings in the same manner as in the above 2-1.

The results of the sensory evaluation of the liquid seasonings 7-1 to 7-4 are shown in Table 23. Note that "*" in Table 6 indicates that the difference was statistically significant (*P* < 0.05) as compared with the liquid seasoning 4-2 that is a control.

**[Table 23]**

| | Average score ± standard error |
|---|---|
| Added concentration | ethyl octanoate and ethyl decanoate |
| 5 ppb | 2.0±0.3* |
| 10 ppb | 2.8±0.3 * |
| 20 ppb | 3.7±0.2* |

As shown in Table 23, it was found that by adding ethyl octanoate and ethyl decanoate in admixture to the liquid seasoning 4-2, the "white wine-like fruity aroma" is improved in a concentration-dependent manner.

### 4-3. Summary

As shown in Table 22, Table 23, and FIG. 11, it was confirmed that by adding either of ethyl octanoate and ethyl decanoate at any concentration of 10 ppb or more, the "white wine-like fruity aroma" is improved as compared with the sample (liquid seasoning 4-2) without addition thereof.

In addition, it was confirmed that by adding ethyl octanoate and ethyl decanoate each at 5 ppb or more in admixture, the "white wine-like fruity aroma" is remarkably improved as compared with the sample without addition thereof.

Therefore, it was revealed that by adding originally contained ethyl octanoate and/or ethyl decanoate to a liquid seasoning that does not contain these components, the "white wine-like fruity aroma" that the original liquid seasoning does not have can be imparted even if the concentration thereof is low at a ppb level.

### [5. Evaluation of Action of Improving Aroma of Externally Added Ethyl Octanoate and Ethyl Decanoate (3)]

### 5-1. Preparation of Liquid Seasonings 8-1 to 8-4 and Liquid Seasonings 9-1 to 9-4

Liquid seasonings 8-1 to 8-4 were prepared by adding ethyl octanoate to the liquid seasoning 4-1 described in the above 3-1 so that the final concentration becomes 10,000, 20,000, 50,000 and 100,000 ppb, respectively. Further, liquid seasonings 9-1 to 9-4 were prepared by adding ethyl decanoate to the liquid seasoning 4-1 so that the final concentration becomes 1,000, 2,000, 5,000 and 10,000 ppb, respectively.

### 5-2. Sensory Evaluation Method

Sensory evaluation was performed by six panelists having a discrimination ability with respect to the liquid seasonings 8-1 to 8-4 and the liquid seasonings 9-1 to 9-4 for a "white wine-like fruity aroma", a "petroleum-like unpleasant odor", and a "favorable aroma as a whole" as the evaluation items at five levels, and an average value thereof and a standard error were calculated. Note that the "petroleum-like unpleasant odor", and the "favorable aroma as a whole" were evaluated at the following five levels.
"Petroleum-like unpleasant odor"
1: no aroma, 2: quite weak, 3: weak, 4: strong, 5: quite strong
"Favorable aroma as a whole"
1: very unfavorable, 2: unfavorable, 3: moderate, 4: favorable, 5: very favorable

### 5-3. Results of Sensory Evaluation

The results of the sensory evaluation of the liquid seasonings 8-1 to 8-4 are shown in Table 24, and the results of the sensory evaluation of the liquid seasonings 9-1 to 9-4 are shown in Table 25. Note that "**" and "*" indicate that the difference was statistically significant with a P value of 1% and 5%, respectively, as compared with the liquid seasoning in which the added concentration is the lowest in Tables 24 and 25 (the liquid seasoning 8-1 and the liquid seasoning 9-1).

**[Table 24]**

| | Average score ± standard error | | |
|---|---|---|---|
| Added concentration | fruity aroma | unpleasant odor | favorability |
| 10,000 ppb | 4.5±0.3 | 1.5±0.3 | 4.3±0.4 |
| 20,000 ppb | 3.2±0.5* | 3.3±0. 2** | 2.8±0.4* |
| 50,000 ppb | 1.7±0.2** | 4.8±0. 2** | 1.2±0.2** |
| 100,000 ppb | 1.2±0.2** | 5.0±0.0** | 1.0±0.0** |

**[Table 25]**

| | Average score ± standard error | | |
|---|---|---|---|
| Added concentration | fruity aroma | unpleasant odor | favorability |
| 1,000 ppb | 4.3±0.4 | 1.0±0.0 | 4.5±0.3 |
| 2,000 ppb | 4.2±0.4 | 1.8±0. 3* | 4.2±0.4 |
| 5,000 ppb | 2.3±0.4** | 3.7±0. 2** | 2.2±0.4** |
| 10,000 ppb | 1.5±0.2** | 4.5±0.2** | 1.2±0.2** |

As shown in Table 24, it was found that in the liquid seasoning containing ethyl octanoate at 20,000 ppb or more, the intensity of the "white wine-like fruity aroma" becomes low and the intensity of the "petroleum-like unpleasant odor" becomes high in a concentration-dependent manner as compared with the liquid seasoning containing ethyl octanoate at 10,000 ppb. In addition, it was confirmed that in the liquid seasoning containing ethyl octanoate at 50,000 ppb or more, the "white wine-like fruity aroma" almost disappears, and the "petroleum-like unpleasant odor" becomes very strong. Further, it was found that in the liquid seasoning containing ethyl octanoate at 20,000 ppb or more, the aroma is not favorable.

From the above results, it was revealed that the content of ethyl octanoate in the liquid seasoning is desirably 20,000 ppb or less, and moreover, when the content thereof is 10,000 ppb or less, the liquid seasoning does not have an unpleasant odor, and has a very favorable fruity aroma.

As shown in Table 25, it was found that in the liquid seasoning containing ethyl decanoate at 5,000 ppb, the intensity of the "white wine-like fruity aroma" becomes low and the intensity of the "petroleum-like unpleasant odor" becomes high in a concentration-dependent manner as compared with the liquid seasoning containing ethyl decanoate at 1,000 ppb. In addition, it was confirmed that in the liquid seasoning containing ethyl decanoate at 10,000 ppb, the "white wine-like fruity aroma" almost disappears, and the "petroleum-like unpleasant odor" becomes very strong. Further, it was found that in the liquid seasoning containing ethyl decanoate at 5,000 ppb or more, the aroma is not favorable.

From the above results, it was revealed that when the content of ethyl decanoate in the liquid seasoning is 2,000 ppb or less, the liquid seasoning does not have an unpleasant odor, and has a very favorable fruity aroma.

### [6. Evaluation of Masking Effect of Fruity Aroma of 2-Ethyl-6-Methylpyrazine]

### 6-1. Results of Measurement of 2-Ethyl-6-Methylpyrazine

With respect to the liquid seasonings 4-1 to 4-2 and the commercially available soy sauces 1 to 2 described in the above 3-1, an ethyl acetate extract solution was analyzed for the content of 2-ethyl-6-methylpyrazine using GC-MS by a standard addition method according to the method as described in the above 1-2. The results are shown in Table 26.

**[Table 26]**

| Test sample | 2-ethyl-6-methylpyrazine (ppb) |
|---|---|
| Liquid seasoning 4-1 | 1.9 |
| Liquid seasoning 4-2 | 1.9 |
| Commercially available soy sauce 1 | 8.9 |
| Commercially available soy sauce 2 | 23.7 |

### 6-2. Results of Sensory Evaluation

An effect of suppressing the white wine-like fruity aroma by adding 2-ethyl-6-methylpyrazine was confirmed based on sensory evaluation.

Liquid seasonings 8-1 to 8-4 were prepared by adding 2-ethyl-6-methylpyrazine to the liquid seasoning 4-1 so that the final concentration becomes 5, 10, 20, and 50 ppb, respectively. Sensory evaluation was performed by six panelists having a discrimination ability for the "white wine-like fruity aroma" as the evaluation item at five levels when the liquid seasoning 4-2 having a low ethyl ester content was assigned a score of 1, and an average value thereof and a standard error were calculated.

The results of performing the sensory evaluation are shown in Table 27 and FIG. 12. Note that "**" in Table 27 and FIG. 12 indicates that the difference was statistically significant (*P* < 0.01) when using the liquid seasoning 4-2 as a control.

**[Table 27]**

| Added concentration | Average score ± standard error |
|---|---|
| Liquid seasoning 4-1 | 4.0±0.3 |
| 5 ppb | 3.5±0.4 |
| 10 ppb | 2.2±0.3** |
| 20 ppb | 1.3±0.2** |
| 50 ppb | 1.0±0.0** |

### 6-3. Summary

As shown in Table 26 to Table 27, it was confirmed that in the liquid seasoning 4-1 containing ethyl octanoate and ethyl decanoate at 18.7 ppb and 40.3 ppb, respectively, by adding 2-ethyl-6-methylpyrazine at 10 ppb or more, the "white wine-like fruity aroma" is decreased.

### [7. Content of HEMF]

With respect to the liquid seasoning 4-1 and the commercially available soy sauces 1 to 2 described in the above 3-1, an ethyl acetate extract solution was analyzed for the content of HEMF using GC-MS by a standard addition method according to the method as described in the above 1-2. The results are shown in Table 28.

**[Table 28]**

| Test sample | HEMF (ppm) |
|---|---|
| Liquid seasoning 4-1 | 57.1 |
| Commercially available soy sauce 1 | 37.1 |
| Commercially available soy sauce 2 | 30.0 |

As shown in Table 28, it was found that the liquid seasoning 4-1 contains HEMF in an amount equal to or more than the commercially available soy sauce, and therefore is a liquid seasoning having a soy sauce-like flavor inherent in a soy sauce while having a white wine-like fruity aroma.

### [8. Evaluation of Total Amount of Ethyl Octanoate and Ethyl Decanoate]

Liquid seasonings 10-1 to 10-7 were prepared by adding ethyl octanoate and ethyl decanoate to the liquid seasoning 4-1 so that the final concentrations thereof become the values shown in Table 29.

Sensory evaluation was performed by six panelists having a discrimination ability with respect to the liquid seasonings 10-1 to 10-7 for a "white wine-like fruity aroma", a "petroleum-like unpleasant odor", and a "favorability" as the evaluation items at five levels (1: no aroma (very unfavorable), 2: quite weak (unfavorable), 3: weak (moderate), 4: strong (favorable), 5: quite strong (very favorable)), and an average value thereof was calculated.

**[Table 29]**

| Liquid seasoning No. | ethyl octanoate (ppb) | ethyl decanoate (ppb) |
|---|---|---|
| Liquid seasoning 10-1 | 5,000 | 1,000 |
| Liquid seasoning 10-2 | 5,000 | 2,000 |
| Liquid seasoning 10-3 | 10,000 | 1,000 |
| Liquid seasoning 10-4 | 10,000 | 2,000 |
| Liquid seasoning 10-5 | 10,000 | 5,000 |
| Liquid seasoning 10-6 | 20,000 | 1,000 |
| Liquid seasoning 10-7 | 20,000 | 2,000 |

The results of the sensory evaluation of the liquid seasonings 10-1 to 10-7 are shown in Table 30. Note that "**" in the table indicates that the difference was statistically significant (*P* < 0.01) and "*" indicates that the difference was statistically significant (*P* < 0.05) as compared with the liquid seasoning (10-1) in which the added concentration is the lowest.

**[Table 30]**

| Liquid seasoning No. | Average score ± standard error | | |
|---|---|---|---|
| | fruity aroma | unpleasant odor | preferability |
| Liquid seasoning 10-1 | 5.0±0.0 | 1.0±0.0 | 4.7±0.2 |
| Liquid seasoning 10-2 | 4.5±0.3 | 1.3±0. 2 | 4.2±0.5 |
| Liquid seasoning 10-3 | 4.0±0.4 | 1.7±0. 2 | 3.8±0.4 |
| Liquid seasoning 10-4 | 3.7±0.3 | 2.0±0.4 | 3.7±0.3 |
| Liquid seasoning 10-5 | 3.2±0.5* | 3.0±0.4** | 2.7±0.3** |
| Liquid seasoning 10-6 | 2.0±0.4** | 4.3±0.3** | 1.5±0.2** |
| Liquid seasoning 10-7 | 1.7±0.5 ** | 5.0±0.0** | 1.2±0.3** |

As shown in Table 30, the liquid seasonings 10-2 to 10-4 were equivalent to the liquid seasoning 10-1 in terms of all the fruity aroma, the unpleasant odor, and the preferability. Therefore, the liquid seasonings in which the content of ethyl octanoate is 10,000 ppb or less and the content of ethyl decanoate is 2,000 ppb or less were excellent in terms of all the fruity aroma, the unpleasant odor, and the preferability.

### Example 5

### [1. Various Methods]

### 1-1. Measurement Method for Total Nitrogen Content

A nitrogen content in a liquid seasoning was measured as a total nitrogen content by a combustion method using "Dumatherm" (manufactured by Gerhardt Japan Co., Ltd.) as a total nitrogen measuring device using a combustion method described in the document "Japanese Agricultural Standards for Soy Sauce" (Ministry of Agriculture, Forestry and Fisheries Notification).

### [2. Method for Manufacturing Liquid Seasoning Having High HEMF Content and Evaluation]

### 2-1. Method for Manufacturing Liquid Seasoning

Into a mixture obtained by mixing steamed soybeans and crushed roasted wheat at a ratio of 6:4, a seed starter of *Aspergillus sojae* was inoculated, followed by *koji* making for 43 hours by an ordinary method, whereby a soy sauce *koji* was obtained.

100 parts by mass of the obtained soy sauce *koji* was put into 94 parts by mass of a saline solution (sodium chloride concentration: 24% (w/v)), and further a soy sauce lactic acid bacterium (*Tetragenococcus halophilus*) was added thereto, and the resultant was treated at 15 to 25°C for 20 days while appropriately stirring according to an ordinary method, whereby a soy sauce *moromi* was manufactured. The obtained soy sauce *moromi* (first soy sauce *moromi)* was subjected to solid-liquid separation by pressing, and the obtained pressed liquid was further subjected to a filtration treatment using diatomaceous earth twice, and thereafter subjected to a heating treatment of heating to 80°C, whereby a first soy sauce *moromi* soup was obtained.

100 parts by mass of the thus obtained soy sauce *koji* was put into 166 parts by mass of a sodium chloride-added soy sauce *moromi* soup (sodium chloride concentration: 19% (w/v)) prepared by adding dietary sodium chloride to the first soy sauce *moromi* soup, and the resultant was treated at 15 to 25°C for 20 days while appropriately stirring according to an ordinary method, whereby a soy sauce *moromi* was manufactured. The obtained soy sauce *moromi* (second soy sauce *moromi*) was subjected to solid-liquid separation by pressing, and the obtained pressed liquid was further subjected to a filtration treatment using diatomaceous earth twice, whereby a second soy sauce *moromi* soup was obtained.

To the obtained second soy sauce *moromi* soup, a salt-tolerant yeast (*Zygosaccharomyces rouxii*) was added at 1.0 × 10⁶ bacteria/mL, and yeast fermentation was performed at 20°C for 14 days without stirring. The obtained yeast fermented product was centrifuged at 3,000 rpm for 15 minutes, and a liquid seasoning 1 was collected as the supernatant.

Further, a liquid seasoning 2 was obtained in the same manner as the liquid seasoning 1 except that yeast fermentation was performed using the first soy sauce *moromi* soup.

### 2-2. Results of Various Measurements

With respect to the liquid seasoning 1, the liquid seasoning 2, "Shiboritate Nama Shoyu" (manufactured by Kikkoman Corporation) that is a commercially available unheated soy sauce, and "Nidan-Jukusei Nama Shoyu (two-stage aged soy sauce)" (manufactured by Kikkoman Corporation) that is a commercially available rebrewed soy sauce, the contents of HEMF, ethyl octanoate, ethyl decanoate, a reducing sugar, and the total nitrogen content were measured, and further, evaluation was performed by perceiving the aroma of each test subject only by the nose without eating and drinking. The results are shown in Table 31.

**[Table 31]**

| Liquid seasoning No. | total nitrogen content (wt%) | HEMF (ppm) | ethyl octanoate (ppb) | ethyl decanoate, (ppb) | reducing sugar (wt%) | Sensory evaluation |
|---|---|---|---|---|---|---|
| Liquid seasoning 1 | 2.0 | 92 | 42.6 | 27.6 | 9.0 | fruity and profound sweet aroma |
| Liquid seasoning 2 | 1.7 | 57 | 17.6 | 35.0 | 6.0 | fruity aroma |
| Commercially available unheated soy sauce | 1.8 | 40 | n.d. | n.d. | 3.0 | soy sauce aroma |
| Commercially available rebrewed soy sauce | 2.2 | 45 | n.d. | n.d. | 3.7 | profound soy sauce aroma |

As shown in Table 31, the liquid seasoning 1 has a high total nitrogen content and a high reducing sugar content, and therefore had smooth *koku* attribute while having *umami,* and further had a fruity and profound sweet aroma due to ethyl octanoate, ethyl decanoate, and a high concentration of HEMF.

### [3. Evaluation of Total Nitrogen Content and Content of Reducing Sugar in Soy Sauce Moromi Soup]

### 3-1. Method for Manufacturing Liquid Seasoning

By using only defatted soybeans denatured by heating through a puffing treatment, a soy sauce *koji* with less microbial contamination was manufactured by a loose *koji* (a general soy sauce *koji* that is used when manufacturing a *tamari* (rich) soy sauce using a soybean raw material in a large amount, and is not a *koji* obtained by processing the soybean raw material into a form similar to a *miso dama* (*miso* ball)).

100 parts by mass of the obtained soy sauce *koji* was put into 94 parts by mass of a saline solution (sodium chloride concentration: 24% (w/v)), and the resultant was controlled in an aseptic airtight container so as to suppress the growth of a film yeast, whereby a soy sauce *moromi* was obtained. The thus obtained soy sauce *moromi* in which the content of each of isobutyric acid and isovaleric acid was suppressed to 20 ppm or less was subjected to solid-liquid separation by pressing, and the obtained pressed liquid was further subjected to a filtration treatment using diatomaceous earth twice, whereby a soy sauce *moromi* soup was obtained.

By diluting the obtained soy sauce *moromi* soup (total nitrogen content: 2.6 wt%) with water, diluted soy sauce *moromi* soups having a total nitrogen content (TN) of 2.0 wt% and 1.8 wt%, respectively, were obtained. Further, by adding glucose + xylose (1:1) as a sugar source to each of the soy sauce *moromi* soup and the diluted soy sauce *moromi* soups so that the content of a reducing sugar (RS) becomes 2.0 wt%, 5.0 wt%, and 8.0 wt%, TN·RS adjusted soy sauce *moromi* soups were obtained.

Further, by using table sugar, rice flour, and a sweet sake as the sugar source in place of glucose + xylose (1:1), TN·RS adjusted soy sauce *moromi* soups having a total nitrogen content of 2.0 wt% and a reducing sugar content of 5.0 wt% were obtained.

To each of the obtained TN·RS adjusted soy sauce *moromi* soups, a salt-tolerant yeast (*Zygosaccharomyces rouxii*) was added at 1.0 × 10⁶ bacteria/mL, and yeast fermentation was performed at 20°C for 14 days without stirring. The obtained yeast fermented product was centrifuged at 3,000 rpm for 15 minutes, and liquid seasonings 3 to 14 were obtained as the supernatants.

### 3-2. Results of Various Measurements

With respect to the liquid seasonings 3 to 15, the contents of HEMF, ethyl octanoate, and ethyl decanoate were measured. The results are shown in Table 32.

**[Table 32]**

| Liquid seasoning No. | soy sauce moromi soup | | | Liquid seasoning | | | |
|---|---|---|---|---|---|---|---|
| | sugar source | total nitrogen content (wt%) | reducing sugar (wt%) | HEMF (ppm) | reducing sugar (wt%) | ethyl octanoate (ppb) | ethyl decanoate, (ppb) |
| Liquid seasoning 3 | Glu+Xy1 (1:1) | 2.4 | 8.0 | 92 | 4.2 | 26.5 | 19.7 |
| Liquid seasoning 4 | Glu+Xy1 (1:1) | 2.4 | 5.0 | 71 | 1.2 | 24.5 | 15.9 |
| Liquid seasoning 5 | Glu+Xy1 (1:1) | 2.4 | 2.0 | 16 | 1.1 | 6.7 | 4.3 |
| Liquid seasoning 6 | Glu+Xy1 (1:1) | 2.0 | 8.0 | 83 | 3.2 | 34.6 | 17.5 |
| Liquid seasoning 7 | Glu+Xy1 (1:1) | 2.0 | 5.0 | 60 | 2.2 | 17.6 | 28.4 |
| Liquid seasoning 8 | Glu+Xy1 (1:1) | 2.0 | 2.0 | 11 | 0.9 | 7.8 | 3.9 |
| Liquid seasoning 9 | Glu+Xy1 (1:1) | 1.8 | 8.0 | 38 | 4.9 | 22.6 | 12.7 |
| Liquid seasoning 10 | Glu+Xy1 (1:1) | 1.8 | 5.0 | 19 | 1.7 | 23.1 | 22.4 |
| Liquid seasoning 11 | Glu+Xy1 (1:1) | 1.8 | 2.0 | 5 | 0.6 | 9.1 | 2.1 |
| Liquid seasoning 12 | table sugar | 2.0 | 5.0 | 72 | 1.9 | 22.8 | 11.3 |
| Liquid seasoning 13 | rice flour | 2.0 | 5.0 | 65 | 2.2 | 19.2 | 4.2 |
| Liquid seasoning 14 | glucose | 2.0 | 5.0 | 66 | 0.7 | 34.6 | 7.6 |
| Liquid seasoning 15 | No addition | 2.0 | 1.1 | 0 | 1.1 | n.d. | n.d. |

As shown in Table 32, it was found, from the content of HEMF in the liquid seasonings 3 to 15, that by using a soy sauce *moromi* soup having a total nitrogen content of 2.0 wt% or more and a reducing sugar content of 5.0 wt% or more, a liquid seasoning having a fruity and profound sweet aroma due to ethyl octanoate, ethyl decanoate, and a high concentration of HEMF is obtained.

Further, based on the content of HEMF in the liquid seasoning 7 and the liquid seasonings 12 to 14, there was no remarkable variation in the content of HEMF regardless of the sugar source to be added to the soy sauce *moromi* soup.

### [4. Evaluation of Rebrewed Soy Sauce Moromi Obtained by Yeast Fermentation in Soy Sauce Moromi]

### 4-1. Method for Manufacturing Liquid Seasoning

Into a mixture obtained by mixing steamed soybeans and crushed roasted wheat at a ratio of 6:4, a seed starter of *Aspergillus sojae* was inoculated, followed by *koji* making for 43 hours by an ordinary method, whereby a soy sauce *koji* was obtained.

100 parts by mass of the obtained soy sauce *koji* was put into 94 parts by mass of a saline solution (sodium chloride concentration: 24% (w/v)), and further a soy sauce lactic acid bacterium (*Tetragenococcus halophilus*) was added thereto, and the resultant was treated at 15 to 25°C for 20 days while appropriately stirring according to an ordinary method, whereby a soy sauce *moromi* was manufactured. The obtained soy sauce *moromi* (first soy sauce *moromi*) was subjected to solid-liquid separation by pressing, whereby a pressed liquid was obtained.

100 parts by mass of the thus obtained soy sauce *koji* was put into 166 parts by mass of a sodium chloride-added pressed liquid (sodium chloride concentration: 19% (w/v)) prepared by adding dietary sodium chloride to the pressed liquid, and the resultant was treated at 15 to 30°C for 2 months while appropriately stirring according to an ordinary method, whereby a rebrewed *moromi* in which an alcohol concentration reached 3% was manufactured. The obtained rebrewed *moromi* was subjected to solid-liquid separation by pressing, and the obtained pressed liquid was further subjected to a filtration treatment using diatomaceous earth twice, whereby a rebrewed *moromi* soup was obtained.

To the obtained rebrewed *moromi* soup, a salt-tolerant yeast (*Zygosaccharomyces rouxii*) was added at 1.0 × 10⁶ bacteria/mL, and yeast fermentation was performed at 20°C for 14 days without stirring. The obtained yeast fermented product was centrifuged at 3,000 rpm for 15 minutes, and a liquid seasoning 16 was collected as the supernatant.

### 4-2. Results of Various Measurements

With respect to the liquid seasoning 16, the contents of HEMF, ethyl octanoate, ethyl decanoate, a reducing sugar, and the total nitrogen content were measured. The results are shown in Table 33.

**[Table 33]**

| Liquid seasoning No. | total nitrogen content (wt%) | HEMF (ppm) | ethyl octanoate (ppb) | ethyl decanoate, (ppb) | reducing sugar (wt%) |
|---|---|---|---|---|---|
| Liquid seasoning 16 | 2.4 | 66 | 4.5 | 2.3 | 6.0 |

As shown in Table 33, the liquid seasoning 16 had low HEMF, ethyl octanoate, and ethyl decanoate contents. This is considered to be because when an unpasteurized pressed liquid is used as brewing water, yeast fermentation occurs, and as a result, ethyl decanoate is transferred to an oil component in the soy sauce *moromi,* and moreover, in the pressed liquid, an alcohol is contained in a remarkable amount, and therefore, the growth of the yeast is inhibited and ethyl decanoate is not produced. HEMF is considered to be produced by yeast fermentation in the *moromi.*

### [5. Evaluation of Liquid Seasoning Manufactured Using Rebrewed Soy Sauce as Soy Sauce Moromi Soup]

### 5-1. Method for Manufacturing Liquid Seasoning

"Nidan-Jukusei Nama Shoyu" (manufactured by Kikkoman Corporation) that is a commercially available rebrewed soy sauce was subjected to a filtration treatment using diatomaceous earth twice, whereby a rebrewed soy sauce soup was obtained.

To the obtained rebrewed soy sauce soup, a salt-tolerant yeast (*Zygosaccharomyces rouxii*) was added at 1.0 × 10⁶ bacteria/mL, and yeast fermentation was performed at 20°C for 14 days without stirring. The obtained yeast fermented product was centrifuged at 3,000 rpm for 15 minutes, and a liquid seasoning 17 was collected as the supernatant.

### 5-2. Results of Various Measurements

With respect to the liquid seasoning 17, the contents of HEMF, ethyl octanoate, ethyl decanoate, a reducing sugar, and the total nitrogen content were measured. The results are shown in Table 34.

**[Table 34]**

| Liquid seasoning No. | total nitrogen content (wt%) | HEMF (ppm) | ethyl octanoate (ppb) | ethyl decanoate, (ppb) | reducing sugar (wt%) |
|---|---|---|---|---|---|
| Liquid seasoning 17 | 2.2 | 48 | n.d. | n.d. | 3.5 |

As shown in Table 34, the liquid seasoning 17 had low HEMF, ethyl octanoate, and ethyl decanoate contents. This is considered to be because in the rebrewed soy sauce, an alcohol is contained at 3.0% or more, and therefore, the growth of the yeast is inhibited, and ethyl octanoate and ethyl decanoate are not produced. The amount of HEMF was not increased to the amount carried by the rebrewed soy sauce or more.

### INDUSTRIAL APPLICABILITY

The raw liquid for a seasoning and the manufacturing method therefor of one aspect of the present invention, the wood piece and the manufacturing method therefor of one aspect not part of the present invention, and the kit and the manufacturing method therefor of one aspect not part the present invention enable yeast fermentation to be simply performed for obtaining a seasoning with a mellow aroma and high palatability, and therefore can be utilized for easily obtaining the seasoning not only by a manufacturer of the seasoning but also at home.

The soy sauce and the soy sauce-like seasoning of one aspect of the present invention can be expected to be utilized for imparting a white wine-like fruity aroma in addition to a flavor inherent in a soy sauce by being used in various seasonings or foods and drinks.

The rich soy sauce and the rich soy sauce-like seasoning of one aspect of the present invention can be expected to be utilized for imparting especially excellent *umami* and flavor inherent in a soy sauce, and further a white wine-like fruity aroma by being used in various seasonings or foods and drinks.

### REFERENCE SIGNS LIST

1 kit
11 first seasoning raw liquid-containing container
12 second seasoning raw liquid-containing container
21 wood piece
31 seed soy sauce
41 first container for yeast fermentation
42 second container for yeast fermentation
51 first cap
52 second cap
61 first container base
62 second container base
71 personal digital assistant with light source

## Claims

1. A raw liquid for a seasoning, having a reducing sugar content of 4.5 wt% or more and an ethanol content of 1.5 wt% or less,
- wherein the raw liquid for a seasoning is a soy sauce *moromi* soup in which the insoluble solid content has been removed in advance.

2. The raw liquid for a seasoning according to claim 1, wherein the raw liquid for a seasoning has a linoleic acid content of 0.03 wt% or less.

3. The raw liquid for a seasoning according to any one of claims 1 to 2, wherein the seasoning is a soy sauce or a soy sauce-like seasoning.

4. A method for manufacturing a seasoning, comprising a step of obtaining a seasoning by subjecting the raw liquid for a seasoning according to any one of claims 1 to 3 to yeast fermentation.

5. A soy sauce or a soy sauce-like seasoning, wherein a content of ethyl octanoate and/or ethyl decanoate is any of the following (1) to (3):
(1) a content of ethyl octanoate is 10 ppb to 20,000 ppb;
(2) a content of ethyl decanoate is 10 ppb to 5,000 ppb; and
(3) a content of ethyl octanoate is 5 ppb to 10,000 ppb, and a content of ethyl decanoate is 5 ppb to 2,000 ppb,
wherein the soy sauce, or the sauce-like seasoning has a homofuraneol content of 20 ppm or more.

6. The soy sauce or the soy sauce-like seasoning according to claim 5, wherein the soy sauce or the soy sauce-like seasoning has a 2-ethyl-6-methylpyrazine content less than 10 ppb.

7. A seasoning obtained by heating the soy sauce or the soy sauce-like seasoning according to any one of claims 5 to 6,
- wherein the soy sauce or the sauce-like seasoning has been obtained by yeast fermentation of a soy sauce *moromi* soup in which the insoluble content has been removed in advance.

## Patentansprüche

1. Eine Rohflüssigkeit für ein Würzmittel mit einem Gehalt an reduzierendem Zucker von 4,5 Gew.-% oder mehr und einem Ethanolgehalt von 1,5 Gew.-% oder weniger,
- wobei es sich bei der Rohflüssigkeit für ein Würzmittel um eine *Sojasaucen-Moromi-*Suppe handelt, bei der der unlösliche Feststoffanteil vorab entfernt wurde.

2. Die Rohflüssigkeit für ein Würzmittel nach Anspruch 1, wobei die Rohflüssigkeit für ein Würzmittel einen Linolsäuregehalt von 0,03 Gew.-% oder weniger aufweist.

3. Die Rohflüssigkeit für ein Würzmittel nach einem der Ansprüche 1 bis 2, wobei das Würzmittel eine Sojasauce oder ein sojasaucenähnliches Würzmittel ist.

4. Ein Verfahren zur Herstellung eines Würzmittels, umfassend einen Schritt zur Gewinnung eines Würzmittels, indem die Rohflüssigkeit für ein Würzmittel nach einem der Ansprüche 1 bis 3 einer Hefegärung unterzogen wird.

5. Eine Sojasauce oder ein sojasaucenähnliches Würzmittel, wobei der Gehalt an Ethyloctanoat und/oder Ethyldecanoat einer der folgenden (1) bis (3) ist:
(1) der Gehalt an Ethyloctanoat beträgt 10 ppb bis 20.000 ppb;
(2) der Gehalt an Ethyldecanoat beträgt 10 ppb bis 5.000 ppb; und
(3) der Gehalt an Ethyloctanoat beträgt 5 ppb bis 10.000 ppb und der Gehalt an Ethyldecanoat beträgt 5 ppb bis 2.000 ppb,
wobei die Sojasauce oder das saucenartige Würzmittel einen Homofuranolgehalt von 20 ppm oder mehr aufweist.

6. Die Sojasauce oder das sojasaucenähnliche Würzmittel nach Anspruch 5, wobei die Sojasauce oder das sojasaucenähnliche Würzmittel einen Gehalt an 2-Ethyl-6-methylpyrazin von weniger als 10 ppb aufweist.

7. Ein Würzmittel, erhalten durch Erhitzen der Sojasauce oder des sojasaucenähnlichen Würzmittels nach einem der Ansprüche 5 bis 6,
- wobei die Sojasauce oder das soßenähnliche Würzmittel durch Hefegärung einer Sojasaucen-*Moromi-*Suppe gewonnen wurde, bei der der unlösliche Anteil vorab entfernt wurde.

## Revendications

1. Liquide brut pour un assaisonnement, ayant une teneur en sucre réduite de 4,5 % en poids ou plus et une teneur en éthanol de 1,5 % en poids ou moins,
- dans lequel le liquide brut pour un assaisonnement est une soupe moromi de sauce soja dans laquelle la teneur en solides insolubles a été éliminée à l'avance.

2. Liquide brut pour un assaisonnement selon la revendication 1, dans lequel le liquide brut pour un assaisonnement a une teneur en acide linoléique de 0,03 % en poids ou moins.

3. Liquide brut pour un assaisonnement selon l'une quelconque des revendications 1 à 2, dans lequel l'assaisonnement est une sauce soja ou un assaisonnement de type sauce soja.

4. Procédé de fabrication d'un assaisonnement, comprenant une étape d'obtention d'un assaisonnement en soumettant le liquide brut pour un assaisonnement selon l'une quelconque des revendications 1 à 3 à une fermentation à la levure.

5. Sauce soja ou assaisonnement de type sauce soja, dans laquelle/lequel une teneur en octanoate d'éthyle et/ou décanoate d'éthyle est l'un quelconque des points (1) à (3) suivants :
(1) une teneur en octanoate d'éthyle est de 10 ppb à 20 000 ppb ;
(2) une teneur en décanoate d'éthyle est de 10 ppb à 5000 ppb ; et
(3) une teneur en octanoate d'éthyle est de 5 ppb à 10 000 ppb, et une teneur en décanoate d'éthyle est de 5 ppb à 2000 ppb,
dans laquelle/lequel la sauce soja, ou l'assaisonnement de type sauce, a une teneur en homofuranéol de 20 ppm ou plus.

6. Sauce soja ou assaisonnement de type sauce soja selon la revendication 5, dans laquelle/lequel la sauce soja ou l'assaisonnement de type sauce soja a une teneur en 2-éthyl-6-méthylpyrazine inférieure à 10 ppb.

7. Assaisonnement obtenu en chauffant la sauce soja ou l'assaisonnement de type sauce soja selon l'une quelconque des revendications 5 à 6,
- dans lequel la sauce soja ou l'assaisonnement de type sauce soja a été obtenu(e) par fermentation à la levure d'une soupe moromi de sauce soja dans laquelle la teneur insoluble a été éliminée à l'avance.
